(19) **Europäisches Patentamt / European Patent Office / Office européen des brevets**

(11) **EP 1 832 751 A1**

(12) **EUROPEAN PATENT APPLICATION**
published in accordance with Art. 158(3) EPC

(43) Date of publication:
**12.09.2007 Bulletin 2007/37**

(21) Application number: **05819747.6**

(22) Date of filing: **16.12.2005**

(51) Int Cl.:
**F04C 2/30** (2006.01)

(86) International application number:
**PCT/CN2005/002225**

(87) International publication number:
**WO 2006/069520 (06.07.2006 Gazette 2006/27)**

(84) Designated Contracting States:
**AT BE BG CH CY CZ DE DK EE ES FI FR GB GR HU IE IS IT LI LT LU LV MC NL PL PT RO SE SI SK TR**

(30) Priority: **28.12.2004 CN 200410102740**

(71) Applicant: **Jiang, Zigang**
**Beijing 102218 (CN)**

(72) Inventor: **Jiang, Zigang**
**Beijing 102218 (CN)**

(74) Representative: **Tarabbia, Luigi**
**Bugnion S.p.A**
**Viale Lancetti, 17**
**I-20158 Milano (IT)**

(54) **KNEADING AND DISPLACING METHOD AND MECHANISM FOR FLUID MACHINERY AND THE USE**

(57)     The present invention relates to a kneading and displacing method and mechanism for fluid machinery and the use. The invention is suitable for application in internal combustion engine, pump, compressor, motor, driving, cooling, metering and other fields. During kneading and displacing process, the kneading wheel revolves and rotates in opposite directions inside the kneading cavity to synthesize the kneading and displacing motion, which has greatly lowered speed, moment of momentum and loss rate compared with rotor motion and needs no lubrication. The fluid machinery operating on the kneading and displacing method and mechanism may be used for both gas and liquid and has wide use.

Figure 3

EP 1 832 751 A1

**Description**

1. Definitions

Roudong: The motion that a rigid body rotates around an axis is called revolution. At the same time, it rotates around a parallel axis that is closer to its center of mass in a reverse direction, which is called rotation. When the absolute values of the revolution velocity and the rotation velocity are the same or approximate, they are combined into a translation or an approximate translation which is called roudong. Pure roudong is generated when the absolute values of instantaneous angular velocities of rotation and revolution are always equal. Each particle of the rigid body moves circularly synchronously.

Roudong axis, roudong center: The axis of revolution motion is called roudong axis, and the projection that roudong axis projects on its vertical plane is called roudong center.

Roudong diameter, roudong radius: The diameter and radius of rotation axis of the revolution locus are called roudong diameter and roudong radius respectively. The diameter of a circular track that every particle of the rigid body moves along is equal to roudong diameter. The linear velocity is equal to the product of the roudong radius and the angular velocity of revolution. The linear velocity is very low when the roudong radius is very small, so the moment of momentum and the kinetic energy are reduced considerably and distributed uniformly. As a result, the motion loss is reduced by orders of magnitude.

Roudong rotor: It is a lightened cylindrical component making roudong motion and is mounted on an eccentric part of a crankshaft by bearings. It revolves along with the rotation of crankshaft; meanwhile it rotates automatically due to inertia. The two motions compose roudong.

Crankshaft: It is a rigid rotary component that restricts the roudong rotor and transfers force and moment. It is composed of double-axes or multi-axes cylindrical parts. The cylindrical part whose axis is roudong axis is called main shaft or roudong shaft; other cylindrical parts are called eccentric shafts that are used for restricting the roudong rotor, and their axes are the rotation axis.

Roudong Cavity: It is usually a cylindrical cavity which is able to enclose the roudong motion of the roudong rotor and form the tangency fit relationship with roudong rotor.

Roudong ratio: It is the ratio of roudong radius to the diameter of roudong cavity, i.e. normalized roudong radius $\delta$. It is the basic parameter of roudong mechanics.

Roudong velocity ratio, roudong momentum ratio, roudong momentum moment ratio, roudong kinetic energy ratio, roudong end face loss ratio, roudong cylindrical surface loss ratio: These are the ratios corresponding to the parameters of roudong rotor in pure roudong motion to the rotor cylindrical surface or the whole body which has the same density, angular velocity and shape as the roudong cavity. The ratio of linear velocity is called roudong velocity ratio; the ratio of momentum is called roudong momentum ratio; the ratio of momentum moment is called roudong momentum moment ratio; the ratio of kinetic energy is called roudong kinetic energy ratio; the ratio of marginal friction loss of end face is called roudong end face loss ratio; the ratio of marginal friction loss on unit area of cylindrical surface is called roudong cylindrical surface loss ratio.

Roudong mechanics: It is a special subject that researches kinematics and dynamics of roudong and its applications. The main laws of roudong mechanics used in the present invention are: roudong velocity ratio=$\delta$ , roudong momentum ratio $\approx 1.5\delta$ , roudong momentum moment ratio $\approx 2\delta^2$ , roudong kinetic energy ratio $\approx 2\delta^2$, roudong end face loss ratio $\approx 2.5\delta^3$, roudong cylindrical surface loss ratio $\approx \delta^3$ .

Swing roudong: It is a practical derived type of roudong motion. Its rotation is superposed with a small amplitude swing motion of the same period but the average angular velocity is invariant, and its moment of momentum and kinetic energy only increase a small lower order magnitude. Swing roudong can be classified into simple harmonic type and uniform acceleration type etc depending on various constraints. The driving moment of simple harmonic type is a simple harmonic function of the angular displacement and the motion track of its particles in the roudong rotor is an ellipse. Swing roudong conduces to increasing hydraulic efficiency and is especially suitable for high viscosity medium.

Rolling roudong: It is another practical derived type of roudong motion. Its angular velocity of rotation is greater than that of revolution by a definite small magnitude, which makes linear velocity always equal zero at the tangent line of the roudong rotor and the roudong cavity. Its increment rate of angular velocity is equal to the roudong ratio and its increments of momentum moment and kinetic energy are still lower order small magnitude. Rolling roudong conduces to flexible pressure sealing for the roudong cavity. It is especially suitable for increasing volumetric efficiency in the case of high differential pressure.

Roudong volume variation method: It is a kind of motion and its actualizing method in which the working cavity in positive displacement fluid machinery varies its shape and volume periodically to be filled with working fluid and then discharge working fluid from the cavity continuously with specific energy increasing and decreasing. Its kinematic characteristic is that the movable wall of the cavity does periodic roudong motion.

Roudong volume variation mechanism: It is the motion mechanism that actualizes volume variation motion of roudong volume variation method and is composed of a roudong mechanism, a roudong cavity that contains roudong rotor and its movement space and partition board that separates a variable-pressure cavity from a constant-pressure cavity.

Roudong mechanism: It is a moving mechanism composed of a roudong rotor and a crankshaft which restrains the roudong rotor by bearings. The crankshaft has only one rotary degree of freedom due to the rigid restraint system of roudong mechanism. So roudong rotor gains an associated revolution degree of freedom. The independent rotation is driven flexibly by the constraint of inertia and friction force, or is restrained rigidly by another rigid constraint. But it is sufficient for the rotation degree of freedom which compounds roudong motion. The motion space and velocity of particles in roudong mechanism is small, meanwhile the movement space and functional velocity of space occupation are amplified one order because of relay mechanism. The corresponding effects of functions are amplified by the same scale.

Followup partition board: It is a planar component that is connected with the roudong rotor integrally or moves synchronously along with the roudong rotor and keeps a sealing contact with its cylindrical surface. It is the partition structure for the variable-pressure cavity and the constant-pressure cavity and moves on the plane through roudong axis or is parallel with it.

Variable pressure cavity: It is the working cavity where pressure and specific energy of fluid changes in the process of volume variation. The variation is continuous for compressible fluid and is stepped type for incompressible fluid.

Inner central angle of variable pressure cavity: It is a central angle of the roudong rotor that is corresponding to the cylindrical surface on roudong rotor at the side of variable pressure cavity.

Inner bastard face of variable pressure cavity: It is a bastard face that the inner central angle corresponds to and is also the equivalent pressure bearing surface of roudong rotor.

Constant-pressure cavity: It is the working cavity where the pressure and specific energy of fluid don't change during the process of volume variation. The motion of fluid is a constant-pressure process and it is the synchronously preparation process for the pressure variation process of next period.

The sealing line of roudong cavity: It is the tangent line which is generated by the tangency of outer cylinder surface and roudong cavity and rotates synchronously with revolution.

Cock: It is a restriction component for followup partition board of swing roudong mechanism, which is a cylinder with a slot through the axis, can rotate with limited amplitude around fixed-axis and can restrict through cock axis to followup partition board which is connected rigidly with roudong rotor or cavity.

Space occupation: It is the appellation for real-time position and space occupying of roudong rotor in roudong motion.

Bore sweeping, bore pressing: It especially refers to the function motion that causes volume variation of working cavity. Bore sweeping is the rotation that space occupying of roudong rotor rotates tangentially to the wall of the bore in roudong cavity. Bore pressing is the space occupying motion of roudong rotor in rolling roudong.

Relay mechanism: It is the mechanism that big extent functional motions like space occupying of roudong rotor and the motion of roudong cavity sealing line can be actualized by small extent motions of particles whose original positions are replaced continuously, which is like relay.

Self-equilibrium characteristic of system of force: It is the characteristic that for positive displacement fluid machinery, forces and moments of kinematic pairs inside volume variation mechanism or between inside and related outside mechanisms are transferred only by bearings.

Fluid machinery: It is the machinery that transfers work to energy or inversely utilizing the transition and variation rules of flow field or thermodynamic state and that transmits, controls and distributes mechanical power by fluid. The machinery that transports, distributes, meters and controls fluid also belongs to fluid machinery. Fluid machinery can be classified into three types by motion types: conventional linear translation, rotation and roudong in the present invention. If classified by energy types, all fluid machines are positive displacement of pressure type except rotary impeller of velocity type.

Friction loss of mechanism: It is the mechanical power loss caused by dynamic friction in kinematic pairs of mechanism in the volume variation motion of fluid machinery. In the present invention, it especially refers to the friction loss caused by non self-equilibrium characteristic of system of force.

Marginal friction loss: It refers to the mechanical power consumed by the friction between non-channel motion surface of mechanism and leaked fluid during the volume variation motion of fluid machinery.

Inner mechanical loss: The shaft power achieved by motion mechanism of fluid machinery is called inner power. For inner power, the part consumed by mechanical friction is called inner mechanical loss which includes friction loss of mechanism and marginal friction loss. The previous can be divided further into two parts of bearing loss and mechanism friction loss.

Specific hydraulic loss, hydraulic loss: The sum of hydrodynamics loss generated by unit mass of fluid flowing through channel in fluid machinery is called specific hydraulic loss. It is in direct ratio to the square of flow velocity. The product of specific hydraulic loss and flow is called hydraulic loss which has dimension of power and whose value is in direct ratio to cube of flow velocity.

Roudong fluid machinery: It is the fluid machinery that contains roudong volume variation mechanism(s) and actualizes main target functions by this mechanism(s). It can be classified into types like power, drive and brake, fluid transmission, metering, state and fluid state control and so on. It can be applied to many machines such as combustion engine, hydroelectric generator, hydraulic and pneumatic motor, water pump, oil pump, two-phase flow pump, fan and compressor, vacuum pump, two-phase flow vacuum pump, hydraulic torque convector, multiplex power divider, hydraulic brake, locking parameter control pump, parameter modulation pump, flow control pump, constant-proportion port device, random energy exchanger set, and random energy flow integration device.

Rotary roudong and rotary roudong mechanism: Rotary roudong is a kind of roudong that roudong reference frame rotates around the roudong axis in a reverse direction but at the same angular velocity to revolution. In a stationary coordinate system, the roudong cavity and the roudong rotor rotate separately around the static roudong axis and rotation axis in the same direction and roudong is a differential motion between them. Rotary roudong mechanism includes a static crankshaft and a rotating roudong rotor on the eccentric part of the crankshaft. Its roudong cavity is a cylinder rotating around roudong axis.

Rotary roudong fluid machinery: The roudong fluid machinery whose roudong volume variation mechanism rotates integrally is called rotary roudong fluid machinery. Its followup partition board is connected rigidly and hermetically with roudong cavity and rotates integrally with it. Roudong rotor makes a swing roudong motion relative to roudong cavity, which is a rotation superposed with a small magnitude swing in the stationary coordinate system.

Roudong internal combustion engine: It is an internal combustion engine whose gas expansion work done mechanism roudongs and it is a kind of roudong fluid machinery with additional gas-combustion generation component. It is an important application of this invention. It is composed of a roudong volume variation mechanism, a coaxially driven roudong constant-proportion distribution pump set, a timing nozzle and a synchronously working constant-volume heating impulse combustion chamber. It has the advantages of high compression ratio, high efficiency, high power density, small pollution, free from lubrication, long life and so on which are conventional combustion engine can not compare with.

Roudong hydraulic engine: It is mainly a potential energy driving hydraulic engine composed of a roudong volume variation mechanism.

Roudong motor: It is a roudong volume variation engine driven directly by fluid pressure and is an important application of roudong fluid machinery. Hydraulic motors and pneumatic motors are the applications for the respective field.

Roudong pneumatic motor: It is mainly potential energy driving pneumatic motor composed of a roudong volume variation mechanism(s). It is the application of roudong motor for working substance of gas phase. The pneumatic motor equipped with an impulse valve is the most efficient.

Roudong hydraulic motor: It is a potential energy driving hydraulic motor composed of a roudong volume variation mechanism(s). It is the application of roudong motor for working substance of liquid phase, and it is much more efficient than conventional hydraulic motors.

Roudong fluid booster pump: It is a mechanical pump comprising a roudong volume variation mechanism(s) which pressurizes fluid to endow it with energy. It is an important application of roudong fluid machinery. It can be classified into liquid booster pump, two-phase flow pump, compressor, vacuum pump, and two-phase flow vacuum pump according to the phase of medium.

Roudong booster pump for compressible fluid: It is a design type or application appellation of roudong booster pump composed of roudong volume variation mechanism(s). It can be used for pressurization work of gas phase and gas-liquid two-phase fluid.

Adiabatic compression: It is a compression process in which compressed gas does not exchange heat with environment outside in the compression process. If there is no diffuse endothermic matter existing, the instant complemented compression process is an adiabatic compression.

Isothermal compression: It is a compression process in which compressed gas emits compression heat to environment and keeps an invariable temperature in the compression process. The slow proceeding compression process and the instant compression process in which endothermic matter with sufficient heat capacity and sufficiently large surface area scatters diffusely can be regarded as isothermal compressions.

Roudong compressor: It is a design type or application appellation of roudong booster pump composed of a roudong volume variation mechanism(s). It can be used for pressurization of gas phase and gas-liquid two-phase fluid and can actualize isothermal compression.

Roudong fan, roudong air blower, roudong ventilator: They are design types or application appellations of roudong booster pump composed of a roudong volume variation mechanism(s). They can be used to transport gas-phase fluid in low pressure.

Roudong two-phase booster pump: It is a design type or application appellation of roudong booster pump composed of a roudong volume variation mechanism(s). It can be used for pressurization of gas-liquid two-phase fluid and has extensive adaptability to different gas-liquid ratios.

Roudong vacuum pump: It is a type of roudong booster pump composed of roudong volume variation mechanism. It is used for decompression of gas phase fluid, which decompresses atmospheric pressure to negative pressure. The entrance is connected with vacuum load.

Roudong two-phase vacuum pump: It is a design type or application appellation of roudong booster pump composed of a roudong volume variation mechanism(s). It is used for vacuum pumping of gas-liquid fluid. The inlet thereof is connected to vacuum load.

Roudong hydraulic booster pump, roudong water pump: It is a design type or application appellation of roudong booster pump composed of a roudong volume variation mechanism(s). It is used for pressurization of liquid fluid. It is generally called roudong water pump when it is independent of working fluid.

Roudong hydraulic pump: It is a design type of roudong booster pump composed of a roudong volume variation mechanism(s). It is used for hydraulic transmission and its work pressure is relatively high or very high.

Roudong hydraulic transmission system: It is an efficient transmission system composed of a roudong hydraulic pump(s) and a roudong hydraulic motor(s), which transfers power and changes rotational speed and torque. There is no theoretical limit or procedure limit within requirement for its speed-changing ratio. The characteristics of simplicity and convenience, efficiency and good maintainability are remarkable, so efficiency can be increased and cost can be reduced considerably if applied to vehicles such as automobile, train, ship and other machines.

Roudong hydraulic speed reducer: It is an efficient transmission system composed of a roudong hydraulic pump(s) and roudong hydraulic motor(s), which reduces rotational speed and increases torque. It maybe contain clutch of bypass throttle-cutoff valve.

Roudong hydraulic speed variator: It is an efficient hydraulic speed variator composed of a variable displacement roudong hydraulic pump set and a variable displacement roudong hydraulic motor set that are mounted coaxially, which regulates rotational speed and torque. It may be provided with a clutch of bypass throttle-cutoff valve.

Bypass throttle-cutoff Clutch: It is a design of a virtual clutch actualized in the roudong hydraulic transmission system incidentally. A manual or automatic time programmed controlling throttle-shutoff valve is mounted in high and low pressure pipes between a pump and a motor, whose states of short circuit, throttle, cut-off correspond to functions of transmission separation, buffer and connection. The appropriate program of throttle time can actualizes high connection buffer, and a special transmission chain clutch is unnecessary.

Roudong metering pump: It is a metering pump composed of a roudong volume variation mechanism(s) and used for direct-reading detection, sensing and integrating volumetric flow or converted mass flow of fluid with the integrated functions of pressurization, decompression or control. The ganged metering pumps compose a constant-proportion distribution device.

Roudong metering booster pump: It is a metering booster pump or component composed of roudong volume variation mechanism and with integrated functions of metering and boosting for fluid.

Roudong air metering pump: It is a roudong metering pump or a component composed of a roudong volume variation mechanism(s) and meters the volumetric flow or converted mass flow of air.

Roudong fuel metering pump: It is composed of a roudong volume variation mechanism(s) and meters volumetric flow or converted mass flow of gas or oil.

Roudong metering compressor: It is composed of a roudong volume variation mechanism(s) and meters mass flow of air and compresses air.

Roudong fuel metering booster pump: It is a roudong metering booster pump or component composed of a roudong volume variation mechanism(s) and meters and compresses mass flow of gas or oil.

Roudong constant-proportion distribution pump set: It is a roudong metering pump set composed of a roudong volume variation mechanism(s) and controls distribution of volumetric flow or converted mass flow of fluid materials according to proportional requirement.

Roudong constant-proportion distribution pump set: It is the roudong metering motor-pump set composed of a roudong volume variation mechanism and controls the distribution of volumetric flow or converted mass flow of fluid materials according to required proportion. It is driven by decompressed fluid.

Roudong atmospheric pressure combustion constant-proportion distribution pump: It is an atmospheric pressure combustion distribution pump set composed of a roudong volume variation mechanism(s) and distributes flow according to optimized air-fuel proportion.

Roudong constant-proportion distribution device for gas stove: It is an atmospheric pressure combustion distribution control device composed of a roudong volume variation mechanism(s) and distributes fluid according to optimized air-fuel proportion. It is driven by decompressed gas after regulating valve.

Roudong fluid energy exchanger: It is ganged motor-pump set which transfers fluid pressure energy from at least one circuit to at least one other circuit or more.

Roudong hydraulic pump: It is a pump composed of a roudong volume variation mechanism(s) and driven by hydraulic power. And it is also ganged roudong hydraulic engine-water pump set.

Roudong hydraulic variable-flow pump: It is a roudong hydraulic water pump that drives low-lift and big-flow water utilizing big-fall and small-flow water. It satisfies the needs of reducing pressure and increasing flow. It can be changed into a hydraulic transformation pump by installing swapping loop.

Roudong hydraulic variable-pressure pump: It is a roudong hydraulic water pump that drives high-lift and small-flow water utilizing small-fall and big-flow water. It satisfies the needs of increasing pressure and lift. It can be changed into a hydraulic variable-flow pump by installing swapping loop.

Roudong random energy flow integrating system: It is roudong fluid machinery and its distributed system which can transfer real-time random fluid energy to pressure energy and store it for centralized utilization. This system is used to gather and utilize wind energy, waterpower and redundant pressure energy of liquid in production process.

Roudong electric power generation system utilizing the energy stored by hydraulic integration: It is a small natural energy system in which a roudong hydraulic engine and an air compressor are mounted coaxially. When the system works, it produces compressed air which is then stored in an air tank after transported through pipes. When using the compressed air, just release it to drive the roudong pneumatic motor which drives numerical control excitation generator working.

Roudong high adaptive wind power system: It is a wind power system with large output power and low cost. The unit which is a roudong compressor composed of ganged high adaptive wind impellers is mounted in distribution and exports compressed air in real-time which is centralized in air tank through pipes and drives a single roudong pneumatic motor- numerical control excitation generator set running optimally.

Rotary roudong hydraulic vehicle wheel: It is a kind of simple and efficient wheel driven by hydraulic pressure. The wheel hub is the rotating cylinder of roudong motor which does revolution in reverse direction around roudong axis and roudong axis is the static carriage axle, and thus the connection of chassis is simple.

Roudong two-phase flow heat pump compressor: It is a roudong two-phase flow compressor. The heat transmission is strengthened because of the gas-liquid two-phase flow circulation. If the throttle pipe is replaced by a roudong motor for decompression, there will be no throttle heat and pressure energy can be recycled.

Gravity flow, staircase micro liquid seal: The method of decreasing the altitude flow is adopted in a tube pass structure of evaporator in roudong two-phase heat pump system, which is called gravity flow. Several staircases in a reverse direction to gravity are set underway, which is called staircase micro liquid seal.

Supercooled vapor, superheated vapor: The vapor whose pressure is above saturation pressure is called supercooled vapor. The vapor whose pressure is below saturation pressure is called superheated vapor. The saturation pressure is single-value monotone function of temperature.

Supercooled evaporation, superheated condensation: A cooling evaporation process generating supercooled vapor is called supercooled evaporation, and its pressure is above saturation pressure. A condensation process of superheated vapor is called supercooled evaporation, and its pressure is below saturation pressure.

Roudong two-phase heat pump compressor for water heater: It uses a roudong two-phase compressor to pump heat from a solar board and an air heat-exchange board to a constant-temperature water tank of integrated heat storage type. The gas-liquid two-phase medium circulates and roudong motor decompresses.

Refrigerating coefficient, heating coefficient: The ratio of the heat absorbed from a low temperature heat source by a refrigerating machine to the work in a heat pumping process is called refrigerating coefficient. The ratio of heat that a heat pump releases to a high temperature heat source to the work in a heat pumping process is called heating coefficient. The two coefficients are in direct ratio to absolute temperature of high or low temperature heat sources and in inverse ratio to the temperature difference of heat pumping.

Roudong internal combustion engine constant-proportion distribution booster pump: It is an internal combustion engine metering booster pump set composed of roudong volume variation mechanisms and distributes flow according to an optimized air-fuel proportion. It is used as a distribution and pressurization component for roudong internal combustion engine, combustion gas turbine and reciprocating internal combustion engine. The last two applications separately removes worm wheel compressor and is changed to be two-stroke with out air-compressing correspondingly. It actualizes isothermal compression by spraying cool water at the inlet of the pump set and in the roudong cavity. The output of two-phase flow is separated by a separation, buffer and adjusting device. The cooling water flow runs into a roudong feedback motor to recycle its pressure energy. The flow is adjusted adaptively.

Roudong feedback motor: It is a motor which recycles the energy of cooling liquid of a roudong isothermal compressor. Its inlet is connected to the outlet of cooling water of separation and buffer controller.

Separation, buffer and adjusting device: It is a separation device for cooling liquid of an isothermal compressor with the functions of gravitational separation, buffer and adaptive control of flow. The flow of cooling water is controlled in closed-loop by constant liquid-level floating valve.

Roudong gas stove constant-proportion distributor: It is an atmospheric pressure combustion distribution controller composed of a roudong volume variation mechanism(s) and distributes flow according to an optimized air-fuel proportion. It is driven by decompressed gas. Alternatively, it may comprise a fine adjustment cut-off valve for air margin coefficient.

Air margin coefficient: In the condition that physics and chemistry parameters of fuel and air is disturbed, the lowest air-fuel proportion of combustion reaction is calculated according to the lower boundary of mass flow of oxygen and upper boundary of mass flow of effective combusting composition. The percentage increment by which the practical airflow exceeds the required flow at the lowest air-fuel proportion is called air margin coefficient.

Low resistance throttle valve: It is a low resistance decompression adjusting valve used for air margin coefficient adjustment. The lower limit of its adjustment is designed as the lower boundary of air-fuel proportion, and the upper boundary is determined by maximum margin coefficient. The displacement ratio of the distributor is designed according to its upper boundary.

Versatility parameters: They are the parameters that characterize versatility of roudong fluid machinery. It can be classified into basic parameters and non-basic parameters. The basic parameters include pressure resistance, shaft strength (torque), speed limit and displacement; the non-basic parameters can be any other parameters of versatility space such as maximum lift, maximum velocity and relationship among lift, flow rate, power and rotating speed for water pump; the maximum pressure, maximum rotating speed, and relationship among pressure, flow and rotating speed for air compressor; the maximum fall, relationship between fall and flow, rotating speed and power for hydraulic engine; the maximum rotating speed, relationships between wind rate and rotating speed and between power and rotating speed for blower and so on.

Safety parameter, strength parameter, upper boundary parameter: These three parameters i.e. pressure resistance, shaft strength and speed limit, characterize structural strength of fluid machinery and are corresponding to the maximum pressure resistance of the cavity, maximum torque and rotating speed of the main shaft.

Versatility basic parameters: They include safety parameters and displacement, which are only four parameters of pressure resistance, shaft strength, speed limit and displacement. The safety parameters are called inequality parameters and displacement is called equation parameter.

Equation parameter: It is displacement, which is the only functional parameter in versatility basic parameters of general fluid machinery. It is a constant parameter in the functional index equation.

Index equation: It is a process equation whose unknown variables are pressure, flow and power. For the compressible and incompressible fluid, it is corresponding to energy and flow continuity equation of heating power and potential flow. It can be used for solving function parameters in conjunction with a set of inequalities of safety condition. Only two of these three unknown variables are independent.

Constant flow characteristic: It is one of the output characteristics of roudong fluid machinery that flow is in direct ratio to rotating speed, and constant speed results in constant flow. But the pressure is adaptive to load and irrelevant to flow rate.

Pressure adaptability, power adaptability: These are the characteristics that output pressure is irrelevant to flow rate and is adaptive to load. The power is determined by load pressure and rotating speed.

Pressure versatility: It is the versatility of pressure and power within the limit of safety for roudong fluid machinery, which is the adaptability that it has economical efficiency for any combination of pressure and rotating speed chosen freely within the upper pressure boundaries of pressure resistance, shaft strength and speed limit.

Medium versatility: It is the versatility for the fluid with the same phase within the limit of safety condition for roudong fluid machinery which is the adaptability that for any invariable medium of non-prohibited chemicals chosen freely within the upper pressure boundaries which are corresponding to pressure resistance, shaft strength and speed limit, it has economical efficiency.

Phase versatility: It is the versatility for fluid phase within the limit of safety condition for roudong fluid machinery, which is the adaptability to economical efficiency for the fluid phase of non-prohibited chemicals chosen freely within the upper pressure boundaries corresponding to pressure resistance, shaft strength and speed limit. It contains pressure versatility.

Versatility of fluid machinery: Roudong fluid machine has multifunction, invertibility and the technical characteristic of pressure, medium and phase versatility endowed by type and series planning. It must be designed with versatility and has versatility nameplate.

Roudong versatile fluid machinery: It is versatile roudong fluid machinery that is planed and designed with versatility and is marked with the parameters in term of versatility criterion. It has multifunction, phase versatility and continuous adaptability without upper boundary for pressure and power endowed by type and series plan.

2. Field of the Invention

The present invention is directed to a roudong volume variation method for the fluid machinery and a volume variation mechanism and applications thereof. The stated fluid machinery is an abbreviated form of positive displacement fluid machinery. "Roudong volume variation method" and "roudong volume variation motion" are innovative concepts. The present invention relates to many fields including dynamic machinery and transmission, fluid delivery and control, etc. The present invention can be applied to many industries such as energy, transport, chemical industry, machinery, mining, water conservancy, environment protection, construction of town and country, service industry and so on. The present invention particularly relates to the field of fluid machinery and, more particularly, relates to positive displacement fluid machinery as far as the operating principle is concerned. But it belongs to neither existing positive displacement fluid machinery, nor non-displacement fluid machinery. It is involved with an innovative motion type and architecture.

The fluid machinery works by means of fluid medium and can be sorted into three types by functions. The first type of fluid machinery converts work to energy or inversely converts energy to work employing the transforming rules concerning fluid field or thermodynamic state, including, for example, pump and compressor with the characteristic of a pressurizing process with power consumption, water turbine, combustion engine, steam turbine, gas turbine and various high and low temperature gas turbo expansion engine with the characteristic of an applying-work process with decompression of fluid or simultaneous expansion. The second type of fluid machinery transmits, controls and distributes power or energy through fluid, including, for example, hydraulic torque converter (decelerator and accelerator) and hydraulic transmission (speed governor) with the characteristic of power transfer and control utilizing work-energy conversion or inverse conversion simultaneously. The third type of fluid machinery delivers fluid mass with energy increasing or decreasing and meters or controls fluid parameters, including, for example, metering pump, constant proportion distribution pump, parameter modulation pump, parameter locking control pump etc.

Fluid machinery can be sorted into conventional linear translation type, rotation type and roudong type in the present invention by motion types. If sorted by energy, there are only two types: positive displacement type and non-displacement type. The fluid machinery of displacement type utilizes the potential energy of fluid, wherein pressure is a critical parameter. The fluid machinery of non-displacement type utilizes the kinetic energy of fluid or energizes the fluid, wherein velocity is a critical parameter. All fluid machines belong to displacement type except rotational impellers of non-displacement type. The fluid machinery of displacement type has various structures and functions.

A positive displacement fluid machine includes at least one working cavity. The movable cavity wall structure of the at least one working cavity moves periodically, and the shape and volume of the cavity change continuously with it. This type of periodic motion is called a volume variation motion. The fluid runs into and out of the cavity along with the volume variation motion. The specific energy of the fluid changes resulting from a process of releasing energy or being energized, and, the pressure of the fluid increases or decreases accordingly, or alternatively, the specific volume of the fluid changes accordingly.

A volume variation motion is essential for and sufficient to the positive displacement fluid machinery. The volume variation motion is a basic feature of the positive displacement fluid machinery and determines the structural principle, function and characteristics thereof.

Positive displacement fluid machinery is not restricted by a lower limit velocity, so it has the most extensive adaptability and flexibility and can satisfy any function requirement to the fluid machinery in theory and practice.

Fluid machinery is applied extensively to every industrial field of the national economy. All kinds of fluid machinery are used in and essential for industry, agriculture, transport, daily life, etc.

Fluid machinery is primary energy equipment in social production and life. It runs as core equipment in water, electricity and air systems. It is an important as part as the heart of human body.

Fluid machinery is primary driving equipment in social production and life. Delivery of raw materials and products in the state of gas, liquid and solid, travel and daily transportation are almost all driven by the fluid machinery.

Fluid machinery is primary energy consumption equipment. Most mineral energy source developed by human, such as petroleum, natural gas and coal are consumed by fluid machinery such as internal-combustion engine, gas turbine and external-combustion engine. Almost all other natural energy sources such as waterpower, wind energy, geothermal energy, ocean energy, biologic energy and other new energy sources such as nuclear energy need to be absorbed and converted by fluid machinery.

Fluid machinery is a primary pollution source. Fluid machinery has been used extensively since the industrial revolution, especially since last century, and has caused the most serious environment pollution in history. Most greenhouse gasses are resulted directly or indirectly from fluid machinery as dynamical power machines. These machines also emit poisonous and harmful gas such as carbon monoxide, carbon dioxide and $NO_x$. Many or even most of techniques in fluid machinery are immature and need to be improved and renovated in respect of ecological civilization.

To renovate fluid machinery is an urgent mission and relates to the sustainable development of human beings. The hope for solving energy crisis and environment crisis may be in the technical innovation of fluid machinery.

3. Background of the Invention

Some important conclusions can be gotten by reviewing technical characteristics and existing technical conditions of fluid machinery.

Positive displacement fluid machinery has considerable advantages in theory by utilizing potential energy. Because potential energy is irrelevant to velocity, a working flow velocity can obey hydraulic criteria. The hydraulic loss can be controlled and reduced to very low level and even to any low level as desired in theory. The hydraulic efficiency can exceed 95% within hydraulic criteria, and can even reach 98% when working at low speed. The hydraulic efficiency bottleneck which the non-displacement fluid machinery has suffered from for 300 years hardly exists in the positive displacement fluid machinery. The velocity adaptability available in the positive displacement fluid machinery and the available differential pressure resulted from a constant flow allow said machinery to have unique adaptability and flexibility in theory.

However, current positive displacement fluid machinery does not utilize and develop the advantage mentioned above. Some problems exist in conventional designs, such as a complex structure, a serious friction loss, a low inner mechanical efficiency, and a low displacement efficiency, etc. The internal mechanical efficiency and the displacement efficiency are product factors of the overall efficiency. When both of the two factors or one of them reduces to a certain extent, it will be a bottleneck which restricts the upper limit of the overall efficiency. In addition, the existing positive displacement fluid machinery has rigorous requirement of precision and the manufacturing cost is relatively high. The failure rate is also high because of its complex structure. These defects seriously restrict the development of the positive displacement fluid machinery.

Restricted by the internal mechanical efficiency or other related factors, the efficiency of most of current positive displacement fluid machinery is below 50%. The efficiency of internal combustion engine is about 40% and that of compressor and vacuum pump is about 30%. The efficiency of a hydraulic transmission system is far lower than that of a mechanical transmission system. The low efficiency is mainly resulted from the inappropriate volume variation motion of the positive displacement machinery. An inappropriate kinematics design leads to an inappropriate structural design and bad dynamic characteristic. A brief analysis of the characteristics and defects of two volume variation motion types in current positive displacement fluid machinery, i.e. linear translation and rotation, will be described hereinafter.

Firstly, we will analyze the main problems of linear translation (linear reciprocating motion), which is age-old and frequently used.

The primary defect of this volume variation motion is obvious that the moving trace of linear translation itself is not enclosed and therefore is not periodic, which makes it necessary to add another backward motion to produce the periodicity of an enclosed trace. That is very disadvantageous. The internal mechanical loss per unit of time almost doubles and the function density reduces one half just because of adding the ineffective backward motion.

Another serious problem is the bad characteristics of mechanism dynamics of linear translation volume variation motion. The piston-link-crank mechanism used in linear translation not only has complex structure, but also has no self-equilibrium of inner system of forces. An external force must be used to achieve equilibrium. Acting as a two-force member swinging at high speed, the resultant force of the load, the crankshaft's constraining force and a inertia force (kinetic reaction force in the process of velocity varying) of the link generates a dynamic force, which has a large magnitude and is orthogonal to the moving direction. That causes various problems. The constraining force and the friction force on the fit surface of the piston pin increase because of this force, and thus the friction loss of piston, the loss on the fit surface of crankshaft journal and the loss at the crankshaft bearing also increase correspondingly. More particularly, this non self-equilibrium causes a normal load force applied to the pair of piston-cavity wall and causes a great friction pair applied thereto. The inhomogeneous distribution of the friction force is applied on the fit surface and its value which is many times larger than the sealing force load on the piston ring causes more friction loss and correspondingly more rigorous lubrication requirement and cooling requirement. When the lubrication is bad, friction can cause the cylinder scraping and burning of the cylinder, resulting that the machine is damaged. In addition, the external periodic time-variant equilibrium force and torque can cause machine vibration and structure fatigue. Vibration is one main cause of noise pollution generated by this kind of machine. Thus it can be seen, the volume variation motion of linear translation, which has no self-equilibrium system of forces, is of many problems such as large loss, acute vibration, complex and cumbersome structure, rigorous requirement for lubrication etc, and causes bad performance in efficiency, cost and environment pollution. Especially, the lubrication problem decreases the reliability of the machine directly. The rigorous requirement for lubrication increases the manufacturing and running cost.

For internal combustion engine which is a typical volume variation machine of linear translation, the restriction of the lubrication to the cylinder wall temperature results in damage to the temperature condition for complete combustion of the boundary layer. In the condition of a low compromise temperature caused by enhanced cooling of the cylinder wall, the mixed gas of the boundary layer can not combust sufficiently, and a lubricant film may cause partial volatilization and carbon build-up. Unstable cooling, thermal shock at start-up and at speed changing process, and slow thermal response can deteriorate this problem. Incomplete combustion causes a waste consumption of oil, decreases combustion efficiency and leads to inner fouling and exhaustion pollution. Exhaustion pollution is mainly directed to the exhaustions of carbon monoxide and dark smoke. Smoke includes absorbable particulate matter such as carbon granule, volatile droplet of lubricating oil and its gel. Those pollutions can pollute the blue sky and do harm to human being living environment and the whole biosphere. In addition, the cooling system for maintaining lubrication increases the manufacturing and running cost and the water-cooling system is susceptible to frost-crack accident.

Besides internal combustion engine, the volume variation of linear translation is applied extensively to the fluid machinery such as gas compressor, vacuum pump and hydraulic transmission device of plunger type etc. The internal mechanical efficiency of this kind of machinery is reduced by the complexity of volume variation mechanism composed of pistons, links, and cranks, and the friction loss generated by the non self-equilibrium of the mechanism force system. The friction loss of the mechanism is one of the main causes of low mechanical efficiency.

The compression process in machines like compressors and vacuum pumps is a thermal process. The inner energy and temperature of the gas increase in the compression process of volume variation of the gas cylinder. But heat is difficult to disperse, which causes adiabatic compression. The power consumption of adiabatic compression generally exceeds approximately one times than that of isothermal compression. It exceeds even more in the case of high compression ratio. Thus, the low efficiency is imaginable. The efficiency of many reciprocating type compressors and vacuum pumps is about 30%, and adiabatic compression is an important reason for this apparently. Exactly speaking, in the kind of machines like compressors and vacuum pumps, there are two bottlenecks, which are the constraint of inner mechanical efficiency and the constraint of thermal efficiency factor caused by adiabatic compression. The thermal efficiency factor is defined as a ratio of the absolute temperature at the inlet to that at the outlet. It is not a product factor of instantaneous efficiency but a product factor of practical efficiency in consideration of the steady-state specific energy after the work medium is cooled. This factor may be blow 50% and even lower at high compression ratio. To increase the efficiency of the fluid machinery like compressors and vacuum pumps, cooling problem must be solved during volume variation design to accomplish isothermal compression. Existing technology does not do well in this respect.

Vane pumps and sliding-vane motors, and, plunger pumps and plunger motors are two types of rotary fluid transmission equipment in existing techniques and the latter are prevailing equipments for hydraulic transmission. They have rotating structure, but their motion type of volume variation mechanism is linear translation, or it should be called as a linear translation combined with a rotation. Their volume variation principles are different. Vane pumps and sliding-vane motors utilize vanes extending and contracting in radial direction in the rotating rotor to split an eccentric cavity and cause the volume of the sector region between the blades to vary periodically. The plunger pumps and plunger motors utilize a radial or axial translation of the plunger in a small cavity of the rotating rotor to cause the volume of the small cavity to vary. The latter needs a precise cylindrical surface or end face distribution structure to cooperate therewith.

These two kinds of machines have simple structure and small dynamic reaction force, but neither of the blades nor plungers thereof has self-equilibrium of force system and thus an external restraining force is required to keep equilibrium. The common characteristic of the mechanical friction in these kinds of two machines is that constraining forces for generating friction are maximized. The radial constraining force of the blade in a vane pump is equal to maximum inertia force plus a preset elastic pressing force. When the blade retracts, a dynamic friction resistance of the blade's slide should be added, which is generated from the differential pressure of the load and the dynamic frictional resistance of blade slideway caused by the moment of radial constraining force, wherein the frictional resistance of slideway is related to the distribution of the differential pressure of the load and the counterforce of the radial dynamic friction moment. The stress of the plunger is similar to the blade, but all the load force in an opposite direction to the motion should be added. In two types of friction loss of these two machines, the friction in the slide or the small cavity is less considerable. Most of the friction loss is generated in the moving direction of the rotor, wherein the friction velocity is equal to the maximum linear velocity of the volume variation motion and is maximized, too. Force and velocity factors of the friction loss are both maximized. Hence, the friction loss is certainly maximized. Only the friction coefficient is an adjustable factor. Therefore, the value of the internal mechanical loss is high in these two kinds of machines and they rely on lubrication intensively.

All the vane pumps have small displacements. Plunger pumps are applied more extensively. The generation ratio (to the load force) of the normal constraining force and the friction force are many times greater compared with a piston-link mechanism. With the same lubrication and friction coefficient, its mechanism friction loss rate is higher, which affects the efficiency of this kind of machinery. The efficiencies of plunger pumps and plunger motors impede the development of hydraulic transmission which has the advantage of systematization, so that mechanical transmission can not be replaced with it for a long term. If the efficiency of hydraulic transmission is close to or higher than that of mechanical transmission, which is costly and doesn't have very high overall efficiency due to its long drive chain, hydraulic transmission will surely be adopted and the manufacturing cost of automobile will be decreased considerably.

For the second type of current volume variation, i.e. rotary volume variation, the bottleneck in efficiency also exists.

Rotary volume variation can be subdivided into helical motion, gear meshing motion and eccentric wheel rotation. Generally speaking, the mechanism of rotary volume variation has the characteristic of self-equilibrium of system of force, which facilitates decreasing the friction loss in the mechanism. But another type of internal mechanical loss becomes a prominent problem in rotary volume variation motion. Its volume loss may be too big in some conditions. The concrete analysis is following.

The sealing position in the helical channel moves continuously during the helical motion, which makes the volume of the cavity communicated between outlet end and inlet end generates a complementary variation in a plus and minus saw tooth wave. The practical working cavity is only the helical channel whose volume variation motion is accomplished by an instantaneous switch of the connection between helical runner and end cavity and a variation of the length of connected section between them, which is caused by a continuous movement of sealing position. The volume variation motion leads to a volume variation of the cavity in a raw tooth wave, in which the volume variation mechanism is a screw stem. The cylindrical surface of the screw stem is the dynamic sealing face. The marginal friction loss generated in rotation with the leaking flow is in direct ratio to the cube of linear velocity, and thus causes a higher international mechanical loss resulting in a decreased efficiency. Screw pumps which are usually used for delivery of high viscosity fluid have a low inner mechanical efficiency but cannot be replaced in existing technology. Screw compressors use lubrication oil as sealing medium. The internal mechanical loss generated from friction is still considerable because the sealing area is large. Apparently, the internal mechanical efficiency is still the efficiency bottleneck of this kind of machinery.

The gear meshing type of volume variation motion has the characteristics of the continuous shift of the backlash and the disappearance of the backlash at the mating point. For the cavity connected with the outlet end of fluid, the rotation of gear generates a continuous pulsating variation superposed with pulse increment and pulse decrement, wherein the phase difference is determined by the geometrical relationship. A compensatory variation happens in the cavity connected with the inlet end. Their change rate is very small. Similar to the helical motion, the practical working cavity is only a backlash moving continuously. It is different in this type that the instantaneous flow is not constant but varies as a pulse function, and the practical volume variation motion is a pulse type translation of the cavity. The instantaneous volume of the working cavity can be expressed as response of Dirac delta function ($\delta$ function) sequence after sequential filtering. Gear pumps or gear motors have good self-equilibrium of system of force and reversibility. Their structures are simple and costs are low, so they have been employed for a long history. This volume variation method generates the following problems: the specific displacement (ratio of displacement to motion space) obtained by the volume variation is so small that the relative size of the sealing surface is increased and the internal mechanical loss relevant to high order exponent of scale is also increased. The high frequency pulse in the output is disadvantageous too. In operation, there are three kinds of losses simultaneously, comprising the internal mechanical loss mainly caused by marginal friction at the end face, the volume loss mainly existing around the mating point and the hydraulic loss mainly at the mating point. The proportions of these three losses change according to specific situation, but the internal mechanical loss is dominant. When the rotating velocity is high, the hydraulic loss increases and may cause damage of cavitation corrosion. The volume loss is large at low viscosity and low velocity. The internal mechanical loss is the efficiency bottleneck for gear meshing type of volume variation. Because this bottleneck is difficult to get over, the efficiency is impossible to be improved largely for this type of volume variation.

The rotating volume variation method of eccentric wheel means that the bore occupation of an eccentrically mounted rotor in cavity sweeps bore because of the rotation of the rotor. This design has been developed in recent, and various new designs thereof have been described in patent literature. Eccentric wheel rotation obviously has better adaptability than helical motion and gear meshing. Its volumetric efficiency and hydraulic efficiency can be improved due to its good structure and design. Hence, it has certain advantages. However, there are two problems as follows.

Firstly, the velocity of rotating volume variation motion is too high. When a rotor sweeps bore, the relative velocity of the sealing surface is in direct ratio to the associated scale and the rotating speed of the rotor. Because a certain rotating speed and size is required for the economic design of efficacy of sweeping bore, a large loss is generated correspondingly. First, the end face of the rotor and the leak flow can generate marginal friction. The friction force on an infinitesimal area is in direct ratio to the square of linear speed. After it is integrated, the end face friction loss is in direct ratio to the quintic exponent of diameter and is also in direct ratio to the cube of rotating speed. Hence, it constitutes most of the internal mechanical loss. The friction loss between the cylindrical surface of the rotor and the partition separating the high pressure cavity from the low pressure cavity constitutes another part of the internal mechanical loss and is in direct ratio to linear velocity. The only method of decreasing the loss is to decrease the velocity, which can damage the economical efficiency of the machine.

Secondly, the rotating volume variation method of eccentric wheel is a big locus motion formed by the ergodic functional motion of fixed particle. The mean and the variance of the linear speed of the particle in the rotor are very big. Hence, the momentum moment of the rotor is too big which leads to bad dynamic characteristics. The eccentric rotor can also cause design difficulty in dynamic equilibrium.

Non-displacement fluid machinery may not belong to the technical field of the present invention, but the present invention can be applied thereto because of the crossover characteristic of the object of the present invention. The present invention can be alternatively applied to non-displacement fluid machinery because their application fields are completely the same. Non-displacement fluid machinery has simple structure, equilibrium stress, and great power density and thus has always been concerned. The existing problem of this kind of machinery is that it has a bottleneck of great hydraulic loss and low efficiency for liquid media. There are two kind of hydraulic losses in this machinery which works relying on velocity in terms of hydrokinetics rule, i.e. local resistance loss and traveling resistance loss. Their specific energy and power loss are respectively in direct ratio to the square of and the cube of velocity. Even though all the local loss can be eliminated with the development of technology, the traveling loss cannot be eliminated forever.

For gas medium, which is insensitive to hydraulic loss, there is an additional efficiency restriction to non-displacement fluid machinery. By the example of gas turbine, its hydraulic efficiency is near 90%, but its efficiency is restricted by the constraint chain of velocity-centrifugal force - strength of impeller - temperature of gas - efficiency of thermal cycle, which generates a thermal cycle efficiency bottleneck caused by velocity, so that the thermal efficiency of a single-cycle can not break through 50% in long term. The thermal efficiency of combined cycle can reach 60%, but the complexity of its process and system constitution makes the construction cost increase almost one time. Experts predict that the limit of thermal efficiency of combined cycle is 70%, and it needs 100 years to obtain the material and technology, including cooling technique for blade, to achieve this limit. Part of the output of the combined cycle is low quality low-temperature heat generated along with thermoelectricity. This cycle is preferred at present, but it is not necessarily competitive in the future.

It is noticed that in the process of effort to reform the non-displacement fluid machinery, although technical improvement have been made, the essential restriction is difficult to be overstepped.

Besides the efficiency bottleneck, another serious problem of current fluid machinery is the monotonic technical aim and monotonic product thereof. That is to say, a type of product is only used for one purpose in certain conditions and even concrete parameters cannot be modified in most conditions.

But versatility is required and is regarded as a scale to evaluate the adaptability and use-value of a product. A product with more versatility has more value for users. It is obvious that a universal wrench has different use-value from a fixed wrench. But little is concerned for users' demand in current fluid machinery. Up to now, the functions of almost each kind of product is monotonic, and even the application parameters of the product are also preset (cannot be altered). For example, the fluid phase is preset, and a gas or a liquid machine cannot be used alternatively. For another example, water pumps with a lift of 20 meters are impossible to be used for a lift of 100 meters. If water pumps with a lift of 100 meters are used for a lift of 20 meters, the efficiency will be reduced considerably. Such a degree of freedom is not or cannot be provided in existing techniques.

Lacking of versatility in current fluid machinery causes a result that a conditional value is returned to zero, namely, if the condition of actualizing use-value does not come into existence, the real-time value is equal to zero. That is a mathematical logic and can generate huge social waste. Product of manufacturer, goods in circulation, and equipment in user's hand all consume natural resources and social manpower that are changed into use-value. Monotony makes use-value to be a value with conditional probability. When the condition does not come into existence, the use-value is nonexistent. The complexity of the world sometimes causes many conditions nonexistent in many places and times, which causes non-statistical loss of value return-to-zero.

Another result from lack of versatility is high price. The reason is simple: lack of versatility consequently leads to complexity of type and specification, and results in many product types with little production lots. And high price is inevitable according to the principle of commercial manufacture. For example of, the centrifugal pump, which belongs to the field of fluid machinery, non-displacement type of impeller machinery and radial-direction flow type, has more than 10,000 kinds in the Product Catalog of Chinese Enterprise. The complexity of product design, production organization, currency and application always leads to high cost of purchase and maintenance.

Fluid machinery is bulky, has numerous types with different functions and different parameters covering several orders of magnitude and has been used in most fields in human production and life. If calculating and estimating by the example of centrifugal pumps, there are more than a hundred thousand of types and specifications fluid machines all over the world. If the design of versatility is actualized, it maybe only needs thousands of types to satisfy the demand. The average batch may increase more than 10 times. The cost may be reduced to one half, the stock of equipment may be decreased by one-third or more and the natural resource consumption may be decreased by the same scale. The concrete amount cannot be calculated exactly, but it is large for certain.

The lack of versatility exists universally in both displacement type and non-displacement type of fluid machinery for a long time. The prodigious recessive waste exists along with history. According to the conventional economics theory, manufacturers, businessmen and users undertake previous loss of value's return-to-zero and high cost together. However, it is actually the entire humankind who undertakes it. The lack of versatility causes the consumption of natural resources to increase by several times, which results in serious resource waste and environment pollution increase by the same scale. That is the overdraft to ecological benefit of mankind and future of sustainable development.

In summary, there are problems such as low efficiency, environment pollution and lack of versatility in the field of fluid machinery. The severity of lack of versatility problem is not known by most people; or it is only regarded as a theoretic problem instead of a practical problem; or the problem is recognized, but it can not be solved in practice.

Particularly, with respect to the efficiency problem of positive displacement fluid machinery, there are obvious defects in its two types of volume variation motions. Internal mechanical loss of mechanism friction is serious in linear translation mechanism and leads to derivative problems such as rigorous lubrication, combustion conflict and environment pollution. Internal mechanical loss of marginal friction is the primary loss in rotary machines. These two motions both suffer from the mechanical loss. It is obvious that little reformation cannot get big earning. The efficiency bottleneck may be broken through, only by seeking the new method of volume variation and keeping the obstacle away.

If a new volume variation method can not only solve the problem of mechanism friction in linear translation mechanism, but also solve the problem of marginal friction in rotary machines, and solve the other derivative problems at the same time to substantially increase the internal mechanical efficiency, the efficiency bottleneck of displacement can be broken through.

The expected breakthrough will not only be applied to displacement fluid machinery, but also to the whole field of fluid machinery. That is because non-displacement fluid machinery is also restricted by the restraining chain of velocity-efficiency. Despite of the combined cycle of gas turbine as well as various new processes and designs getting more and more perfect, less and less can be improved unless a revolutionary invention is proposed. In all applications, non-displacement fluid machinery can be replaced with displacement fluid machinery. If there are advantages for the main technique economical performances such as efficiency, environment protection and cost, this replacement cannot be changed by subjective purpose of people.

If a new method of volume variation also solves the problem of monotony, and makes most products of fluid machines become multi-functional, versatile, it will appear a nice status. The order of types and series of fluid machines will be reduced; the order of conditional probability of product value actualization will increase; the devices of users will be more useful and the storage is reduced largely; the order of product batch in manufacturer will increase, the cost will reduce largely and the price will become lower. Then resource consumption and environment pollution will decrease largely.

4. Summary of the invention

The present invention is directed to solve the problems mentioned above.

The first object of the present invention is to design a new method of volume variation motion for positive displacement fluid machinery, including a new motion type and a new mechanism, to considerably increase the efficiency of this kind of machinery. In view of application complexity of fluid machinery, several derivative types and corresponding structures of volume variation motion are also involved, which are inferred and deducted from the mechanics principle of this new method.

The second object of the present invention is to design various applications of positive displacement fluid machinery synchronously while designing its new volume variation method. The function and performance can be tested in the application which is designed as an object, and is necessary and sufficient for defining new concept and new characteristic. The application design of the present invention belongs to concept visualization, and the depth of visualization lies on the implementation ability of experts in relevant fields. Many applications cannot be actualized in existing techniques.

The third object of the present invention is to combine functions and conditional functions in the application design of new volume variation method for fluid machinery. The versatilities of fluid machinery, including function versatility, parameter versatility and medium versatility, are defined and designed based on this object. Vulgarly speaking, this object is to design fluid machinery as multifunction machinery. One machine can be used in various applications, which means it could be not only an engine but also a water pump, or a compressor or a vacuum pump etc.

The essential and universal innovation demands in the technique field of fluid machinery are considered in the object of the present invention, and the requirement for setting up corresponding theoretical basis is also noticed properly. When a type of motion method for a kind of machine is invented, all tasks for inventing said machine are necessarily involved because motion is the core of a machine. The motion of the machine involves motion mode, motion mechanism, motion principle and function of motion. It is a challenge to attempt to constitute a simple technical solution which can be advantageously used in so many applications. So much is contained in the present invention and it has to simplify the expression of the content and text again and again herein.

The solution of the present invention is a roudong volume variation method for positive displacement fluid machinery. This method involves roudong volume variation motion, roudong mechanism and its structure, mechanics principle of roudong and roudong volume variation motion, and, function and performance settings and application classification of the roudong volume variation fluid machinery, etc.

In the roudong volume variation method, the volume variation motion of the cavity is in a roudong motion by the combination of a revolution and a rotation in an inverse direction but with the same velocity. Roudong volume variation mechanism is included in the positive displacement fluid machinery and is composed of a roudong mechanism, a roudong cavity and a followup partition board. A roudong rotor of the roudong mechanism roudongs in the cavity, and it is tangent with the inner wall of the cavity to form a crescent-shaped cylindrical cavity. The cavity is divided into a variable-pressure cavity and a constant-pressure cavity by the partition board. The two cavities are connected separately with one and the other of an inlet and an outlet. The volumes of the two cavities vary periodically and complementarily. The fluid volume increases actively or decreases passively in the volume variation motion of the variable pressure cavity with a continuous or stepped decrease or increase of pressure, and with a continuous increase or decrease of specific volume for compressible fluid. The volume variation motion in the constant-pressure cavity only makes fluid be pumped in and out under a constant-pressure. The function of the machine is performed directly by the volume variation motion of one of the two cavities. The volume variation motion of the other cavity is an auxiliary process.

The variable pressure cavity and the constant-pressure cavity are both composed of an internal surface of the roudong cavity, an external surface of the roudong rotor and a sealing surface of the followup partition board, and the two cavities are separated by the sealing line of the roudong cavity and the followup partition board. When the roudong mechanism makes roudong motion in the roudong cavity, the space occupation of the roudong rotor rotates around a roudong axis due to the revolution. The rotation of the space occupation of the roudong rotor forms a continuous-relay bore sweeping or bore pressuring motion. Accordingly, the position and volume of the variable-pressure cavity and the constant-pressure cavity are changed periodically.

When the main shaft rotates for one period, the volume of the variable pressure cavity increases continuously from zero to a maximum value, or decreases from the maximum value to zero. It forms a working period of variable pressure and variable volume variation, in which the pressure is decreased to release energy from the fluid or the pressure is increased to energize the fluid. The volume of the constant-pressure cavity decreases correspondingly from a maximum value to zero or increases from zero to the maximum value with fluid being pumped out and in under a constant-pressure. This process goes synchronously with the variable pressure process.

The roudong volume variation method mentioned above includes the mode of roudong volume variation, the kinetic characteristic of roudong motion, the composition of volume variation mechanism, the implementation of roudong volume variation and the action thereof on the motion of fluid.

Roudong motion is introduced into the fluid machinery as a type of volume variation motion with a view of decreasing velocity and on the basis of deduction from basic concept of mechanics. This motion type has excellent mechanism dynamic characteristic and an advantageous friction loss rate. The analysis is in the following:

The cylindrical roudong rotor of pure roudong is compared with a cylindrical rotor with the same ratio. Assume the radius is R, the height of the cylinder is H, the density is ρ, the angular velocity is ω, and the roudong ratio is δ, then

The linear velocities of the circular surface in the roudong rotor and the rotor with the same ratio are $\omega\delta R$ and $\omega R$ respectively, the ratio between the velocities is equal to

$$(\omega\delta R) \div (\omega R) = \delta \tag{1}$$

The differentials of the momentum of the roudong rotor and the rotor with the same ratio are $(\omega\delta R)\rho 2\pi rHdr$ and $(\omega r)\rho 2\pi rHdr$ respectively, the ratio between the momentums is equal to

$$\int_0^{(1-\delta)R} (\omega\delta R)\rho 2\pi rHdr \div \int_0^R (wr)\rho 2\pi rHdr$$
$$= \delta(1-\delta)^2 R^3 \div (2/3R^3) = 1.5\delta - 3\delta^2 + 1.5\delta^3 \approx 1.5\delta \tag{2}$$

The differentials of the momentum moment of the roudong rotor and the rotor with the same ratio are $(\omega\delta R)\delta R\rho 2\pi rHdr$ and $(\omega r)r\rho 2\pi rHdr$ respectively, the ratio between the momentum moments is equal to

$$\int_0^{(1-\delta)R} (\omega\delta R)\delta R\rho 2\pi rHdr \div \int_0^R (wr)r\rho 2\pi rHdr$$
$$= \delta^2(1-2\delta+\delta^2)R^4 \div (0.5R^4) = 2\delta^2 - 4\delta^3 + 2\delta^4 \approx 2\delta^2 \tag{3}$$

The differentials of the kinetic energy of the roudong rotor and the rotor with the same ratio are $0.5(\omega\delta R)^2\rho 2\pi rHdr$ and $0.5(\omega r)^2\rho 2\pi rHdr$ respectively, the ratio between the kinetic energies is equal to

$$\int_0^{(1-\delta)R} 0.5(\omega\delta R)^2 \rho 2\pi rHdr \div \int_0^R 0.5(wr)^2 \rho 2\pi rHdr$$
$$= \delta^2(1-2\delta+\delta^2)R^4 \div (0.5R^4) = 2\delta^2 - 4\delta^3 + 2\delta^4 \approx 2\delta^2 \tag{4}$$

The differentials of the end face loss of the roudong rotor and the rotor with the same ratio are $\delta(\omega\delta R)^3 2\pi rdr$ and $\delta(\omega r)^3 2\pi rdr$ respectively, the ratio between the end face losses is equal to

$$\int_0^{(1-\delta)R} \delta(\omega\delta R)^3 \, 2\pi r dr \div \int_0^R (wr)^3 \, 2\pi r dr$$

$$= \delta^3(1 - 2\delta + \delta^2)R^5 \div (0.4R^5) = 2.5\delta^3 - 5\delta^4 + 2.5\delta^5 \approx 2.5\delta^3 \qquad (5)$$

The specific cylindrical surface losses of the roudong rotor and the rotor with the same ratio are $\delta(\omega\delta R)^3$ and $\delta(\omega r)^3$ respectively, the ratio between the specific cylindrical surface losses is equal to

$$\delta(\omega\delta R)^3 \div (\delta(\omega R)^3) = \delta^3 \qquad (6)$$

It can be concluded from the above calculation and deduction that the roudong volume variation has advantage of orders of magnitude in kinetics and dynamics performances. All these performances can be obtained simply and rapidly while judging qualitatively and estimating the dynamic quality of mechanism and the marginal friction loss of fluid. Besides, while designing the roudong volume variation mechanism, these ratios can be used to estimate and adjust the relationship between function and performance.

The practically used roudong rotor in a roudong mechanism and the practically used rotor in a rotary mechanism may be designed with many shapes, and they must be not solid. Therefore, the practical comparison parameters will be different in each case, but the errors will not be big. The above analysis is only on the basis of orders of magnitude, and is only used for evaluation on the basis of orders of magnitude.

The roudong volume variation mechanism may be designed with different motions, constraints and structures etc, including further design of function and performance. All these will be explained in the following description.

A roudong mechanism is included in the roudong volume variation method of the present invention. This mechanism is composed of a roudong rotor and a crankshaft restricting the roudong rotor. The roudong rotor is mounted on an eccentric section of the crankshaft by bearings. The rotation of crankshaft generates a revolution of the roudong rotor, and the roudong rotor rotates simultaneously around an eccentric shaft based on inertia in an inverse direction to that of the revolution at an angular velocity close to or identical with that of the revolution, which forms rotation. Revolution and rotation are combined into the roudong motion.

The roudong mechanism is the core part of a roudong volume variation motion, but its structure is simple. Its basic structure only includes two parts-the roudong rotor and the crankshaft. The roudong rotor is a lightened rotating body with a cylindrical external sealing surface. The axial distance between the eccentric section and the main shaft section is the roudong radius, namely, the radius of revolution.

The roudong rotor is manufactured in a turning process and may be further processed by grinding. When it is used for low temperature medium, it can be injection molded by engineering plastics such as polytetrafluoroethylene or be injection molded by veneering. The crankshaft for large power application is manufactured by cutting after integrally solid forging. The crankshaft for small power application is assembled by an eccentric wheel and a plain shaft with keyway, and the eccentric wheel constitutes the eccentric shaft section. The structure that roudong rotor is connected with the crankshaft by rolling bearings is advantageous for decreasing bearing loss.

A type of roudong volume variation mechanism is included in this roudong volume variation method according to the present invention. This mechanism is composed of a roudong mechanism, a followup partition board and a static roudong cavity containing the roudong rotor. The internal surface of the roudong cavity, the external surface of roudong the rotor and the sealing surface of the followup partition board enclose a variable pressure cavity and a constant-pressure cavity spaced apart from each other.

When running, the roudong rotor roudongs in the roudong cavity to generate a continuous relay bore sweeping or bore pressuring motion so as to change the position and volume of the variable pressure cavity and the constant-pressure cavity periodically. When the main shaft rotates for a round, the volume of the variable pressure cavity increases continuously from zero to a maximum value, or decreases from a maximum value to zero. It forms a period of variable pressure and variable volume, in which the pressure is decreased to release energy from the fluid, or the pressure is increased to energize the fluid. The volume of the constant-pressure cavity decreases correspondingly from a maximum value to zero or increases from zero to a maximum value. Fluid is being pumped out and in through an access beside the partition board under a constant pressure. The effective sectional area of the access correspondingly increases or decreases with the instantaneous variation of flow.

The roudong rotor integrates external forces such as the fluid pressure and self inertial dynamic counterforce in real-time, so as to form a resultant force and a moment on the main shaft. The resultant force is equilibrated by the restraining force of bearings on the main shaft. As a linear factor of the instantaneous shaft power, this moment has an inverse direction to the rotating direction of the main shaft for working machines, and has the same direction as the rotating direction of the main shaft for power generating machines. It has only one zero value point in a rotating period of the main shaft.

The roudong volume variation mechanism mentioned above belongs to a basic design and its shell is static. The followup partition board has many restricting styles in this design, and different restricting styles will generate different kinetic characters and effects.

Another type of roudong volume variation mechanism is included in this roudong volume variation method stated according to the present invention. This mechanism is composed of a roudong mechanism, a followup partition board and a roudong cavity containing the roudong rotor. The internal surface of the roudong cavity, the external surface of roudong the rotor and the sealing surface of the partition board enclose a variable pressure cavity and a constant-pressure cavity isolated from each other. The whole mechanism rotates around a roudong axis in an inverse direction to the direction of revolution with the same angular velocity to that of the revolution. So the crankshaft is static.

The followup partition board of this mechanism is integrally connected rigidly with the roudong cavity and keeps a dynamic equilibrium integrally. The partition board in the roudong rotor is restricted in a cock with a slot, and can be pulled and pushed restrictedly in the cock. The cock can rotate in a limited range. An outlet and an inlet for fluid lie on the surface of the roudong rotor beside the partition board and are connected to a conduction channel. They are connected respectively with a front cavity and a rear cavity located respectively in front of and rearward of the sealing line, which could be the variable pressure cavity and the constant-pressure cavity. The roudong rotor makes a swing roudong in combination with a small amplitude swing with the same period in the rotating coordinate system. The roudong cavity and the partition board rotate around the roudong axis in the static coordinate system, and the roudong rotor and the outlet and the inlet for fluid rotate around the rotation axis in the static coordinate system. The rotation axis is the eccentric section of the static crankshaft. Effluent and influent pipes for fluid pass through the end of the expanded crankshaft. Bearings that restrict the roudong cavity are mounted on the shaft end and their centerlines are coincident with the roudong axis.

In the rotating coordinate system, the roudong rotor roudongs in the roudong cavity to generate a continuous relay bore sweeping or bore pressuring motion so as to change the position and volume of the variable pressure cavity and the constant-pressure cavity periodically. When the main shaft rotates for a round, the volume of the variable pressure cavity increases continuously from zero to a maximum value, or decreases from a maximum value to zero. It forms a period of variable pressure and volume variation, in which the pressure is decreased to release energy from the fluid, or the pressure is increased to energize the fluid. The volume of the constant-pressure cavity decreases correspondingly from a maximum value to zero or increases from zero to a maximum value. Fluid is being pumped out and in under a constant pressure.

The roudong cavity and the rigidly connected partition board integrate the pressure force of fluid and the friction force of mechanism in real-time to form a resultant force and moment acting on the roudong axis. The resultant force is equilibrated by the restraining force of bearings on the roudong cavity. As a linear factor of the instantaneous shaft power, this moment has an inverse direction to the rotating direction of the roudong cavity for working machines, and has the same direction as the rotating direction of the roudong cavity for power generating machines. It has only one zero value point in a rotating period of the main shaft.

The housing (roudong frame of reference) of the roudong volume variation mechanism mentioned above rotates around the roudong axis in the inverse direction to the revolution but with the same angular velocity. So the roudong mechanism makes rotary roudong and the main shaft is static. This kind of mechanism can also be applied extensively, and has special advantage in many applications. The followup partition board and the rotating roudong cavity are connected hermetically as a whole, and they rotate and keep dynamic equilibrium integrally.

In the roudong volume variation method according to the present invention, the volume variation motion, the volume variation mechanism and the practical movements of its particles are separated into correlative motion of different bodies with different tracks at different velocities. The freedom of roudong of the mechanism is actualized by rigid constraints or rigid constraints in combination with flexible constraints. The linkage between the roudong mechanisms and volume variation motions with prodigious speed difference are actualized by the relay mechanism of particle motion of the roudong mechanisms. The roudong volume variation motion constructed as above is planned to have the following new mechanisms and characteristics. These mechanisms and characteristics are incorporated into concrete designs of positive displacement fluid machinery to eliminate or decrease the factors resulting in inner mechanical loss pertinently, in order to correspondingly eliminate the loss or decrease its order of magnitude. The parameters of volume variation motion are designed according to the demanded function in the concrete design, and then the motion parameters of practical particle and mechanism are determined according to the parameters of volume variation motion. When mathematical planning is used to optimize the design, the roudong ratio $\delta$ is used as an optimizing parameter and is contained in an index equation and a constraint inequation to optimize the aimed indexes such as efficiency. The mechanisms and characteristics mentioned above are in the following:

Roudong mechanism roudongs with small amplitude and low velocity. Particle makes circular or elliptical motion with small amplitude and low velocity, and the space occupation of the roudong rotor makes a bore sweeping motion with big magnitude and high velocity. The motion of the space occupation results in the work cavity's volume variation. The motion of particle is the analytical element in connection with the kinetic and dynamic index of the machine. The mechanism is a sequential assemblage of particles and serves as the organizer of motion to determine the calculating way of performance indexes and the boundary conditions thereof.

Self-equilibrium is formed and used for the force system of moving mechanism to eliminate the normal pressure acting on the cylindrical walls of the working cavity and thus eliminate the inner mechanical friction loss. The mechanism friction problem caused by aging and random factors can be eliminated rapidly and automatically by the self-repairing mechanism thereof without taking additional measures. The precondition is that the friction force is at a low order of magnitude and the friction velocity is a roudong velocity at a decreased order of magnitude. Therefore, the friction loss is preset as a small quality at a higher order. Thus it is enough to prevent shutdown and accident of thermal damage.

The preselection range of roudong ratio $\delta$ is determined before mathematical planning to make the actual displacement, velocity, monument and inertial dynamic counterforce of the particle and the roudong rotor decrease by nearly one order of magnitude, to make the monument moment and kinetic energy decrease by nearly two orders of magnitude and to make the inner mechanical loss of end face marginal friction decrease nearly by three orders of magnitude or be substantially eliminated.

The essential feature of the roudong motion in the roudong volume variation method is that the volume variation motion and the practical movement of the particle and the volume variation mechanism are separated into correlative motion of different bodies with different motion tracks at different velocities. The mechanisms and characteristics generated from that are the basis of the operating principle and advantageous performances. The application of this basis can be scheduled in design. Function parameters and performance parameters are designed by classical mathematical planning. Function parameters mainly affect economical efficiency and performance parameters mainly affect efficiency performance and are the economical performances in use. The optimizations of the two kinds of parameters are mainly adjusted by the roudong ratio $\delta$. Only design by mathematical planning is the most economical. The maximum potential of roudong volume variation technology can be developed by planning.

Self-repairing mechanism of wearing is an important soft-design. Mechanism friction loss can be eliminated by utilizing this design and the overhaul life can be extended. It is an innovational function design and also an innovational design method.

The roudong volume variation method according to the present invention includes the quantitative planning and design of the motion states and application characteristics of the volume variation motion, especially of the parameters related to loss, and the design that lubrication and lubricating device are not required in the working cavity with these states, characteristics and parameters.

a. The parameters determining the running state, dynamic quality and loss characteristic of the roudong volume variation are: roudong velocity ratio= $\delta$, roudong momentum ratio $\approx 1.5\delta$, roudong momentum moment ratio $\approx 2\delta^2$, roudong kinetic energy ratio $\approx 2\delta^2$, roudong end face loss ration $\approx 2.5\delta^2$ and roudong specific cylindrical surface loss ratio $\approx \delta^3$.

b. There is no mechanism friction on the cylindrical wall of the working cavity. There is no mechanism friction loss on the wall of the end face for liquid medium. For gas medium, the sealing ring which is possibly provided roudongs at low velocity and the mechanism friction loss is decreased by order of magnitude than that of the machine in existing techniques in the same condition. The estimated mechanism friction loss is about 10%.

c. In the dynamic sealing regions on the end surface and the cylindrical surface of the working cavity, the marginal friction loss is decreased by two orders of magnitude than that of the machine in existing techniques in the same condition. The value estimated is less than 1%.

The content mentioned above explains the main part of the running state and application characteristic of the roudong volume variation method, and especially the quantitative planning and design of parameters including loss and efficiency index. These states and characteristics indicate that the motion type of the roudong volume variation in the present invention can eliminate or largely decrease two kinds of inner mechanical losses of displacement fluid machinery, i.e. mechanism friction and marginal friction. Therefore, the efficiency bottleneck is broken through.

By utilizing the states and characteristics mentioned above, a brand-new technical proposition is presented in the present invention, which is that lubrication and lubrication device are not used in working cavity. The design without lubrication can decrease cost of manufacture and operation. The main effect is that environmental pollution can be eliminated. As mentioned in the background analysis, pollution of internal combustion engine results from the rigorous demand for lubrication. Free from lubrication is a function of the present invention and is also a design. This function or design has the key value for pollution decreasing of internal combustion engine.

The first roudong volume variation mechanism included in the roudong volume variation method according to the present invention also includes a kind of derivative structure. In this kind of structure, the followup partition board is restricted in a linear translation slot. A spring or a gas-spring is provided at the external end of the partition board, which applies a constant urging force or an urging force varying with the displacement on the partition board so as to press the partition board on the cylindrical surface of the roudong rotor to form sealing. Static friction is formed by the larger one of the friction force between the roudong rotor and the roudong cavity and the friction force between the roudong rotor and the followup partition board. The algebraic sum of the moments applied to the rotation axis of the roudong rotor by the two frictions is zero or an alternating function. The roudong rotor makes rolling roudong motion or swing roudong motion.

The housing of the roudong volume variation mechanism mentioned above is static. The followup partition board makes a linear translation while being connected to and sealed with the roudong rotor all the time. The followup partition board can translate in a guide slot or a guide slot provided with balls. Dynamic seals are provided at the outlet and inlet of the guide slot and the roudong cavity. The followup partition board is a lightened structure to decrease self inertial force and increase response velocity. Flexible constraints provide a degree of freedom for the roudong motor to allow swinging of an alternating force. This provides simple constraints and helps increasing efficiency. For liquid medium, the stress of roudong rotor is more complex. The friction force moment of liquid has an inverse direction to that of the friction force moment of the roudong cavity and the component of alternating force of the partition board is increased.

The first roudong volume variation mechanism included in the roudong volume variation method according to the present invention also includes another derivative structure. In this kind of structure, the followup partition board is restricted in a linear translation slot. A spring or a gas-spring is provided at the external end of the partition board, which applies a constant urging force or an urging force varying with the displacement on the partition board so as to press the partition board on the cylindrical surface of the roudong rotor to form sealing. The roudong rotor is pressed elastically on a flexible film of the cavity wall. In a steady state, the friction force moment acting on the rotation axis of the roudong rotor is equal to the dynamic friction moment of the roudong rotor and the followup partition board adaptively. Therefore, the self-rotation of the roudong rotor is stacked on a rotation with low velocity and positive direction, forming rolling roudong. A static sealing of rolling type is provided between the roudong rotor and the cavity wall.

The housing of the roudong volume variation mechanism mentioned above is static and the followup partition board still makes a linear translation. The difference is that the action of the flexible film of the roudong cavity will cause rolling roudong of roudong rotors as is the case for gas medium.

The first roudong volume variation mechanism included in the roudong volume variation method according to the present invention also includes another recombined structure. In this structure, the followup partition board and the roudong rotor are connected rigidly and hermetically as a whole. The intersection of the cylindrical surface of the roudong rotor and the followup partition board may be chamfered into a smooth curved transition surface with a small local resistance coefficient. The partition board is restricted in a cock provided with a slot outside of the roudong rotor, and it can be pulled and pushed restrictedly in the cock. The cock can rotate in a limited range. The roudong rotor makes swing roudong in operation.

The housing of the roudong volume variation mechanism mentioned above is still static. However, the roudong rotor is restricted by another rigid constraint beside the crankshaft in the structure wherein the followup partition board and the roudong rotor are connected rigidly and the partition board is restricted to a cock outside of the cavity. The rigid constraint does not destroy the roudong degree of freedom of the roudong rotor. However, the roudong rotor is restricted to swing roudong. Swing roudong is good for efficiency increase for liquid medium. The disadvantage is that the dynamic force will be increased at a high velocity and it need be noticed to decrease the inertia or control the rotating speed at the moment.

Various displacement fluid machines can be designed according to the roudong motion type, roudong mechanism, roudong volume variation mechanism and its various derivative types of the roudong volume variation method according to the present invention. These machines are characterized in including roudong volume variation mechanisms and performing the main function thereof by said mechanisms.

When these machines run, the roudong motion of roudong mechanism causes the rotation of the space occupation of the roudong rotor and the periodic variation and conversion of the variable pressure cavity and the constant-pressure cavity. The running types of the roudong fluid machinery are separately called pump type and motor type according to whether the roudong rotor drives the fluid or the fluid drives the roudong rotor. Correspondingly, the variable pressure cavity is in front of or at the back of the roudong cavity sealing line and the constant-pressure cavity is at the back of or in front of the roudong cavity sealing line, depending completely on the running type. There is no difference for mechanical structure. This is the characteristic of the present invention, and the fluid machinery of roudong volume variation thus has complete reversibility including reversibility of function and reversibility of flow direction and rotation direction. Motion, status parameters and dynamic characteristic of the roudong fluid machine are relative with the running type because of said reversibility, as can not be described in a single way. The conjunction "alternatively" is used in the specification where multiple alternatives are available.

The generation rules of the force and torque between the mechanism and the fluid in roudong volume variation motion are now briefly explained, on which the qualitative analysis of the working principle of the invention and its load characteristics are based.

When the input torque of the main shaft has the same direction with the rotation, the torque is defined as a positive torque. Obviously, it is a pump when the input torque is positive. Its variable pressure cavity is located in front of the sealing line of the roudong cavity and the pressure in the cavity is higher than the rearward constant-pressure cavity. When the input torque of the main shaft has a converse direction to the rotation, the torque is a negative torque. It is a motor when the input torque is negative. The variable pressure cavity is located at the rearward of the sealing line of the roudong cavity and the pressure in the cavity is higher than the front constant-pressure cavity. The differential pressure between the two cavities makes that the vector integral of the fluid pressure on the cylindrical surface of the roudong rotor is not equal to zero, but generates a force which is directed to self-rotation axis and rotates forward at a half of angular velocity, and the value of the force is in direct ratio to the differential pressure and the area of the inner chord face in the variable pressure cavity. This force generates a torque on the roudong axis (i.e. main shaft), which is in direct ratio to the force and is in direct ratio to the sine of a half of the inner central angle in the variable pressure cavity. According to the differences mentioned above, this torque is a counteraction torque against the load torque and its value is negative. Otherwise, it is a driving torque and its value is positive. Because there is sine function factor in the torque and its angular velocity is halved, the period in $0\sim2\pi$ results in a torque function with a semi wave period in$0\sim\pi$. Semi wave period is converted to whole period because of periodic conversion of the variable pressure cavity and the constant-pressure cavity.

For incompressible fluid, the pressure of the variable pressure cavity makes a step change at the boundary of the time window and the torque function created is a simple harmonic function of translation type with dimidiate frequency division. For compressible fluid, the process of volume variation in the variable pressure cavity is generally a multivariate thermal process and the special case of adiabatic or isothermal process is also included. Fluid pressure varies exponentially in a continuous manner along with the process of volume variation. The time-varying rule will become more complex after the rule of volume variation in the cavity is introduced. Accordingly, the torque function becomes more complex and is not a simple harmonic function any more. However, the periodicity and the length of period time will not be affected.

Compared with reciprocating machinery, not only the mechanism friction loss on wall is eliminated, but also the ratio of instantaneous loss and average loss of shafting are halved because of the doubled period. Because the area of inner bastard surface in the variable pressure cavity also includes the sine factor of semi inner radius angular, the torque function includes square factor of this sine of a semi inner central angle and its sign does not change. Compared with reciprocating machinery, the characteristic of constant sign of the torque can considerably improve the stress status of the shaft and bearings, and the peak value of stress and its change rate are decreased considerably. This type of roudong not only has the advantage in mechanism dynamic characteristic that decreases the order of magnitude of momentum and momentum moment, but also has the advantage in load force and torque characteristic. Both advantages are good for decreasing the requirement for strength of the crankshaft. So the crankshaft with smaller size can be used. Moreover, the loss of shafting is further reduced.

In the analysis of roudong, the vector surface integral of fluid pressure on the surface of the roudong rotor is the basis of analysis of work generation of the roudong mechanism. That is much more complex than a reciprocating air cylinder. There is no work generation process in the constant-pressure cavity. The problem of hydrokinetics can be ignored if the channel at the outlet and the inlet is suitably designed. Therefore, the pressure is regarded as equal everywhere.

The present invention has especially active effects that are shown prominently in many aspects. The effects directly generated from roudong volume variation are analyzed below, including:

Firstly, it has considerable advantage in connection with mechanism friction, hydraulic loss of flow field, etc, because of the self-equilibrium of mechanism force system and the rotary structure of flow field, which is enough to overcome the defects of reciprocating translation.

Secondly, compared with rotary type of volume variation, the linear velocity of the roudong rotor in the roudong cavity is decreased by one order of magnitude, the momentum moment and kinetic energy are decreased by two orders of magnitude, and the marginal friction loss is decreased by three orders of magnitude (decreasing more than 99 %). Therefore, the present invention has advantage in connection with marginal friction loss over both reciprocating motion and rotary motion.

Thirdly, the generation force of roudong machinery rotates at a halved angular velocity such that the length of period is doubled and the utilization ratio of time is increased to 100%. The average torque is big and the instantaneous torque is small. Therefore, the index of power density and the index of amortization ratio of loss are superior one time to reciprocating machines.

The other characteristic and relative merits in the roudong volume variation method are as follows.

Compared with reciprocating translation type of volume variation, it does not have a piston, a connecting rod and valve mechanisms at the outlet and the inlet, which simplifies the structure considerably. Its critical advantage is that the normal pressure and friction loss are eliminated essentially. The local channel characteristic at the outlet and the inlet for fluid is improved by many times, and the throttling loss at the inlet is very small.

Compared with rotary impeller mechanism of non-displacement type, the present invention has the advantages of reducing the hydraulic loss by orders of magnitude and being suitable for low and especially low velocity because the output pressure is independent of velocity.

When it is applied to internal combustion engines, air inhalation, compression and combustion can be separated completely. Local and global optimizations can be actualized fully. In addition, it has the advantage of concurrently combining the process of expansion and applying work with the process of air exhaustion and the advantage of heat absorption and pressurization with a constant volume. The power density can be doubled. The efficiency may also be nearly doubled.

When it is used as a pump and a motor, since it works relying on static pressure, it can run independently from rotating speed and fluid speed. The characteristic of working at low velocity makes the non-channel marginal friction and the channel hydraulic loss decrease by order of magnitude. It has unprecedented wide adaptability to environment and work conditions.

However, pulsation still exists because the work generation force and torque of the roudong volume variation method still has a zero value point and the basic frequency of pulsation is equal to the rotation frequency. The change rate of volume and flow both also have pulsation with the same frequency. Two structures complementary with each other must be used to eliminate pulsation when it runs at a high velocity. In addition, though the momentum moment is already decreased by one order of magnitude, the dynamic load of the mechanism is increased when it runs at a high velocity and the design and experiment of dynamic equilibrium are still demanded.

The advantageous effects of the present invention are not limited to the above mentioned effects. Some special features and effects of the present invention are particularly advantageous in that the improvement of certain functions and performances can produce new functions and performances which are extremely valuable and can be applied in some new wide areas, as is the case where the restrictions of functions or performances of existing techniques are broken through. For example, positive displacement fluid machinery can not be used economically because of its low efficiency which makes its constant-flow characteristic non-significant. In term of practice, the output pressure of product is set with a constant value, as existing reciprocating air compressor. This phenomenon is called efficiency durance, which especially means that good characteristic can not be utilized because of low efficiency and appears valueless. The present invention increases the efficiency of positive displacement fluid machinery considerably and achieves the value of constant-flow characteristic, which is then used to design such characteristics as pressure adaptability and medium phase versatility. Though the efficiency changes along with the changes of pressure and medium phase, this change is small and acceptable. The improved efficiency enables designs with versatility and creates a new prospect and so on. The characteristics and functional effects of the present invention are listed in Table 1 after induction.

Table 1 Features, characteristics, functions & effect of the roudong volume variation method

| No. | Features & Characteristics | Functions & Effects |
|---|---|---|
| 1 | Roudong volume variation motion | The roudong rotor is roudonging within a small range, the particle is doing circular movement at a low speed, and the space occupation is turning at a high speed within a large range |
| 2 | Space occupation is turning at a high speed within a relatively large range | Meeting the economy requirements of function, designed in parallel with turning mechanism |
| 3 | Roudong speed = roudong radius×angular velocity | Small roudong radius, low roudong speed, roudong ratio$\delta \approx 0.1$, being the base of reducing loss and increasing efficiency |
| 4 | Roudong rotor roudonging within a small range, particle doing circular movement at a low speed | Roudong speed, roudong momentum, roudong momentum moment and roudong kinetic energy reduced in orders of magnitude |
| 5 | Particle movement with mechanism of continuous relay | Improving function and speed, amplifying multiple = reciprocal roudong ratio $\delta^{-1} \approx 10$ |
| 6 | Small roudong momentum moment, reduced by 98 % | Good dynamic features, small loss, small difficulty of dynamic equilibrium, optimized order of magnitude |

(continued)

| No. | Features & Characteristics | Functions & Effects |
|---|---|---|
| 7 | Small roudong speed, reduced by 90 % | Friction loss between surface and cylinder reduced by over 99 % or almost eliminated |
| 8 | roudong mechanism composed of a crankshaft and a roudong rotor | Simple and cheap roudong rotor in place of link, cock, bolt, etc. |
| 9 | cylindrical weight-reduced roudong rotor | Simple manufacturing process, low cost, small turning inertia, good dynamic quality |
| 10 | the roudong cavity being a cylindrical volume cavity | Simple manufacturing process, low cost, reasonable structure, high pressure resistance, good running characteristics |
| 11 | the followup partition board being flat a component with 3 constraints | A somewhat complex constraint structure, small friction loss, moderate overall complexity and cost |
| 12 | Self-equilibrium of forces in the roudong mechanism | Eliminating the normal force of roudong cavity wall, no friction loss in the volume cavity, self-repair mechanism |
| 13 | No friction loss in volume cavity, | Breaking through the bottleneck of linear translation inner mechanical efficiency, forming the precondition of eliminating lubrication |
| 14 | Self-repair mechanism of friction caused by aging and deformation | Friction loss being of the order of magnitude of $10^{-3}$ and being instantaneous, no risk of thermal loss and shutdown |
| 15 | Complementarity and interchangeability of the variable-pressure cavity and the constant-pressure cavity | Working in parallel, 100% space and time utilization ratio, complete reversibility |
| 16 | Working in parallel, 100 % space and time utilization ratio | Compared with reciprocating type, time utilization, space utilization and power density doubled, loss reduced by a half |
| 17 | Loss of the end face of the cylinder reduced by over 99% | Breaking through the bottleneck of margin friction type inner mechanical efficiency of rotation volume variation method |
| 18 | Free from lubrication in the working volume cavity | Low cost of manufacture and use, increase cavity temperature and efficiency and reduce pollution when used in an internal combustion engine |
| 19 | Adaptive variable section of inlet and outlet without turbulent resistance | Reducing resistance coefficient of certain parts, increasing hydraulic efficiency, speeding up working flow, reducing noises |
| 20 | The pressure increase characteristic at the sealing line of the roudong cavity | Power reduction and feedback mechanism of leakage flow, mitigating the requirements of volumetric efficiency and sealing. |
| 21 | Tangent flow in the flowing area of the volume cavity | Good cavity flowing characteristics, increased hydraulic efficiency and working flow speed |
| 22 | Complete reversibility of functions | Bidirectional use of non thermal power-energy conversion mechanism which doubles the use value of machinery |
| 23 | Adaptability of pressure power | Adaptable versatility of pressure and power within pressure strength, shaft strength, displacement specification |

(continued)

| No. | Features & Characteristics | Functions & Effects |
|---|---|---|
| 24 | Medium phase versatility for non-prohibited chemicals | Two-phase flow versatility of gas, liquid and gas &liquid within pressure strength, shaft strength, displacement specification |

With reference to Table 1, item 1 to item 7 are summary of the features and effects of the roudong volume variation movement; item 8 to item 12 are summary of the features and effects of the roudong volume variation mechanism; item 13 to item 24 are summary of the features and effects of the volume fluid machinery that adopts roudong volume variation method.

Item 22 describes the features of function reversibility and its positive effect. Function reversibility is an important part for extending the generalization of fluid machinery and also is relatively easy to realize. Few products in existing techniques possess the reversibility, but in most cases, function reversibility is interdicted by some technical links. The present invention aims at generalization and completeness and accordingly acquires these precious characteristics.

Positive displacement fluid machinery has the characteristic of constant flow, but this characteristic is always disposed as gray characteristic in existing techniques. The present invention utilizes the potential of this characteristic and is combined with many new characteristics of the roudong volume variation method, and can be applied to a kind of technical design with positive effect, forming two characters of items 23 and 24 which are two kinds of versatility, i.e. pressure power versatility and medium phase versatility. These two versatilities have positive effects such as simplified type and series simplification, improved use value and utilization rate and reduced total cost of ownership.

We can get an overall view from the summarization of positive effects of the present invention from table 1. It will need more words to explain the importance of some characters and effects. Especially, the characters and effects which can be actualized only by introducing actual design and have great value should be dissertated in detail. The following is a complementary explanation which still uses the reference numbers in table 1 to explain the effects of each important aspect of the present invention.

Item 1 relates to roudong volume variation motion, which is the hard core of the present invention. The motion separation and association of small roudong of the roudong rotor, low-speed motion of the particle and high-speed rotation of the space occupation is a highly innovative motion design which has the effect that can reduce loss by orders of magnitude and produces the third motion type of fluid machinery.

Item 3 relates to quantitative determination of the range of roudong speed. The definition and calculation of roudong speed and roudong ratio and the demonstration of designed usage range of roudong speed establishes the magnitude and value basis of loss-reduction and efficiency-increase of the present invention. Therefore, it is an important theoretical aspect of the present invention. For brevity, the details of the process of proof are omitted.

Item 4 relates to the analysis to the roudong motion of the roudong rotor and the motion of its particle, which produces the conceptions of roudong speed, roudong momentum, roudong momentum moment, roudong kinetic energy etc. They are basic conceptions of roudong mechanics which are very useful for analysis of kinematics and dynamics of roudong volume variation motion, and they are very compendious. By using these conceptions, we can rapidly make quick qualitative and quantitative judgment to the loss-reduction effect and that is very important in understanding the present invention.

Item 5 relates to the design for continuous relay mechanism of particle motion, which is a metaphor usage of the visual understanding to wave and modulation theory. That is the technical line and the key of technology to actualize the separation of functional motion and actual particle motion. The loss is a power order function or a polynomial function of roudong ratio, as can be derived from the known relationship between friction loss and speed. All the positive effects of the present invention come from the relay mechanism of particle motion.

Item 7 applies the conception of roudong speed and roudong ratio to the analysis and estimation of margin friction, which can judge and prove that the present invention has huge advantages in connection with marginal friction loss over existing rotation volume variation motion. The marginal friction loss can be reduced by two to three orders of magnitude, which is enough to prove the effect advantages of the present invention over rotation volume variation motion.

Item 12 relates to design and utilize of the force system self-equilibrium mechanism of the roudong mechanism, which is the key to eradicate the normal force of the roudong cavity wall and the mechanism friction loss. It leads to a breakthrough of bottleneck of mechanism friction type inner mechanical loss of reciprocating volume variation motion and forms a necessary condition for self-repair mechanism.

As described in item 13, there is no mechanism friction loss in the cavity, which is an effect of the item 12. As stated above, it leads to the breakthrough of the reciprocating inner mechanical efficiency bottleneck. It forms a precondition of non-lubrication, which generates a new technical prospect.

Item 14 relates to the self-repair mechanism for shape and position error generated by aging distortion, which is a design based on that friction loss ratio has been reduced to the order of magnitude of $10^{-3}$ and it is instantaneous. Accordingly, the risk of shutdown and thermal-loss failure can be eliminated and the feasibility can be confirmed. Self-repair mechanism is a very valuable innovation. In existing techniques, machines need to be overhauled when problems such as friction, leakage and so on are caused by distortion, wearing and aging. The cost of the overhaul is equivalent to one half of the price of a new product. If a machine has the self-repairing function, it would be like having a self-health function which can prolong its life.

Wearing and distortion increase step in step, so friction is always in low orders of magnitude. Self-repair mechanism for self-wear is a proper design which uses the characteristic stated above in combination with the presupposition of low-speed motion and leakage pressure enlarging characteristic and its lax sealing requirement. The effect is that when friction loss occurs, it can be eliminated by itself in short time non-consciously without the risk of shutdown or thermal-loss failure. If the present invention is applied to a roudong engine and a roudong transmission system of a motorcar or a train, the average MTBF (mean time between failure) and overhaul period can be prolonged several times and the economic benefits is so much that it is countless. The manufacturing cost of the mechanism of the present invention can be reduced because of the reduction of accuracy requirement by using this self-repair mechanism.

As described in item 15, the variable-pressure cavity and the constant-pressure cavity can complement, interchange with each other and work in parallel, which is the special design of the present invention. In the invention, the position of the variable-pressure cavity and the constant-pressure cavity is uncertain and is dependent on application, i.e. the interchangeability is under consideration. Their complementary relationship and interchangeability produce very good cooperation which makes space and time utilization rate reach 100% and then leads to complete application reversibility.

Item 16 relates to the effect that time and space utilization rate is 100% as a result of the characteristic that the variable-pressure cavity and the constant-pressure cavity work in parallel, and that makes great contribution to efficiency increase. The reason why the efficiency of reciprocating machine is very low is that its time and space utilization rate is very low. For example, in the 4 strokes of an internal combustion engine, only one stroke makes power and average power-done power of total time is the average power of power-done stroke divided by four. So power density is divided by four too. There is loss in every stroke. The sum of the losses in the four stroke losses are added to one power-done stroke to calculate the efficiency which makes loss rate is multiplied by four. This arithmetic comes from the definition of the related parameters and is called apportionment. Compared with reciprocating type, the effects of 100% time and space utilization rate in the present invention are that time utilization rate, space utilization rate and power density are doubled, which are twice as those of reciprocating type, and loss apportionment rate is reduced to 50%. Compared with existing 4-stroke reciprocating type and considering the space requirement of the present invention for parallel compressing, in the case of an internal combustion engine, the effects of 100% time and space utilization rate are that time utilization rate is increased by three times which is four times as that of reciprocating type, space utilization and power density is doubled which is twice as that of reciprocating type and loss apportionment rate is reduced to 50%.

As described in item 17, the marginal friction loss is reduced by more than 99%, which means the bottleneck of marginal friction type internal mechanical efficiency of rotation volume variation fluid machinery can be broken through. The mechanical loss of the present invention is mainly bearing loss, and the efficiency can be more than 96%. So the mechanical efficiency of the present invention should be more than 95%. For rotation volume variation method in existing techniques, the mechanical efficiency is seldom over 80% and for gear meshing type, the mechanical efficiency is generally no more than 60%.

As described in item 18, the working cavity is free from lubrication, which can reduce manufacturing and use cost. An more important effect is that in the case of internal combustion engine, it does not need to care lubricating oil which can increase cavity wall temperature (not cooling source temperature of Karnot circle) above exhausting temperature (real cooling source temperature of Karnot circle). There is no need for water cooling system. The radiation loss in the cavity will be decreased and the boundary layer combustion will be more sufficient. These are all good for increasing efficiency. The environment protecting effect is that carbon monoxide will be greatly reduced and dark-color soot component such as lubricating oil fog and its gelatin and so on will no longer appear. So pollution will be decreased considerably.

The present invention can make further great contribution in the field of internal combustion engine pollution reduction since the efficiency can be considerably increased. The increase of efficiency can reduce green-house gas emission in inverse proportion thereto, so the effect is significant.

Item 22 relates to complete reversibility of functions which is paid special attention to in general project of this invention. Its positive effect is that all non-thermal power-energy conversion machines can be used in two ways, which increases use value of machine several times.

Item 23 relates to pressure adaptability, which is deducted from the constant-flow characteristic of positive displacement fluid machinery. This characteristic is recommended and applied to technical designs so as to bring great economical benefits for customers. The maximum pressure strength, shaft strength and shaft system strength can be determined during type and series planning and product designing and can be easily used as a nominal index. Customers can schedule within the range of this index and determine pressure or power as desired without decreasing the efficiency, by using constant-flow characteristic. That's what existing technology doesn't have.

Item 24 relates to actualizing versatility of fluid in different phases within the pressure and shaft strength, which is a popularized application of pressure and power adaptability. Therefore, the use value of equipment increases and the total cost of ownership decreases. That is a popular technology for both companies and individual users. It will be a very valuable possession if a pump can not only pump water, but also work as a compressor and a two-phase flow vacuum pump and so on. However, that is not allowed in existing techniques. For example, when pumping air by vacuum pump, the pump could be burnt if air contains water.

Each Item of 22-24 is one aspect of the versatility of the roudong volume variation machinery. That is an internal characteristic, a possibility. Before exploited, this characteristic is just known, utilized and performed by experts, and is impossible to be the product characteristic that can be utilized by all users. The third object of the present invention is to define and design the versatility of fluid machinery, i.e. makes use of the above-mentioned internal characteristic. As the task of application design for the method of the present invention, particular requirement and applied method will be explained later.

The effect on the hydraulic efficiency improvement of the present invention is also briefly summarized in items 19-21 of Table 1. Hydraulic efficiency is a multiply-factor of the general efficiency of fluid machinery. In non positive displacement fluid machinery, hydraulic efficiency is a crucial factor. In positive displacement fluid machinery, hydraulic efficiency is also an important analysis factor for liquid medium, especially for high viscosity liquid medium.

Linear translational volume variation motion and its structure in existing techniques are designed with very bad hydraulic characteristics. The main hydraulic loss is produced at the inlet and outlet which are frequently opened and closed. The channels with an abrupt section expansion at the inlet and outlet have a large local resistance coefficient and the dynamic changes during opening and closing process are also the factors to increase losses. Besides, backdraft motion leads to frequent changes of flow speed and direction, which necessarily causes the loss of moment and kinetic energy. Because of the large hydraulic loss, linear translational motion is generally not suitable for high viscosity or incompressible liquid work medium. Liquid is usually used with rotary volume variation machinery. Among the three rotary volume variation types, gear mashing type machinery causes the largest hydraulic loss, followed by screw type. Eccentric rotor rotation type should have the best effect.

The present invention has obvious advantage of increasing hydraulic efficiency. Compared with rotary type, the flow field design of inlet and outlet in the present invention can eliminate the loss caused by local force. Its adaptive variable section mechanism can reduce local resistance coefficient along with the increase of instantaneous flow, which decreases hydraulic loss of inlet and outlet regions considerably. Fluid flows in a tangential direction in the cavity, so it has good direction continuity. Furthermore, except in the case of roll roudong, the tangential speed of roudong rotor is always positive and its tangential speed is higher than the roudong speed in 90 degree-270 degree central angle regions of the swing roudong. Those are all good for decreasing relative speed and reduce hydraulic loss.

A special advantage mechanism for roudong volume variation motion is the energy feedback of leakage of roudong cavity sealing line and its low sensitivity. It cannot be expressed by the conception of conventional volumetric efficiency. Though leakage affects volumetric efficiency, a considerable portion of the pressure energy lost during leakage process can be recycled by feedback. The recycle mechanism is that the potential energy of leakage flow is translated into kinetic energy with high efficiency during the speed-decreasing and pressure-increasing process before leakage, and the kinetic energy which is not lost is translated into pressure potential energy by diversion pressure-increasing mechanism after leakage and acts on the roudong rotor. In power generation machines, this kind of afresh translated potential energy can produce a pressure increment at the front of the constant-pressure cavity when it is sucking fluid and the pressure increment acts on the roudong rotor in its dynamic region to decrease shaft power consumption; In dynamical machinery, said potential energy can produce pressure decrease at the back of the constant-pressure cavity when it is discharging fluid and the pressure decrease acts on the roudong rotor in its dynamic region to increase shaft power input. This kind of mechanism mitigates the sealing requirement of the roudong cavity sealing line and makes the volumetric efficiency no longer be a linear element of the general efficiency. Its effect power is less than 1 and the corresponding efficiency formula should be corrected.

For positive displacement machinery of roudong volume variation method, its rotating speed might be very low in some applications and its pressure might be very high for some applications. Especially for some new developed applications, the characteristic of low speed and high pressure are prominent. At this time, volumetric efficiency becomes a crucial factor. The design of the present invention is to increase volumetric efficiency by adopting low-speed dynamic sealing or static sealing so as to obtain a satisfaction volumetric efficiency. Static sealing is actualized by roll roudong in which the roudong rotor rolls on a flexible film of the cavity to form static sealing. Roll roudong is very suitable for gas medium with high differential pressure.

5. Brief Description of the Drawings

The following are simple explanations for roudong volume variation method of this invention with attached figures. The attached figures also include 3 designs which can be regarded as specific applications without dimensions. The equations for calculating the displacement, flow rate, moment and power are also given out correspondingly.

Figure 1 is a schematic view showing how a roudong motion is obtained by a combination of revolution and rotation.
Figure 2 is a schematic view showing the relationship between a particle motion track of rigid body and a revolution track.
Figure 3 is an axial projection drawing.
Figure 4 is an axial projection drawing of high-speed volume variation mechanism with offset phase and linked in parallel to eliminate pulse.
Figure 5 is an axial projection drawing of a rotary roudong volume variation mechanism whose roudong cavity rotates.

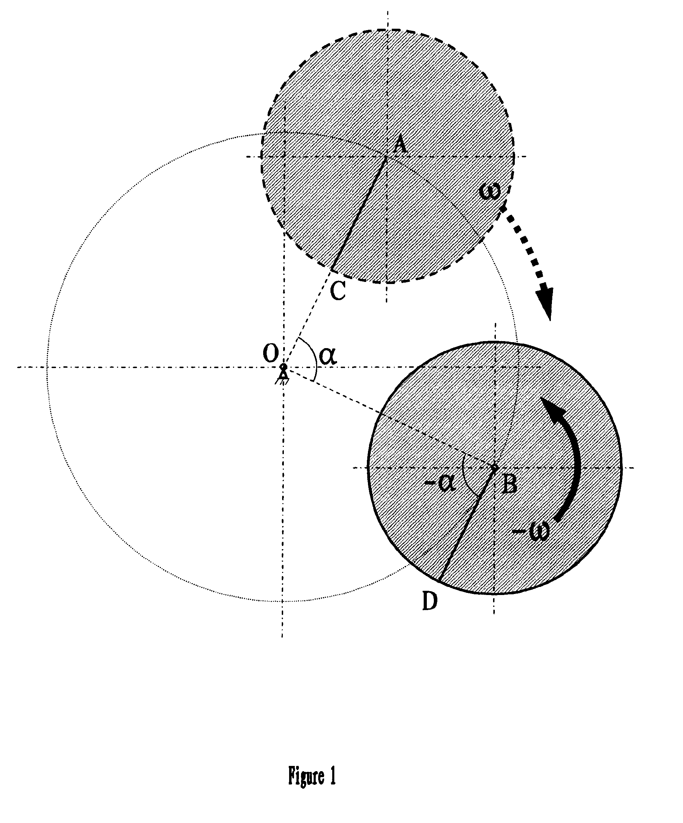

Referring to figure 1, on the motion orbit plane, a cylindrical rigid body revolves around an axis O with an angular speed $\omega$; meanwhile, it rotates around the axis of itself in a counterclockwise direction with an angular speed $-\omega$. As defined, the rigid body performs a pure roudong process. As shown in the figure, when the rotation axis of the rigid body is located at position A, a radial line segment AC of the rigid body points to the revolution center O. When the rigid body revolves by an angle $\alpha$, the rotation axis reaches position B, and at the same time, the rotation motion of rigid body rotates by an angle $-\alpha$. Therefore, the radial line segment AC will be at the position of BD. BD is on the same plane with AC and its extending line OA. BD, OA and their common intersection line OB form, a pair of internal alternate angle with the same absolute value. Therefore, BD is in parallel with and in the same direction with AC. This simple feature is very important which proves that the rigid body is in translational motion state and any line segment on the rigid body moves in parallel with each other during a periodic moving cycle. That is a sufficient and necessary condition to generate pure roudong.

As seen from figure 1, on the plane comprising the revolution axis and the rotation axis, because of the rotation with an angular speed $-\omega$, the linear velocity of the roudong rigid body particle which is at a instance from the roudong center is counteracted by an algebra quantum which is in direct ratio to $\omega$ and in direct ratio to the distance to the rotation axis. If the distance between the particle and the rotation axis increases relatively, the linear velocity of the particle motion will decrease linearly. This feature forms the roudong speed-reduction mechanism of the present invention. Roudong speed-reduction mechanism has dynamic statics advantages in the mechanism motion of general machinery. When used to construct the mechanism motion of fluid machinery, it will have further multi-advantages in hydrokinetics.

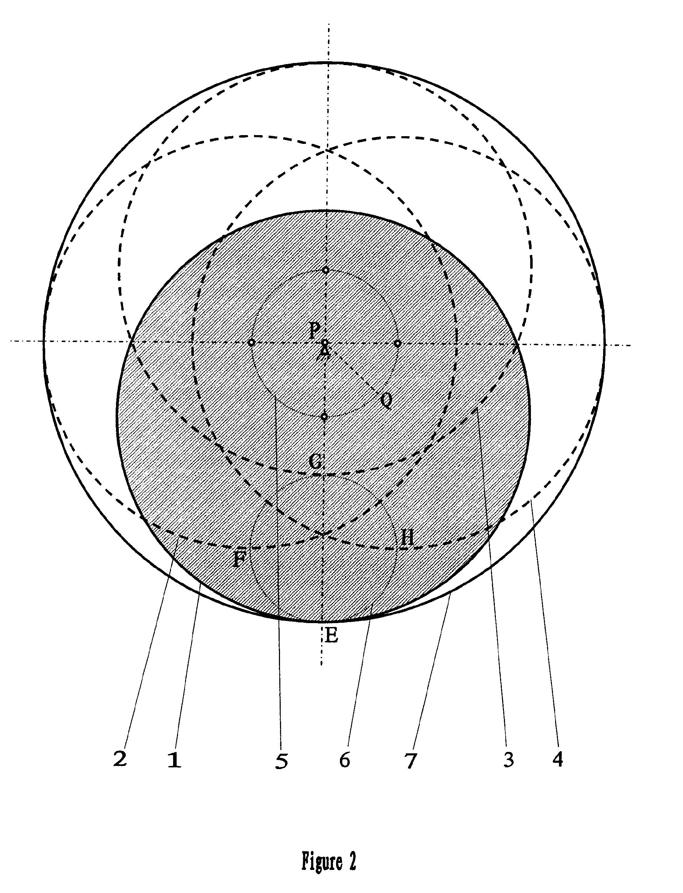

Referring to figure 2, on the orbit plane, the relationship between the motion track of a roudong cylinder particle and the revolution track of its rotation axis is shown. In the figure, the shaded circle 1 is the projected circle of the cylinder surface seen from the start viewing position of the cylinder and circle 2, 3, 4 are the projected circles of the cylinder surface when the roudong central angle turns $\pi/2$, $\pi$ and $3\pi/2$, respectively. 5 is a circle of the revolution motion track of the cylinder whose center is the roudong center P, and PQ is the roudong radius. Circle 6 is the motion track of a particle E on the roudong body cylinder surface during roudong. The point E at which circle 6 is tangent with circle 1 is the start viewing position of the particle. The intersection points F, H and the tangent point G of circle 6 with circle 2, 3, 4 are corresponding to the positions of particle E when the roudong central angle turns $\pi/2$, $\pi$ and $3\pi/2$. It is easy to be proved in geometry according to roudong features. It also can be proved that circle 6 is coincident with the revolution track 5. Actually, the motion track of any particle on pure roudong rigid body is a circle. The motion of the particle is synchronous with the revolution at the same linear velocity with the revolution, which linear velocity equals the product of the roudong radius and the revolution angular speed. This feature can be used to determine the motion track and the instantaneous value of the linear velocity of particle on the roudong rigid body. The instantaneous value of the linear velocity is constituted by the magnitude and direction of the velocity vector.

Circle 7 in the figure is the envelope curve of the motion track of the cylinder, which envelopes all possible projections of occupation space of the cylinder. And it encompasses all the occupation space of the roudong cylinder. The sum of occupation space of the roudong cylinder is still a cylinder, which is another important feature of roudong and is a geometrical base of roudong volume variation. The present invention is just utilizing the envelope circle to construct roudong cavity. As seen from the figure, the radius of the envelope circle 7 equals the sum of the roudong radius and the roudong cylinder radius. The radius of the envelope circle is designated as R, a roudong ratio $\delta$ can be obtained by normalizing roudong radius according to normalization unit R. Roudong ratio is the most important parameter in roudong design and roudong analysis.

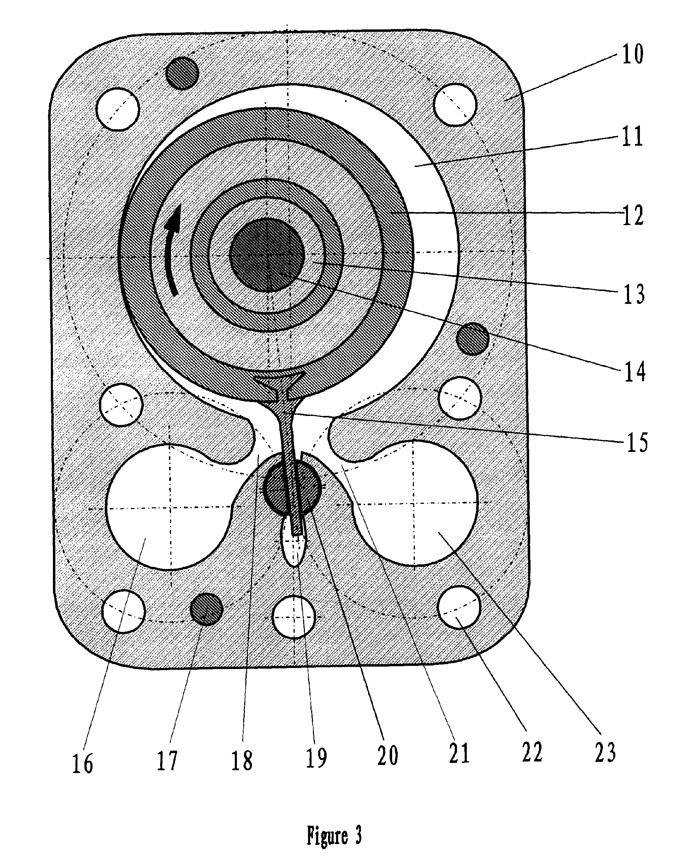

Figure 3 shows a kind of volume variation mechanism of the present invention and it is an example of a design that can be used as an actual application. Referring to figure 3, a roudong cavity body is designated at 10. It is a part in the form of a flat plate with planar upper and lower surfaces, and the other inner and outer surfaces thereof are cylindrical surfaces which is formed by boring-milling or WEDM and by a die-shaping procedure for batch production. A working cavity is designated at 11, which is separated into a variable-pressure cavity and a constant-pressure cavity by a roudong cavity sealing line and a partition board. A roudong rotor is designated at 12. A roudong rotor bearing ring is designated at 13. The projection of the eccentric part of crank is designated at 14. An inlet of fluid is designated at 18. The motion cavity for the partition board is designated at 19. A cock is designated at 20. An outlet of fluid is designated at 21. Seven screw holes are designated at 22. A connecting and turning cavity of output pipe of fluid is designated at 23.

The volume variation mechanism shown in this figure is mainly composed of the roudong cavity 10 and a swing roudong mechanism. The swing roudong mechanism includes a weight-reduced roudong rotor 12 and a crank (an eccentric part is shown in this figure) 14, between which a bearing 13 is provided. The roudong rotor is rigidly connected to a followup partition board 15. The connection process in the figure is to press the board into a dovetail in axial direction (it cannot use welder process). The followup partition board is restricted into the cock 20 and can be pushed or pulled and rotate to a limited extent. A surface-symmetric ellipse-like cylinder cavity 19 contains the extending portion while the partition board being pushed or pulled and rotating in a limited extent. The motion speed and friction loss of the cock is very small and its swing roudong acceleration can be provided by a crank inertia force and a fluid pressure by adjusting the position of the gravity centers of the roudong rotor and the partition board. Therefore, the cock restriction force can be reduced to minimum and the cock can be lubricated by working substance.

When it roudongs in the direction shown in the figure, the fluid enters the working cavity to the rearward of roudong cavity sealing line from the inlet 18 continuously; meanwhile, the fluid in the cavity in front of the sealing line is discharged from the outlet 21 continuously. When working as a pump, the front portion is a variable-pressure cavity where fluid is discharged by the power generated by roudong rotor; when working as a motor, the rear portion of the cavity is a variable-pressure cavity where the fluid drives the roudong rotor to roudong and the pressure of the fluid decreases continuously or in step. When compressible fluid enters the pressure-reduction cavity to decrease pressure, the efficiency can be improved by using a pulse stop valve.

Assume the radius of the roudong rotor is R(m), the length of the cylinder is H(m), the roudong ratio is $\delta$, and the revolution angular speed is $\omega(s^{-1})$, then the volume displacement of the volume variation mechanism V(m$^3$) and volume flow $Q_v$(m$^3$/s) are

$$V = \pi R^2 H \left(2\delta - \delta^2\right) \quad \dots\dots\dots\dots\dots\dots\dots\dots\dots\dots\dots\dots\dots\dots\dots\dots\dots\dots\dots\dots\dots\dots$$

（7）

$$Q_v = 0.5\omega R^2 H \left(2\delta - \delta^2\right) \quad \dots\dots\dots\dots\dots\dots\dots\dots\dots\dots\dots\dots\dots\dots\dots\dots\dots\dots\dots\dots\dots$$

（8）

Considering the variation of specific volume, the volume displacement and volume flow of the compressible fluid should be defined with the pressure in the constant-pressure cavity as the standard pressure. For the application of gas metering pumps, it should be noted that the pressure should be stabilized.

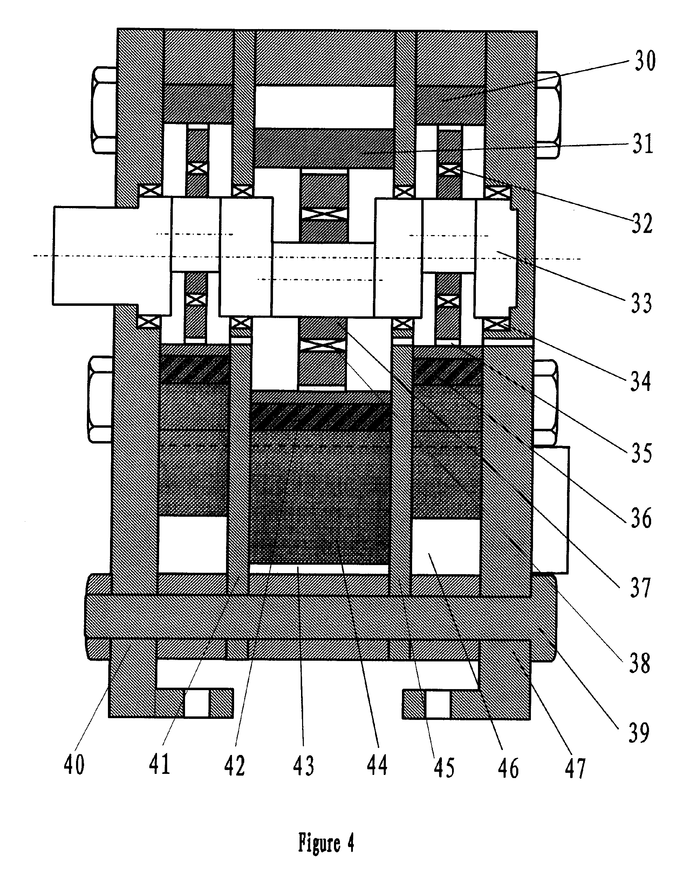

Referring to figure 4, it shows the structure of a high-speed volume variation mechanism with complete dynamic equilibrium and without pulse. This mechanism is assembled by three symmetric swing roudong volume variation mechanisms in coaxial relationship and with 180 degrees phase offset. The two outer volume variation mechanisms have the same dimensions, of which the dimension and displacement volume are one half of the middle mechanism. The roudong rotor of the outer mechanism is designated at 30. The roudong rotor of the middle mechanism is designated at 31. The roudong rotor bearing of the outer mechanism is designated at 32, between the inner surface of 32 and the eccentric part of the crank it inserts a sleeve composed of two semicircle pillars. The crank is designated at 33, where three sections of the eccentric shaft are placed on two lines which are symmetric with respect to the main shaft so as to form a symmetric mechanism with 180 degrees phase offset. The bearings of main shaft are designated at 34, the number of which could be 2 or 4 depending on the load. A weight-reduction and space pressure adjusting connection hole or leaked fluid discharging connection hole is designated at 35. The followup partition board inserted to the roudong rotor of the outer mechanism is designated at 36. The sleeve composed of ring pillars in the roudong rotor bearing of the middle mechanism shaft cover is designated at 37. The bearings of the middle mechanism are designated at 38. Seven or more fastening bolts are designated at 39. The cover at the extending end of the shaft is designated at 40. The partition board provided between the middle mechanism and the outer mechanism is designated at 41. The followup partition board of middle mechanism inserted to the roudong rotor is designated at 42. The projection of the remaining portion of the cavity, which is the motion space of the end of the followup partition board of the middle mechanism, is designated at 43. The end of the followup partition board of the middle mechanism protruding from the cock is designated at 44. The partition board provided between the middle mechanism and another outer mechanism is designated at 45. The projection of the remaining portion of the motion space of the followup partition board of the outer mechanism is designated at 46. The cover of the not protruded end of the shaft is designated at 47.

The function of this example is to eliminate pulsation primarily. The structure of symmetric three mechanisms with 180 degrees phase offset is arranged to balance the inertia force during high-speed running as well as to eliminate pulsation. Because the structure of roudong volume variation mechanism is very simple and substantially uniform, the cost does not increase much for a multi-mechanism assembly, especially for the die shaping parts. The increased cost is mainly the assembling cost. For multi-mechanism assembled machinery of energy exchanging device, transmission device, distribution device and so on, no matter whether the mechanism is symmetric or have high rotation speed, it should employ the similar structure in this example as much as possible to eliminate pulsation and increase the dynamic equilibrium of the whole machine.

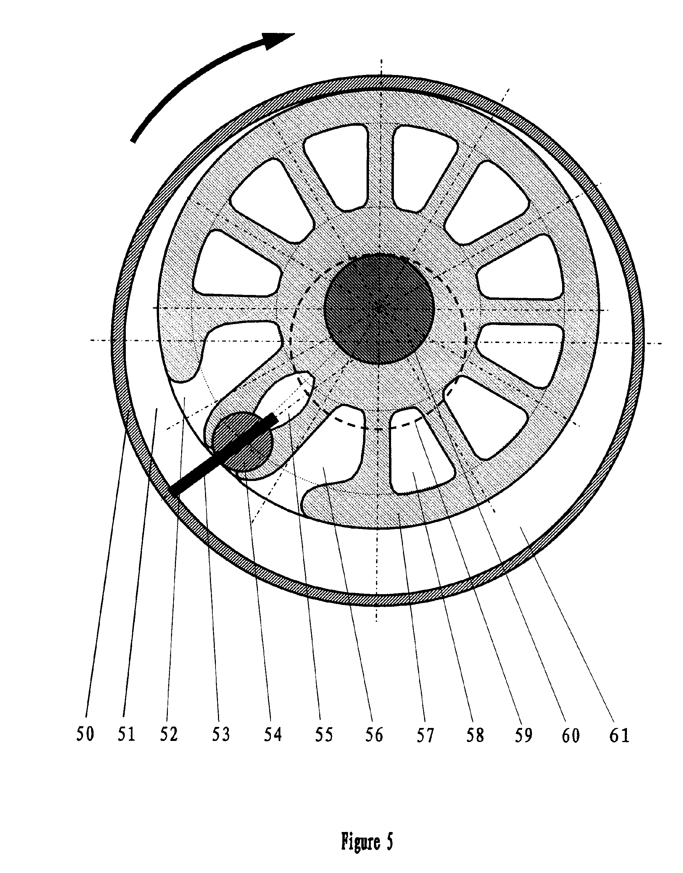

Referring to Figure 5, it shows an axial projection of the rotary roudong volume variation mechanism with a rotating roudong cavity. A rotating roudong cavity is designated at 50. A portion of the working volume cavity rearward of the roudong cavity sealing line is designated at 51. A fluid outlet is designated at 52. A followup partition board in rigid sealing connection with the roudong cavity is designated at 53. A cock embedded into the cylinder of the roudong rotor is designated at 54. A movable volume cavity for the followup partition board to be inserted and pulled out is designated at 55. A liquid inlet is designated at 56. A roudong rotor is designated at 57. A cavity for decreasing the roudong rotor's weight is designated at 58, with open-ended channels communicated with each other to increase the active area of both the inlet and outlet channels. A margin line on the surface of the roudong cavity to restrict the bearing is designated at 59, with the roudong cavity rotating in an opposite direction around the roudong axis to counteract the revolution. An eccentric segment of a stationary crank shaft, namely the rotation shaft of the roudong rotor, is designated at 60, in which the roudong rotor rotate around the rotation shaft and simultaneously wiggle. A front portion of the working volume cavity in front of the sealing line of the roudong cavity is designated at 61.

In the case of a pump, the variable-pressure cavity and the constant-pressure cavity is respectively corresponding to the front portion 61 and the rear portion 51 located in front of and rearward of the sealing line of the roudong cavity respectively. In the case of a motor, instead, the variable-pressure cavity and the constant-pressure cavity is respectively corresponding to the rear portion 51 and the front portion 61 located rearward of and in front of the sealing line of the roudong cavity respectively. There is no difference in terms of mechanism between the two modes; besides, the inlet and outlet can be reversed with the subsequently reversed functions, but the rotation of the roudong cavity does not change this symmetry.

The rotation roudong mechanism with a rotating roudong cavity has good mechanic dynamic equilibrium. The roudong cavity 50 and the followup partition board 59 constitute a rigid body rotating separately, whose dynamic equilibrium can be obtained independently. The roudong cavity itself has good inertial equilibrium. The vector integral of the fluid pressure imposed on the roudong cavity produces a resultant force in the axial direction balanced by the bearings without causing any moment. In the same way, the roudong rotor 57 as well as the cock attached thereto is a separately rotating mechanism with constant rotation inertia and its dynamic equilibrium can be obtained independently. Its inertial force is self-balanced too. The vector integral of the fluid pressure imposed on the roudong rotor including the inlet and outlet results in a force pointing to and balanced by the rotation shaft without causing any moment.

In this kind of mechanism, the followup partition board is the only component being capable of produce a moment. The differential pressure between the variable-pressure cavity and the constant-pressure cavity directly produces a tangential force in direct ratio to the differential pressure and the area of partition board exposed to the fluid. This force produces a moment imposed on the roudong axis and transfers the moment to the roudong cavity, through which the moment interacts with the outside parts. The alternating moment driving the roudong rotor to wiggle is also transferred by the followup partition board.

The differential dM=H∆Prdr of the instantaneous moment M can be calculated from the real-time differential pressure between the variable-pressure volume cavity and the constant-pressure volume cavity ∆P (Pa), the radius of the volume cavity R(m), the length of the volume cavity column H(m), the instantaneous exposed length of the partition board L(m), and the radius coordinate of the roudong cavity r (m) . The instantaneous moment M (Nm) and the instantaneous power N (W) can be calculated by integration of dM, as shown in equations (9) and (10).

$$M = \int_{R-L}^{R} H\Delta \mathrm{Pr}\, dr = \left(RL - 0.5L^2\right)H\Delta P \qquad \cdots\cdots\cdots\cdots\cdots\cdots\cdots\cdots\cdots\cdots\cdots (9)$$

$$N = \omega M = \omega\left(RL - 0.5L^2\right)H\Delta P \qquad \ldots\ldots\ldots\ldots\ldots\ldots\ldots\ldots\ldots\ldots\ldots\ldots\ldots\ldots\ldots\ldots\ldots\ldots\ldots\ldots$$

（10）

In the two equations, the instantaneous exposed width $L = R - R(1- 2\delta(1-\delta)(1-\cos\omega t))^{0.5}$ varies between 0 ~ $2\delta R$ periodically. For an incompressible fluid, when the central angle is $\omega t = (2n+1)\pi$, there will be the maximum values of the instantaneous moment and power. For a compressible fluid, because the pressure increases or decreases along with variation of the volume, the maximum value of the instantaneous moment and power appears later for a pump and earlier for a motor.

6. Detailed Description of the Invention

The designs for various applications of the present invention will be described in the following.

To design various applications for roudong volume variation methods of positive displacement fluid machinery is the second object of the present invention; and to design fluid machinery for versatility is the third object of the present invention. These two objects are both included in the application design of the method. The value of the present invention is mainly embodied by the design of usage and application. The application design is numbered for the sake of clarity.

The first application of the roudong volume variation method demonstrated in the present invention is to employ roudong volume variation mechanism and roudong volume variation motion to provide a roudong internal-combustion engine. Said engine is a kind of roudong fluid machinery with a gas combustion part attached thereto, wherein the roudong volume variation mechanism acts as the main power generation part for gas expansion. The variable-pressure cavity and constant-pressure cavity of the roudong volume variation mechanism are respectively corresponding to the rear portion and front portion located respectively rearward of and in front of the seal line of the roudong cavity. An inlet of the variable-pressure cavity and an outlet of the constant-pressure cavity are connected to the constant volume heat absorbing pulse combustion chamber which acts as a gas pressure source and a vent-pipe communicated to the atmosphere. The gas combustion generating part includes a small cavity of the constant volume heat absorbing pulse combustion chamber and additional components used for such as air compressing, fuel pressurizing, air and fuel timing injecting, or further includes igniting means. The air compressing component and fuel pressing component possibly use a roudong air-fuel proportion optimizing distribution booster pump set which is driven by the main shaft or use a split type driven separately, wherein the air pressure metering pump component may be a roudong spray cooling constant temperature compressor.

In the roudong internal combustion engine, a pulse combustion chamber is mounted around the inlet of the roudong mechanism and has a small volume which is usually less than 1/200 of the roudong cavity. The higher the compression ratio is, the smaller said volume is. Air and fuel injection pipes are connected to the combustion chamber. The two injection pipes subsequently inject an adequate quantity of compressed air and fluid fuel at the timing when the main shaft is rotating. The temperature of the compressed air is lower than or above the ignition point and a pulse combustion is generated by fuel injection or spark plug ignition. The generated gas is heated and pressurized with a constant volume instantly. When the inlet of the roudong cavity opens, the gas goes into the variable-pressure cavity and drives the roudong rotor continuously to make power. After the gas releases most of its energy through an adiabatic expansion, the variable-pressure cavity containing the gas is converted to be a constant-pressure cavity instantly and the gas is discharged continuously at a constant pressure during next circle. The discharging pressure of the gas depends on the initial injection pressure, the boosting ratio of pulse combustion and the expanding ratio of adiabatic expansion. The thermal efficiency can be improved and the gas discharging noise can be reduced by appropriately designing the parameters associated with said parameters in the thermal process so as to achieve a discharging pressure equal to the atmospheric pressure. The highest thermal circle efficiency will be achieved if the temperature of the discharged gas is reduced sufficiently to the ambient temperature, within the heat resistance and pressure resistance of the combustion chamber, by appropriately designing the parameters associated with the injecting temperature, the temperature-increase ratio of pulse combustion and the expanding ratio of adiabatic expansion. In operation, a circle of the engine begins from 0 degree of roudong central angle, where the roudong cavity sealing line passes by and opens the inlet and outlet nearly at the same time. Thus the variable-pressure cavity is converted to a constant-pressure cavity. A new variable-pressure cavity forms again from the inlet. A cycle is complete when the main shaft rotates 360 degree.

By employing roudong volume variation method in internal combustion engines, a structure can be obtained in which compression, combustion and expansion can be separated and optimized respectively, as is advantageous both in motion principle and in total structure. The features of innovation and the characteristic of separate optimization of each part can contribute or even play key role to improve the efficiency. Compared with existing reciprocating piston engines, the compression, combustion and exhaustion in roudong engines are performed concurrently and continuously or in a pulse process. A cycle is corresponding to one expansion stroke, which thus makes a time-utilization efficiency increase by 3 times and a loss apportionment ratio reduce by one half; its air-gas ratio can be controlled precisely without varying with working conditions, which thus ensures sufficient combustion, reduces the emission of carbon monoxide and minimizes the exhaust gas flow and the heat flow therewith. The compression ratio is just restricted by the structure strength so it can be increased largely. The constant volume heating circle and the constant compression which may possibly be adopted can reduce the compression energy required to a small fraction of that of the adiabatic compression. The direction of its driving force changes continuously with the rotation of the main shaft and the angle to increase the moment can be maintained. The cylinder (the roudong cavity) and the roudong rotor can be free from lubrication, which thus allows a high working temperature, a sufficient combustion of the boundary layer and less radiation. There is no moving mechanism in the combustion chamber so heat insulation ceramics can be attached to increase the compression ratio and the working temperature and reduce heat loss at the same time. These innovative measurements and effects result in improved performances such as higher heat efficiency and internal mechanical efficiency than existing internal combustion engines and the demonstrated efficiency increasing space is above 25%.

The roudong internal engine is a kind of roudong fluid machinery attached with a gas combustion generating part and it is a very important application of the present invention with great advantages such as high compression ratio, high efficiency, high power density, little pollution, non-lubrication and long life. This kind of internal combustion engine eliminates all the disadvantages of Otto circle and Diesel circle internal combustion engines and is a brand new internal combustion engine which can make significant contribution to mitigate global energy crisis and environment crisis.

The second application of the roudong volume variation method demonstrated in the present invention is to provide a roudong water motor by employing the roudong volume variation motion method and a structure in which two roudong mechanisms are connected in coaxial and parallel with a 180 degrees phase offset, which is suitable to be driven by clean water or pressurized water with fine sands of controlled size, wherein the variable-pressure cavity and the constant-pressure cavity are respectively corresponding to the rear portion and front portion located respectively rearward of and in front of the seal line of the roudong cavity.

The roudong volume variation mechanism can be used directly to form a water motor, wherein the structure in which two roudong mechanisms are connected in coaxial and parallel facilitates eliminating the startup dead point. The significant advantage of this kind of engine is the high efficiency and the adaptability to different drop heights and flow rates. Compared with a water-turbine engine which is sensitive to the flow rate and speed, the advantage of high efficiency and stabilization of this kind of engine is quite obvious. When used for driving incorporated network generators, this kind of engine exhibits a constant flow and the power generated is in direct ratio to the drop height; when used for driving small un-incorporated network generators, it has greater flexibility and adaptability to different drop heights and flow rates. However, the requirement of related standards on the output voltage and frequency should be considered when the excitation control is provided.

The third application of the roudong volume variation method demonstrated in the present invention is to employ the roudong volume variation mechanism to form a roudong hydraulic motor which can be used as rotation output means of high efficient hydraulic transmission systems, wherein the variable-pressure cavity and the constant-pressure cavity are respectively corresponding to the rear portion and front portion located respectively rearward of and in front of the seal line of the roudong cavity. Alternatively, a structure in which two roudong mechanisms are connected in coaxial and parallel with a 180 degrees phase offset can be used.

A hydraulic motor can also be constituted by the roudong volume variation mechanism simply and directly, which is different from said water motor in that the working pressure of the hydraulic motor is higher. Its input pressure could be several MPa or more than 10 MPa, which is several times or several decuples of that of a water motor, so it needs special strength design to be resistant to pressure. The structure in which two roudong mechanisms are connected in coaxial and parallel facilitates eliminating the startup dead point and flow pulsation. The roudong hydraulic motor has high efficiency and is an important innovative part for hydraulic transmission technology so that it can be widely used. By the example of motorcar, a car with hydraulic transmission has been desired in the industry for decades and the main bottle neck is the efficiency. The present invention pays attention on transmission of motorcar technology in the first place and additionally on the engine alteration and wheel innovation with the aim of saving energy, protecting environment and reducing cost. If roudong hydraulic motor is used for the transmission of train for example, it will surpass existing hydraulic or electric transmission.

The forth application of the roudong volume variation method demonstrated in the present invention is to provide a roudong pneumatic motor or air expander with the roudong volume variation mechanism directly or with additional timing pulse valve device and roudong thermal pump device for increasing efficiency. The roudong pneumatic motor or air expander serves as a rotation output part of pneumatic transmission system or is used in recovery of energy released in a expanding process of pressurized air to take the place of pneumatic resistance throttle expansion part for energy saving. The variable-pressure cavity and the constant-pressure cavity are respectively corresponding to the rear portion and front portion located respectively rearward of and in front of the seal line of the roudong cavity. The structure in which two roudong mechanisms are connected in coaxial and parallel with a 180 degrees phase offset is used to eliminate the startup dead point.

Roudong pneumatic motor is the motor mode application of roudong fluid machinery. As described in the instruction of the invention, the variable-pressure cavity that is rearward of the sealing line is the cavity where air decompresses and does work, and in front of the sealing line is the constant-pressure cavity which is connected to the low-pressure outlet. In operation, the air expands and does work in the variable-pressure cavity that is connected to the pressurized fluid inlet. At zero central angle, the constant-pressure cavity disappears, and the variable-pressure cavity is converted into constant-pressure cavity with the air that has finished expansion. In a new cycle, the new variable-pressure cavity begins to expand and does work again, and the constant-pressure cavity discharges low-pressure air at a constant pressure. The two cavities exchange periodically and their volumes change complementarily. The fluid enters and discharges at the same time. The vector surface integral of the pressure of the two cavities on the roudong rotor rim surface generates a force pointed to the rotating shaft. This force produces a driving moment to the roudong axis and drives the main shaft rotating continuously. The structure in which two roudong mechanisms are connected in coaxial and parallel with a phase offset further facilitates eliminating the startup dead point and the pressure pulsation in the ducts.

Roudong pneumatic motor could work well according to said design. If the rate of change of the specific volume can be controlled to match the volume of cavity or even increase its input specific energy with low cost, the efficiency will get increased, since the gas medium is a compressible fluid and its decompressing process is also an expanding process. Timing pulse valve device and roudong thermal pump device are just what is needed. The former is a valve that opens the air inlet passage at a suitable period starting from zero central angle of roudong and is closed at other time; the latter is a roudong thermal pump(which will be described later) used for pumping heat from the environment with low cost and transfers heat to the inlet air through its condenser. These two demands come from the parameter optimization analysis of adiabatic process equation in thermodynamics and are complicated to be proved, and the latter in which benefit is introduced is even complicated, as will not be described in detail herein.

Pneumatic motors are not widely used in existing technology systems. Except those used in power system of mine engineering, geotechnical engineering and large factories, pneumatic motors are seldom used in common transmission systems. That is because pneumatic transmission in existing techniques has two important restrictions in mechanical field and in thermal field which cause low efficiency. The application of the present invention and roudong compressor which will be described later can solve the main problem of the efficiency restriction so as to increase the efficiency substantially. The pneumatic transmission technology with high efficiency and no pollution is a transmission technology free of water or oil. Now, the amount of water and oil is limited in the world, but air is rich and can be used freely and does not need to be delivered or stored. Once the pneumatic transmission realizes a breakthrough of efficiency, it has advantages such as no pollution, low cost, anti-pulse, anti-impact and no fire risk over conventional hydraulic transmission.

The fifth application of the roudong volume variation method demonstrated in the present invention is to provide a roudong compressible fluid booster pump, including roudong blower fan, roudong compressor and roudong vacuum pump, by using the roudong volume variation mechanism, wherein the variable-pressure cavity and the constant-pressure cavity are respectively corresponding to the front portion and rear portion located respectively in front of and rearward of the seal line of the roudong cavity. The booster pump can be classified by use into roudong fan, roudong blower, roudong introduced draft fan, roudong air compressor, roudong spray-cooling isothermal compressor, roudong two-phase flow booster pump, roudong vacuum pump, roudong two-phase flow vacuum pump and so on. The spray-cooling isothermal compressor is a kind of two-phase flow compressor in which cooling is effected by spray water during the compressing process and water and air are separated at the outlet. Roudong compressible fluid booster pump can be used to deliver air or air-liquid two-phase fluid and vary the pressure thereof, including boosting and decompressing from the atmospheric pressure to a negative pressure. While designing the physical parameters of said two-phase flow booster pump, only three design variables, i.e. the volume flow, the maximum pressure and the maximum medium viscosity need to be considered. The pressure self-adapting constant flow feature of the two-phase flow booster pump enhances its adaptability and simplifies the types of specifications.

Compressible fluid booster pumps mainly mean fans and air compressors; the latter has a reverse function to that of pneumatic motors. The direction of the differential pressure between the inlet and the outlet of the booster pump, the internal positions of the variable-pressure cavity and the constant-pressure cavity of the booster pump, the sign of the integral of the fluid pressure and the moment of the booster pump are all reverse to the pneumatic motor. However, the structure of the booster pump is totally identical with the pneumatic motor, but it generally needs neither the two additional devices nor other additional devices. Only in the roudong spray-cooling isothermal compressor thereof based on roudong air compressor, an inlet and a roudong cavity spray-cooling device is added, and an air-water separating device is added at the outlet. The spray makes the machine into two-phase flow working state. When the compression ratio is very high, the amount of water that is sprayed should be increased, and the pressure thereof should also be increased to generate smaller fog drops which can form higher fog drop diffusing density and larger heat-exchanging surface in the compressing space. The air and water can be separated simply by gravity, for example by a separating cushion controller with a float valve which controls the flow of cold water on the basis of a liquid level signal with high sensitivity to make it adapted to the decompression flow. The water outlet of the separator is released by a throttle valve or is connected to the roudong hydraulic motor that is mounted in coaxial therewith to recycle the pressure energy.

Compressible fluid booster pumps designed on the basis of roudong volume variation method of the present invention has a very high efficiency compared with the equipments in existing techniques. Fan and compressor products in existing techniques have a low efficiency and, they have drawn most attention in the industry for the last decades to be reformed for energy saving except pumps. They have drawn less attention than pumps merely because the whole installed capability thereof is less than pumps, but in fact, the efficiency there is even much lower than pumps. Fan and compressor also make noise pollution and are well known as noisy equipments. Low efficiency and noise come from the motion which includes a rotating impeller motion, which is not a positive displacement motion, and a reciprocating positive displacement motion. The aerodynamics problem of the former and the mechanism friction and thermodynamics problem of the latter can't be solved thoroughly. As described previously, the only way is to adopt the roudong variable-volume method.

Roudong compressible fluid booster pump has pressure adaptability. Its pressure specification only relies on the structure strength and its practical working pressure does not depend on mechanism motion. When used as a fan, there is neither turbulent loss nor turbulent noise, and there is neither dynamic pressure change nor dynamic head loss, so that it has a high efficiency and is not a noise source anymore. When used as a compressor, it has a high internal mechanical efficiency, a high volumetric efficiency and a high hydraulic power efficiency so that the general efficiency can be improved significantly. The largest advantage of roudong compressible fluid booster pump is its high adaptability and simplicity, which means that fan, compressor and vacuum pump can be in general use as long as the flow and power are suitable, and they can be used for two-phase flow and liquid in a certain range of speed and viscosity, as can not be imagined in existing techniques. High adaptability will simplify the planning of type spectra and the benefits from said simplification during design, manufacture, use and maintenance exceeds the sum of all the benefits obtained from the progresses of all machines.

The two-phase flow application of roudong compressible fluid booster pump includes three types of machines or applications, i.e. roudong two-phase booster pump, roudong two-phase flow vacuum pump and roudong spray-cooling isothermal compressor, which have the properties of new technology, new function, new type, high performance and very positive demonstrative effect. Two-phase flow variable-pressure machine is a simple solution for many actual demands such as the compressing problem of natural gas pipeline and petrol pipeline, and the pumping transport problem of liquid hydrogen, liquid oxygen, liquid nitrogen and other liquefied gas which is possibly partially in the form of two-phase fluid. Furthermore, for example, in many chemical engineering equipments, most flow is two-phase flow and the gas-liquid separating device is merely used for compression. Roudong spray-cooling isothermal compressor is directed to the thermodynamics bottleneck which causes the low efficiency and have troubled human for over 100 years. Now it is solved finally in a simple manner.

The roudong spray-cooling isothermal compressor is generally used as an independent compressing part for an internal combustion engine including a gas turbine, and its isothermal compression function obtained in a simple and high efficient way is an important part of internal combustion engine efficiency increasing technology. This component can increase the efficiency of the internal combustion engine by 10% and the efficiency increasing effect for gas turbine is much more considerable. That's because in the isotonic circulation of gas turbine, the consumption of worm wheel compressor takes up most input power of the gas expansion turbine. For example, if roudong spray-cooling isothermal compressor takes the place of gas turbine which works under the pressure of 10 MPa (about 10 bars), the power saving effect of a gas compressing thermodynamic process can be 39% without comparison of the efficiency of this machine and a turbine. If the original compressing loss ratio (the denominator is the expansion power) is 60%, the 60%*39%=23.4% saved power becomes the net increased output, the output power increases from 40% to 63.4%, and the increment of the output force is 58.5%. Although the value 23.4% is not the efficiency increment, it is a key parameter. In its complicated thermal circulation restriction, by taking measures such as counterflow backheating further, the majority of said 23.4% will be converted to the increment of the efficiency which could reach to 15% as roughly evaluated.

The sixth application of the roudong volume variation method demonstrated in the present invention is to form a roudong liquid booster pump by the using roudong volume variation mechanism. Said roudong liquid booster pump includes roudong pump, roudong oil pump and roudong positive displacement pump suitable for other fluid phase medium and can be used for the delivery and compression of liquid material. The variable-pressure cavity and the constant-pressure cavity are respectively corresponding to the front portion and rear portion located respectively in front of and rearward of the seal line of the roudong cavity. Alternatively, a structure in which two roudong mechanisms are connected in coaxial and parallel with a 180 degrees phase offset is used to eliminate the pulsation. When designing the physical parameters of the machine, only three design variables, i.e. the volume flow, the maximum pressure and the maximum medium viscosity need to be considered. The feature of pressure adaptability simplifies the planning of type spectra.

Roudong liquid booster pump is the simplest but one of the most important application of the roudong volume variation method. It is simple because a liquid booster pump can be obtained without additional mechanisms merely by using the roudong volume variation method and assembling any derivative type of roudong mechanism. Therefore, what has been described will not be repeated herein. However, it is needed to explain the importance and effect of this kind of application in detail.

As stated previously, pump is the first target of energy saving improvement in modern society. It is because, firstly, its installed capability is very huge, and, for example, the pump installed capability in China is over 160GW and consumes over 400 billion KWh electricity. The overall consumption of the world is unknown but it may be 6 times of the consumption in China. Secondly, the efficiency of pump is not high. Especially, the pumps in middle and small size which have the largest equipped amount have the efficiency generally below 60%. The efficiency of small size pumps in huge amount is between 30% and 50%. The energy consumption, the green-house gas emission and other kinds of pollution caused by pumps are extremely large and should be improved.

Few water pumps, including other kinds of liquid booster pumps, are of positive displacement type. They are impeller type machines of non-displacement type and most of them belong to radial flow centrifugal pump. As stated previously, the efficiency of positive displacement fluid machinery in existing techniques is very low, far less than rotation impeller pump.

However, the present invention converts the relationship. The most proper type for liquid booster pump will be the positive displacement type, i.e. the roudong volume variation positive displacement pump in the present invention. It is shown from analysis and demonstration based on many aspects of hydromechanics and mechanics that the efficiency of roudong liquid booster pump can exceed 90% and is controllable. For example, it is possible to obtain an efficiency of up to 95% or even 97%, but if so, other performances would fall down and this is cost-efficient. The economic efficiency can not be precisely analyzed temporarily, but it could be 90% in estimate. It provides a possibility that the efficiency can be decided as desired so as to make most satisfying working condition. It is inconceivable and impossible for non-displacement type centrifugal pump whose parameters and characteristics are fixed. Although the flow rate of non-displacement type centrifugal pump can be adjusted by a throttle valve or changing the lift in small range, the efficiency thereof will be decreased when departing from the designed working condition. The efficiency of non-displacement type centrifugal pump is a single valued function of the flow rate with a single extreme value point.

In light of increasing efficiency, saving energy and protecting environment, to replace centrifugal pump by roudong pump is the choice based on positive effect in the fields of mining, petrol, chemical industry, energy, transportation, light textile, water conservancy, urban and rural construction, agriculture, forestry, farming and fishing. Maybe people can't understand or get used to the replacement in short time, but after seeing the comparison of economic performances, they will surely get used thereto.

Another important application of roudong liquid booster pump is to act as a shaft power input component in fluid transmission. The pressure of this kind of booster pump is very high. It is an inevitable economic action to replace plunger pump by roudong hydraulic pump because the efficiency and cost advantage of roudong liquid pump compared with plunger pump. The main problem is not the replacement but the development. The reason why rotating fluid transmission is not widely used is because of the limit of efficiency. When breaking the efficiency bottleneck, the popularization of this application is a natural process. The fields where roudong fluid transmission technology can be used are transportation machines such as motorcar, train and ship. Once used, the considerable technical and economical advantages of roudong fluid transmission will be recognized soon, the replacement will be fast and the technical appearance of industry will have essential changes.

The seventh application of the roudong volume variation method demonstrated in the present invention is to form a water motor by at least one roudong volume variation mechanism, wherein the variable-pressure cavity and the constant-pressure cavity are respectively corresponding to the front portion and rear portion located respectively in front of and rearward of the seal line of the roudong cavity.. Alternatively, a structure in which two roudong mechanisms are connected in coaxial and parallel with a 180 degrees phase offset is used to eliminate the dead point. A pump with one output or multiple outputs can be formed by one or more roudong volume variation mechanisms, wherein the variable-pressure cavity and the constant-pressure cavity are respectively corresponding to the rear portion and front portion located respectively rearward of and in front of the seal line of the roudong cavity. All the roudong volume variation mechanisms are linked coaxially and all variable-pressure cavities act on the same roudong shaft to form a hydraulic pump with adaptability to input flow and output pressure, including roudong hydraulic variable flow pump and roudong hydraulic variable pressure pump. The former is a hydraulic water pump which drives low lift big flow stream by high fall small flow stream; the latter is a hydraulic water pump which drives high lift small flow stream by low fall big flow stream, so as to replace the low efficient centrifugal pump. In the multi-output machines, a stop valve is mounted in each input channel. The power of the input shaft equals to the weighed sum of the actual output power of each output weighed by the reciprocal efficiency. The adaptabilities determine the actual parameters such as the rotating speed, the flow rate and the lift distribution. Closing off one output and decreasing the lift can cause increase of the rotating speed and increase of the flow rate of other outputs.

The seventh application of the present invention is very different from conventional water pumps. This water motor is a hydraulic motor-pump set with excellent properties and belongs to roudong fluid energy exchanging device or is called fluid pressure-variator or flow-variator. It is constructed as a roudong water motor with a suitable displacement combined with a coaxial roudong water pump to form an integrated set. The new added feature is the coaxial structure which can transfer energy with the same rotating speed and the same power (the input is a little larger considered efficiency), i.e. the structure of coaxial transmission. In its running inequation, the product of the input specific energy or lift and the designed displacement and efficiency should be larger than the product of the demanded output specific energy or lift and the designed displacement. The efficiency of roudong motor-pump set can reach 90% or more and its input hydraulic power can fluctuate randomly or change to be very small. When the water stream is small, it won't affect the running and only the rotating speed decreases with the direct ratio to the input power and the output hydraulic power decreases with the same ratio. In this respect, roudong water motor is advantageous over other water motors.

Roudong hydraulic water pump uses static pressure potential energy and has high efficiency and adaptability which means when the driving water stream changes from large flow to small flow, it will still keep running faithfully and won't stop as long as the specific energy doesn't change. Because of the amazing characters of roudong water motor, it is very suitable for water lift of high fall spring or rivulet by changing flow and for low fall dam by changing pressure. In the low water period, it can still lift water as long as the flow is cut off, as is inconceivable in conventional equipment such as water turbine pump and scoop waterwheel. In the southern part of China, especially in the hilly areas, there is a lot of water while drought is still easy to occur, and lifting irrigating equipments are required. To use electric irrigation and drainage is not an ecological and civilized way but an improper way of use of industrial civilization. Roudong hydraulic pump has a very simple structure with a shell and two or three wheels, which is small-sized and is easy to enshroud. Roudong hydraulic pump can be used in more than 60% areas of our country.

The eighth application of the roudong volume variation method demonstrated in the present invention is to form a hydraulic pump by two roudong volume variation mechanisms linked in parallel with 180 degrees phase offset, wherein the variable-pressure cavity and the constant-pressure cavity are respectively corresponding to the front portion and rear portion located respectively in front of and rearward of the seal line of the roudong cavity. A hydraulic motor is formed by two roudong volume variation mechanisms linked in parallel with a 180 degrees phase offset, wherein the variable-pressure cavity and the constant-pressure cavity are respectively corresponding to the rear portion and front portion located respectively rearward of and in front of the seal line of the roudong cavity. All roudong volume variation mechanisms are linked coaxially and all variable-pressure cavities act on the same roudong axis, so as to form transmission devices of the types of roudong hydraulic speed reducer or increaser. The desired speed reducing ratio or increasing ratio can be achieved at a time according to the relation that speed changing ratio is in inverse ratio to displacement. The stopping control device could be an input valve device of a fluid pump. Alternatively, the valve might be provided with a buffer that attenuates upriver hammer effect. There might be a bypass throttle-stop valve between input and output pipelines, which is adjusted manually or automatically through a timing program, so as to form transmission devices of the types of roudong hydraulic reducer or increaser with bypass throttling and clutching function.

The eighth application of the present invention belongs to the transmission device of hydraulic torque converter and is mostly used as a speed-reducing torque-increasing device and sometimes as a speed increaser. In this kind of device, the roudong volume variation mechanisms are also mounted coaxially and thus will not be described in detail once more except the feature to eliminate pulsation. Because the system inertial parameters and the actual range of dynamic response speed is quite different from the pulsation period, the flow pulsation must be eliminated by counteracting the pulsation by confluence of double phase offset flows, or be flexibly absorbed with low loss by performing low-pass filtering using bypass of high-pass filtering. Particularly, a pressure resistant buffer is connected, which has a flexible wall or interface, such as the nitrogen airbag accumulator which is a buffer with fast response widely used in existing techniques.

It is also needed to explain the effect and application of roudong hydraulic transmission device in emphasis. Since Watt invented stream engine, transmission technology develops and improves along with the development and improvement of dynamical machines. Mechanical transmission or electric transmission with many other functions has excellent performances. However, in the field of hydraulic transmission, besides the hydraulic cylinder which converts rotation to translation, the hydraulic system with rotation output is not developed well because of the bottleneck of efficiency. The bottleneck of efficiency is attributed to the rotating volume motion type.

The hydraulic transmission with rotation output can exhibit its large advantage if its efficiency is increased, even though a little lower than the mechanical transmission. Mechanical transmission is really not very good. The largest reduction ratio of one stage reducer is 4 and if a larger reduction ratio is desired, a multistage structure in series is required. One transmission stage needs one gear pair and two additional bearings. Suppose the efficiency of a bearing is 98% and the efficiency of a gear pair is 97%, then the reduced efficiency of one stage equals to 98%*97%=95%, and is only 90% for two reduction stages. For example, the total efficiency of a motorcar transmission chain which includes a clutch, a gear-box with multilevel gears, a universal joint, a differential, a transfer case and so on is less than 70%. However, it is still considered to be a high efficiency and is difficult to be exceeded. The mechanical transmission has been in use till now although it calls for high form and position precision, has high cost and considerable failure rate, and is difficult to design, manufacture and mount. The simplicity of hydraulic transmission system with rotation output is well known, but hydraulic transmission motorcar is not qualified mainly because of the restriction of the bottleneck of efficiency.

The high efficiency of the present invention as described previously helps to solve this bottleneck problem. Its theoretic efficiency is over 80% and its cost is a small part of the cost of the mechanical transmission. As a natural advantage, the simplicity and flexibility of the design and installation of the present invention is unexampled. When the present invention is used for motorcar transmission, it only needs to fix several clamps on the chassis in addition to an engine and a transmission-reducer-clutch combination device. The huge advantages of the roudong wheel of the present invention come from its simple structure which can work merely by connecting tubes.

The present invention can be applied to various applications in addition to motorcar transmission. Particularly, when used as reducer in ship, the rotation speed of ship propeller is very slow because of the restriction of efficiency and linear velocity of impeller machinery. The larger the screw propeller is, the lower the rotation speed is. Because of the reduction limit of this kind of reducer and the large torque thereof which, for example can be 1000kNm when the power is 10MW and the angular speed is 10 rad/s, such reducer is very cumbersome. When the shaft diameter reaches several hundred millimeters, it is difficult to design a multilevel gearing reducer because its efficiency and cumbersome structure is not acceptable. As a result, mechanical reducer becomes the bottleneck of ship thrust system. Restricted by this bottleneck, a special low speed ship-use diesel engine standard is generated. The rotation speed of the diesel engine for large ship is about 100r/min without reducer. The diesel engine has low specific power performance and efficiency and is uneconomical. If roudong hydraulic reducer is employed, the speed reduction from 6000r/min to 60r/min can be achieved directly. As a result, high speed engines or more advanced engines can be used. Roudong technique can be extensively used in ship-engine-transmission-thrust technology innovation.

The ninth application of the roudong volume variation method demonstrated in the present invention is to form a hydraulic pump by several roudong volume variation mechanisms, wherein the variable-pressure cavity and the constant-pressure cavity are respectively corresponding to the front portion and rear portion located respectively in front of and rearward of the seal line of the roudong cavity, and the inlets can be controlled to be opened or closed by manual or automatic cut-off valve. A hydraulic motor can be formed by one or more roudong volume variation mechanisms, wherein the variable-pressure cavity and the constant-pressure cavity are respectively corresponding to the rear portion and front portion located respectively rearward of and in front of the seal line of the roudong cavity, and the inlets can be controlled to be opened or closed by manual or automatic cut-off valves. When the inlet is cut off, the constant-pressure cavity of the hydraulic pump and the variable-pressure cavity of the hydraulic motor stop are inactive because of vacuum state. The working displacement ratios of the hydraulic pump and the motor change as a function of the actual value of two two-element control vectors and the possible ratios may form a series. The planning of the series and the design of the composition of their displacements are based on the actually demanded shift. All the roudong volume variation mechanisms are linked and all variable-pressure cavities act on the same roudong shaft to form an integrated speed variator. Alternatively, the hydraulic pump and the motor are split type and are mounted in coaxial with the prime mover and the driven machine respectively, so as to form a split hydraulic speed variator in combination with a design which can eliminate pulsation and flexibly absorb flow pulsation. Alternatively, between high pressure and low pressure pipes, there may be fixed a bypass throttle-cutoff valve with manual or automatic time programmed adjustment means so as to provide a roudong hydraulic speed variator with a bypass throttling clutch, which can be used as a multi-function speed variator with deceleration, speed variation and auto clutching functions.

The ninth application of the present invention is very novel. Although it is called speed variator, it is actually a multi-function transmission device which can solve all the problems of transmission chain at one time. With respect to its structure, it is still a device which roudong volume variation mechanisms are assembled partly or entirely in coaxial. This kind of transmission device has additional requirement on control design. The complicated system planning problem should be solved to provide a good design and the above application is just a basic design. There is no need to describe the structure and work principle of hydraulic pump and motor. The key to form a speed variator is that the pump and motor have the feature of adopting multi-way controllable coaxial and parallel running mode. The reason can be easily seen which is based on the superposition principle of flow and displacement. The displacement increase and reduction caused by controllable combinations of multi-way displacement of pump results in the increase and reduction of flow. The controllable combination of multi-way displacement of the motor causes the increase and reduction of displacement. The combinations of increase and reduction of flow and motor displacement can make different combinations of speed variation ratio because the rotating speed of the motor is in reverse ratio with the displacement at given flow rate. The final dynamical range is represented by a maximum speed ratio and a minimum speed ratio and the ratio of previous two ratios equals the product of the ratio of the upper limit to the lower limit of pump displacement and the ratio of the upper limit to the lower limit of the motor displacement. The shift distribution depends on the planning and control arrangement. As a step speed variator, although it will need more shifts for example in a car speed variator which always has more than 5 shifts, the pump and motor with only 2-way is enough for more than 5 shifts.

With respect to structure, the structure of integrated type and split type are two kinds of different need. The integrated type is used for varying speed of coupled shaft directly. Its input is connected to the shaft of a power machine and its output is connected to the shaft of a load machine. The input and output are the mechanical power from the same shaft and the rotating speed and torque is changed by a speed variator. The split type pump is coupled to the shaft of a power machine and converts the input mechanical power into hydraulic power with different flow and pressure. The hydraulic power is transported to a different geometrical position by pipeline. The split type motor is coupled to the shaft of a load machine. It receives hydraulic power and converts it into the output mechanical power. Meanwhile, there is an important problem which is pulsation. The integrated type can synchronize pulsation which won't cause damage. However, the split type can't synchronize pulsation and the responding speed interference caused by flow pulsation can result in halt or damage to machine. Therefore, the design for eliminating or absorbing pulsation is necessary. The simplest design is to add a buffer in both high pressure and low pressure pipelines such as electrically controlled nitrogen pot for filtering and a further design is to adopt the structure of double cavities in parallel with 180 degrees phase offset, or both may be used.

Roudong hydraulic speed variator is a multi-function speed variator integrated with speed reduction, speed variation and automatic clutching functions which are different from mechanical transmission chain. And their differences in efficiency, cost, failure rate, life and structure of installation are very considerable.

Roudong hydraulic speed variator has high efficiency and low cost, and its split design is easy for installation. So it is very suitable for vehicles like motorcar, train, ship and so on, facilitating the simplification of the transmission system structures of these equipments. It facilitates substantially reducing the entire equipment cost which includes the cost of design and manufacture and the cost of energy consumption which is a main part of operation cost. It also facilitates environment protection. So it is worthy to be widely used.

The tenth application of the present invention is to form a roudong metering pump with roudong volume variation mechanism. The roudong metering pump includes boosting type and constant pressure type and is used for direct-read detection, sensing and integration of the volume flow of fluid or for direct-read detection, sensing and integration of the mass flow of fluid by function transformation from other stabilized and detected parameters. The boosting type roudong metering pump might be a fluid booster pump which also has metering function and can endure large shaft power or might be a fluid booster pump mainly used for metering and control, and its boosting range only relies on the pressure change at the self-adapting output end. The variable-pressure cavity and the constant-pressure cavity of the two types of boosting pump respectively corresponding to the rear portion and front portion located respectively rearward of and in front of the seal line of the roudong cavity. The constant pressure type of roudong metering pump is a pump or a motor, and the variable-pressure cavity and the constant-pressure cavity of the latter are respectively corresponding to the rear portion and front portion located respectively rearward of and in front of the seal line of the roudong cavity.

The main part of the roudong fluid metering pump is a simple application of roudong volume variation mechanism and there is no need to repeat its mechanism and principle. As a metering device, its metering information sampling device and display device can be of different designs according to different applications, which might include rotating speed display and sensing, rotation number counting display and digital transportation, metering range and displacement design, pressure-temperature-specific volume stabile control or function compensation computing and so on.

Roudong metering pump includes booster type and non-booster type which includes constant pressure type. The function of the non-booster type or constant pressure type is merely metering and it is used for flow state display and control in industrial process control. Another usage is commercial metering of fluid. For example, a kind of roudong thermal meter used for heat supply metering can get the thermal fluid volume by counting the number of revolutions and then calculates the total value and variation rate(real-time power) of supplied heat according to the formula (heat= number of revolutions * displacement* density * specific heat*temperature difference). And it may need to show and timely send data to charge management center and so on. The calculation, display and communication can be effected by SCM.

The function combination of metering and boosting is a special advantage of the roudong metering pump. In addition, the features of coaxial linkage and synchronization are further special advantages. These two advantages extend its applications in many technical fields. The metering booster pump and multi-fluid distribution pump, which will be further explained and the former of which especially includes metering air compressor, isothermal compressing metering air compressor and so on, are the application designs based on function extending chain.

The eleventh application of the present invention is to provide a roudong constant proportion distribution pump, in which all roudong volume variation mechanisms are linked in coaxial and all variable-pressure cavities act on the same roudong axis, with roudong metering component that comprises at least two roudong volume variation mechanisms and is provided with separate channel and the displacement ratio of which is determined by conversion of mass flow ratio. Said roudong constant proportion distribution pump includes booster roudong constant proportion distribution pump and constant pressure roudong constant proportion distributor. In the booster roudong constant proportion distribution pump which could be internal combustion engine constant air-gas ratio distribution booster pump that are composed of a roudong compressor component and a roudong fuel booster pump component linked in coaxial, the variable-pressure cavity and the constant-pressure cavity of the roudong volume variation mechanism are respectively corresponding to the rear portion and front portion located respectively rearward of and in front of the seal line of the roudong cavity. The mechanics mechanism of the constant pressure roudong constant proportion distributor is the same as the booster roudong constant proportion distribution pump or contains decompressing motor component without additional shaft power. Those which include constant pressure combustion pressing oil metering motor component and pressurized gas metering motor component whose variable-pressure cavity and constant-pressure cavity are respectively corresponding to the front portion and rear portion located respectively in front of and rearward of the seal line of the roudong cavity can produce self-adaptive transmission power to drive other components. These two kinds of roudong constant proportion distribution devices can be applied to thermal machines, thermal engineering and chemical procedure to obtain a high efficiency and advantageous environment protection. Among roudong constant proportion distribution devices that contain decompressing component, gas stove constant proportion distribution device is a key component designed for efficient environment protecting stoves.

The coaxial linkage combination of roudong fluid metering pump and roudong metering booster pump produces a control effect of synchronization with the same ratio and thus makes the technical space for fluid distribution pump and fluid boosting distribution pump used for real-time proportional control of the flow of many kinds of fluid. This kind of control is strongly desired in many fields and thus the eleventh application of the present invention is proposed. The functions of roudong constant proportion distribution pump which includes booster constant proportion distribution pump and constant pressure constant proportion distributor, especially the internal combustion engine constant proportion distribution booster pump comprising a roudong compressor and a roudong fuel booster pump, are highly creative and can be used in the fields of chemical industry, energy and dynamical machines. Internal combustion engine constant proportion distribution compressing pump and internal combustion engine constant proportion isothermal compressing pump are especially suitable for internal combustion engines with the aim of producing the most advantageous internal combustion engine. Gas stove constant proportion distributor is the necessary component for energy saving reform of home-use gas stove.

The twelfth application of the roudong volume variation method is to provide a roudong random energy flow utilization system with roudong volume variation mechanisms, such as household drink water distillation clean system, roudong hydraulic power integrating energy storage electricity generation system, roudong high adaptive wind power system and so on. This kind of system contains one or several components which can convert a random energy flow into the power of a machine shaft in real-time. Said component could be a wind power impeller including high adaptive wind power impeller or a roudong hydraulic motor driven by differential pressure. Power generating components are distributed at places where they can get random energy flow and each power generating component is integrated with a roudong air pump in coaxial. Said air pump is a roudong vacuum pump or a roudong air compressor. The roudong vacuum pump is connected to a vacuum load by a pipeline. For example, a roudong vacuum pump of household drink water distillation clean system linked coaxially to a roudong motor mounted in tap water pipes is connected in situ to a distilling condensator to pump two-phase flow comprising clean water and noncondensing air. The roudong air compressor is connected to a pressurized air tanks by pipelines. The tank integrates, gathers and stores compression energy to be used to drive a machine or generate electricity. The energy is employed by a roudong pneumatic motor whose input pipe might contain a heat pump heat-exchanger to utilize random low temperature heat energy. The electricity generators in a roudong hydraulic power integrating energy storage electricity generation system and that in a roudong high adaptive wind power system are numeral control exciting electricity generators whose startup, rest and running excitation are controlled by computer. The control of startup, rest and excitation in interconnected electricity generation is optimally scheduled according to the principle that the air compressor output is the maximum. The controlling program is written in a numeral control SCM. An associated external combustion temperature increase procedure is embedded in the roudong wind power system to form wind power-external combustion thermal non-water electricity generation system. This system comprises wind power impeller-roudong air compressor, conflux pipe, gas storage tank, controllable countercurrent heat exchange external combustion temperature increase chamber, roudong pneumatic motor or turbine and electricity generator which are arranged separately and is controlled by computer so that it has very high united efficiency and low cost for electricity generation.

Roudong random energy flow utilization system is a green energy source system incorporated into the environment. It especially gathers random environmental distribution fluid energy sources which mainly comprise fluid pressure energy, water energy and wind energy. First, the fluid energy source is converted to air pressure energy power by roudong pressure-variable machine. After integrated storage of tank, by means of a roudong pneumatic motor, it is converted to mechanical energy or used for electricity generation. The integrated storage and running scheduling make it being able to be incorporated in a minimum cost system setting and maximum system output real-time control.

Roudong random energy flow utilization system includes two steps which are gathering and converting, and processing and utilizing.

The gathering and converting is real-time which means that the gathering equipment runs immediately to export mechanical shaft power when an energy flow appears. The gathering devices for liquid pressure energy, water energy and wind energy are corresponding to roudong hydraulic motor, roudong hydraulic power engine and wind power impeller or high adaptive wind power impeller. The air compressor (or vacuum pump) linked coaxially with the device converts the shaft power to compression energy (or vacuum energy) efficiently which is exported through a pipeline.

There are two kinds of processing and utilizing which are real-time high adaptive utilization and economical integrated stored utilization.

An example of real-time high adaptive utilization is the household drink water distillation clean system which uses the random flow of tap water to drive a roudong hydraulic motor and a two-phase flow vacuum pump in coaxial, and pumps out clean water and noncondensing air. It has adaptability and magnitude matching of power and energy. So it is very economical.

Examples of economical integrated stored utilization are a roudong hydraulic power integrated energy storage electricity generation system and a roudong high adaptive wind power system. One or several distribution type compressed air pipelines converge to an air storage tank and electricity is generated by a roudong pneumatic motor-electricity generator controlled in an optimal schedule. So it has very economical adjustment and control. The centralized use strategy filters the bad factors of time randomicity and space dispersibility and satisfies people's need. On the other hand, the scheduling provides a control mechanism for achieving a maximum output of gathering and transforming. This mechanism is carried out by software. The exciting control is used just to provide a standard interface for electric parameters. The whole system can effect the optimization of output power and cost. Compared with distribute type equipment of single machine and single generator, the performances are roughly increased several times.

In the above system, the output pressure of the roudong air compressor is that of the air storage tank which determines the torque load of the gathering device. By the scheduling controlled by a computer, the torque changes as a function of wind power which means that the system can work no matter whether the wind is strong or weak. Besides, the roudong air compressor and its pipelines have good cooling ability and can carry out variable compression with low temperature increase. Its compression efficiency is very high.

In roudong hydraulic integrated energy storage electric power system, the energy flow gathering and transforming device is a combination of roudong hydraulic motor and air compressor, which works by hydraulic power of high fall small flow or low fall big flow and is called hydraulic integrated air compressor. It is constructed as an integrated machine set comprising a roudong hydraulic motor with suitable displacement in combination with a coaxial roudong air compressor with suitable displacement. This machine set might have an additional automatic load releasing adjusting device which is composed of a turning sensor and an inlet throttle valve. The machine set will automatically increase throttling resistance to reduce load at a low speed or at rest, otherwise adjusts in converse so as to make the compressor keep rotating at high speed as long as possible. Its running inequation is that the product of input specific energy, designed displacement and efficiency should be larger than the product of output specific energy and designed mass displacement.

The efficiency of hydraulic power integrated air compressor can reach about 80%. The hydraulic power integrated air compressor allows for random fluctuation of input hydraulic power and it can still run even at a very small water flow. It is a good cooler when running at low speed and it can achieve isothermal or low temperature-increase compression by means of cooling methods such as input air spraying, roudong cavity spraying and so on when running at high speed. Its air transportation pipelines are good coolers and there is no compression energy loss in the air storage tank when cooled by the pipelines. A roudong pneumatic motor is provided at the end where the power is used in centralization. The inlet pipeline of the pneumatic motor is connected to a solar heater, a coal furnace heater and other devices in series. The motor expands according to the adiabatic constant entropy equation and it can convert low-temperature heat into mechanical power by the way so as to further advantageously increase the utilization rate and efficiency of the system. That's the utilization advantage of compression energy. Roudong hydraulic power integrated air compressor works by using static pressure potential energy and has high efficiency and good adaptability. It is especially suitable for gathering, storing and using the energy of small hydraulic energy sources that are distributed widely in mountain areas. A power network can be formed by many air compressors of this kind for agricultural products manufacturing, lighting in villages and peak-load regulation electricity exporting to electricity networks.

The impeller of roudong high adaptive wind power system drives a coaxial roudong air compressor to compose a distribution network which is centralized to a same air storage tank. Air compressor can produce maximum output power under the intelligence scheduling of output pressure. If a high adaptive impeller with variable vane angle is employed, the wind power adaptive range will be extended a lot. Thus, not only the output power can increase several times, but also the turbulent noise can be reduced a lot in operation. Meanwhile, the ability to withstand strong wind also increases. The efficiency of wind power system in existing techniques is very low. The cost per kilowatt is too high and the turbulent flow noise disturbs people, which are the experiences of Holland, Germany, US and so on.

Roudong high adaptive wind power system is suitable to be mounted on the top of hills and generate electricity power at the feet of hills and can actualize high capability installation. For estimating, the kilowatt cost of high capability system is about one third of that in existing techniques.

An external heat exchanging procedure like the leading procedure of thermal electricity generation is introduced into the roudong high adaptive wind power system so as to provide an economical wind power-external combustion united electric power system. The internal combustion electric power generation system is a non-water system, but air compression therein is an expensive and troublesome procedure. It is wasteful to cheaply use the small specific energy generated by pneumatic motor which is driven by compressed air generated by wind power. It can take the advantages of both thermal power and wind power and make them both work better by introducing an external heat exchanging procedure into the previously described roudong high adaptive wind power system so as to provide an wind power-external combustion united electric power generation system and use a computer to schedule and control the united system as well. The maximum pressure of compressed air of this system can be designed to several MPa which is above the need of internal combustion and can be adjusted according to wind power within limit range. The external combustion chamber is not a boiler and does not need water. The fuel can be straw of crop or coal. By using a countercurrent heat exchanger, the smoke temperature can be reduced a very low level and the heat exchange efficiency is very high. The heating temperature changes according to the pressure, wherein the outlet temperature equals the atmosphere temperature when the pressure is reduced to 1 bar according to isothermal expansion equation. Meanwhile, the input energy is entirely converted into mechanical energy, which means that the efficiency of the thermal circle inside the system can reach 100% (calculated according to the input heat from the heat exchanger with small mechanical loss neglected) without any efficiency reduction of wind power. This system has very high united efficiency and the electricity generation cost is very low. Compared with single thermal electricity generator or wind power electricity generator, this system is the most economical, environment friendly and worthy to be popularized.

The thirteenth application of the roudong volume variation method is to provide positive displacement fluid machinery arranged with a rotating shell by means of rotary roudong volume variation mechanism, including rotary roudong volume variation power generation machine or part with a rotary shell and rotary roudong volume variation power-done machine or part with a rotary shell. The former can be a rotary cylinder type rotary roudong volume variation internal combustion engine and a rotary cylinder type rotary roudong volume variation pneumatic motor, in which the rotary cavity may be the outer rotors of the loading machine, such as a circle saw for cutting rocket or woods. The latter includes rotary cylinder type rotary roudong volume variation compressor, rotary cylinder type rotary roudong vacuum pump, rotary cylinder type rotary roudong volume variation two-phase pump, rotary cylinder type rotary roudong volume variation two-phase vacuum pump, and so on. Hydraulic rotary roudong rotors can be used as efficient and structure-simple wheels of automobiles, trains, tractors, and engineering machines. Specifically, the variable-pressure cavity and constant-pressure cavity of rotary roudong volume variation pneumatic machine with rotary shells are located respectively in front of and rearward of the seal line of the roudong cavity. The rotary cylinder type rotary roudong volume variation internal combustion engine has a rotary roudong volume variation mechanism as the main part and is equipped with a constant volume heat absorbing pulse combustion chamber and components of air compression, fuel compression, air and fuel time ejection. The combustion chamber is arranged in the roudong rotor, with an inlet located at an end face of the roudong rotor and connected instantaneously with the air and the fuel ejection nozzle during ejecting, and an outlet connected with the inlet of the volume variation cavity at one side of partition board. The outlet of the constant-pressure cavity is connected to the inlet arranged at the other side of the partition board and is further connected to a vent-pipe via an internal channel through the shaft pipe at the crank shaft end of the roudong rotor. The inlet of the variable-pressure cavity and the outlet of the constant-pressure cavity of rotary cylinder type rotary roudong volume variation pneumatic motor are arranged on the cylinder surface of the roudong rotor at two sides of the partition board. The former is connected to an inlet pipe via the internal channels and an opening in the end surface of the roudong rotor in a proper period of time and the latter is connected to an outlet pipe via the internal channels and the shaft pipe at the crank shaft end of the roudong rotor. The variable-pressure cavity and constant-pressure of rotary roudong volume variation power generation machines with rotary shells are located in front of and rearward of the sealing line of the roudong cavity respectively, wherein the outlet of the former and the inlet of the latter are respectively arranged at two sides of the partition board and are connected respectively to the outlet pipe and the inlet pipe via the internal channels of the roudong rotor and the shaft pipe of the crank shaft. Pneumatic motors and hydraulic rotary roudong rotors also include the structure of double cavities linked in parallel with a 180 degree offset to eliminate start dead point and pulsation.

The design of the thirteenth application of the present invention is a colossal system which almost comprises all work-energy-converting machines and a majority of transmission machines, particularly high-speed machines. This design is widely used because the rotary roudong volume variation motion has extraordinary advantages in which the characteristic that the roudong cavity rotates and roudong axis is stationary satisfies the requirement of the motion in many machines. In the structure in which the roudong cavity is stationary, the cost of structure, constraint and transmission are high. Therefore, the rotary roudong well satisfies this kind of requirement. Among all the available machine types, rotary cavity rotary roudong volume variation internal combustion engines and hydraulic rotary roudong wheels are of the widest prospects.

The most considerable advantage of the rotary roudong volume variation method is that it has no dynamical balance problem. As stated above, because the roudong momentum moment is reduced by 2 orders of magnitude, the dynamical problem of roudong mechanism has been released in orders of magnitude compared with the volume variation method of sweeping bore rotation of eccentric wheel. However, when running at high speed, the symmetric balance design of crank shaft and roudong volume variation mechanism is needed to actualize the dynamical balance of roudong volume variation mechanism. In rotary roudong motion, a roudong cavity body rigidly connected to the followup partition board can be simply designed as a dynamical balancer, so can the roudong rotor. The crank shaft is stationary and does not need dynamical balance, so all the dynamical balance problem can be solved simply.

Other advantages of the rotary roudong volume variation method can be explained by examples. Advantageously, for example, the cooling characteristic of rotary cavity type rotary roudong volume variation compressor is very good so that additional fan structure is unnecessary. The rotary cavity of rotary cavity type rotary roudong volume variation two-phase flow pump used for heat pump compressor can be the rotor of an electromotor, so there's no need for transmission structures and the structure is compact in whole.

The hydraulic rotary roudong wheel is particular advantageous which has a stationary shaft and simple bearing connection and turning connection to the chassis. The suspension and load bearing structure that drives motorcar shaft in existing techniques is complicated and the turning mechanism is inconvenient to be incorporated. This is the reason why AWD (all wheel transmission) off-road cars are expensive. The assembly and transmission method of hydraulic rotary roudong wheel make that actualize AWD can be actualized just by applying a hydraulic rotary roudong wheels to each wheel of the car. The pump of split automatic clutching and speed reducing transmission is integrated with and in coaxial with the engine, while the rotor is the wheel. Then, the transmission device on the car chassis is just several parallel pipelines to fix the wheels and its cost is neglectable. The braking function without brake and heat can be integrated into a hydraulic gearbox. Only the suspension and turning mechanism need to be considered in the design of chassis and its structure can be simplified a lot. Transfer and differential characteristic of this kind of car are also very good.

If the hydraulic rotary roudong wheel is thus applied to train and AWD of each wheel and total hydraulic brake without braking heat are actualized, the motive is unnecessary. Then train can be modified to a set of car-unit groups, each of which is provided with a small roudong internal combustion engine inside. Correspondingly, the gradient of railway is allowed to increase from less than 2% to 20% and the risk of bush burning in long declivity braking is eliminated. If the train can go up and down declivities, it is possible to build railway in the area, where it is usually impossible to do so, without building bridges and tunnels and the bridge strength can be calculated according to car unit rather than locomotive. Thus, the cost of building railway can be reduced half and technical reform might follow up. In conclusion, merely the special application design of hydraulic rotary roudong wheel is possible to considerably influence the car transport and railway transport. If this kind of wheel is applied to other vehicles, its advantages are positively very huge too.

The fourteenth application of the roudong volume variation method is to provide a roudong two-phase flow heat pump compressor and a heat pump system by means of roudong volume variation mechanisms, such as roudong two-phase flow refrigerator compressor, roudong two-phase flow air-conditioner compressor, roudong two-phase flow refrigerating warehouses compressor and roudong two-phase flow heat pump water-heater compressor used respectively for refrigeration of refrigerator and refrigerating warehouses, refrigeration or heating of air-conditioner, heat pumping of water-heater by integrating and storing heat from solar plant or environment heat exchanger and composing complete machines. This kind of heat pump compressor is mainly composed of roudong two-phase flow compressor and is linked with a roudong feedback motor in coaxial which is used for decompression instead of throttle pipe so as to recycle pressure energy, reduce main shaft power and avoid throttling friction heat. In the system or complete machines, refrigerant and heating material are in a two-phase state mixed of air and liquid all the time. It will go through 4 processes to finish the closed cycle: an adiabatic compression process in which the temperature and pressure of low temperature low pressure high air-liquid proportion two-phase flow are increased in a compressor, a condensation process in which high pressure high temperature high air-liquid proportion two-phase flow releases heat almost isothermally and isotonically in a high temperature condensing device, a adiabatic energy releasing process in which the temperature and pressure of high temperature high pressure low air-liquid proportion two-phase flow are reduced in a feedback motor, and an evaporation process in which low temperature low pressure low air-liquid proportion two-phase flow absorbs heat almost isothermally and isotonically. The evaporator uses the disposition of gravity flow of vertical drop or is provided with several additional stepped tiny liquid seals which are used for blowing bubble. The fall of liquid and bubble blowing can increase internal disturbance and convention, and they also increase the occurring probability of small curvature radius protruding evaporation surface, so as to form supercooled steam temperature-reducing evaporation mechanism. The condenser uses the disposition of contrary gravity flow of vertical raise to form a bubble floating mechanism which can increase internal liquid-air disturbance and convention and the occurring probability of small curvature radius concave evaporation surface, so as to form a superheated steam temperature-increasing condensation. The falling of liquid during a flexuous drop process and the floating of air during a flexuous raise process mechanically agitate working media in a different phase respectively so as to enhance the heat exchange in the transverse direction. In the longitudinal direction, both the falling of liquid during a flexuous drop process and the floating of air during a flexuous raise process produce gravity heat pipe effect to eliminate the temperature difference during flowing process. As a high thermal conductivity medium, liquid plays a role of strong carrier of transverse heat exchanging inside the two-phase flow and between the two-phase flow and the pipe wall during churning. The churning and heat pipe effect reduce heat exchanging temperature difference obviously. Besides, liquid plays a role of sealing and lubricating in the compressor and the motor. Its leaking loss is nearly reduced to 0. The compressor could also rotate in a manner of rotary roudong and be enclosed along with an electrical motor, wherein the rotor of the electrical motor acts as roudong cavity. Thus, transmission parts are not required so that the structure is simplified. A solar water cleaner or cleaning-heating device may be formed by roudong two-phase flow heat pump compressors with considerable energy saving effect.

It is a special function characteristic of the present invention that two-phase flow can be applied to compressor and the air-liquid proportion can be selected from the range of 0 to 100% as will. This characteristic can be widely used and the two-phase flow heat pump compressor is just one example. The design of this example can provide a new solution for refrigerator, air-conditioner, refrigerating warehouses compressor and other heat pump system.

In existing techniques, it is unbelievable that two-phase flow can enter compressor directly. The two-phase flow existing in nature, such as petroleum containing low boiling point components and natural gas containing oil and water should be separated to gas and liquid strictly before compression. Liquid is not allowed to enter compressor. If liquid enters a reciprocating compressor, it will cause shutdown of the machine or damage to the water hammer. When a worm wheel compressor runs, even submillimeter level water beads could cause damage to the vane. Spray cooling technology of gas turbine compressor requires fog beads in micron level, so it has to eject high-pressure hot water at about 200 °C so as to bring lots of heat by the cooling water. It is obvious that compression with a two-phase flow is a problem in existing techniques.

Two-phase flow compression is not a problem in the present invention, but an efficiency increasing means which can be used flexibly. Such measures as non-throttle decompression, liquid self-churning, underway heat-pipe effect reducing temperature difference, supercooled steam temperature reducing evaporation, superheated steam temperature increasing condensation, liquid sealing and so on added to the stated design are all based on two-phase flow circling. The efficiency increasing mechanism and its effects are explained in the following:

1. Non-throttle depression means the decompression is achieved by pushing motor to do work instead of by friction in traditional throttle pipe. Therefore, it not only recycles pressure energy and reduces shaft power, but also avoids throttling friction heat. It kills two birds with one stone.

2. The temperature difference is considerably reduced through fluid self-churning and underway heat pipe effect. The former impacts the laminar flow with low heat exchange ability to form turbulence with good heat exchange ability which will significantly reduce the transverse temperature difference to one of several parts. The latter significantly reduces longitudinal temperature difference to one of several parts or even eliminates it. The longitudinal temperature difference at one side in existing techniques could be ten to twenty degrees centigrade. The longitudinal temperature difference is the main process temperature difference that is the internal temperature difference. The refrigerating coefficient of heat pump is in converse ratio with the total temperature difference and it is very sensitive. For example, the total temperature difference of a heat pump with a lower temperature of 273K and a refrigerating coefficient of 4.55 is 60K calculated according to Karnot formula. Suppose the external temperature difference (such as of an air-conditioner) is 20K, then the total internal temperature difference is 40K. If the internal temperature difference can be reduced by 75% i.e. 10K (5K for each side), the total temperature difference becomes 30K and the refrigerating coefficient increases to 9.1. Thus, for the same external temperature difference and refrigerating power, the electricity consumption can be reduced by 50%.

3. Supercooled steam temperature reducing evaporation and superheated steam temperature increasing condensation can be advantageously affected. The design of supercooled evaporation and superheated condensation are based on the technology of molecule mechanics of phase transition physics and can be intuitively understood as evaporation under boiling point and condensation above boiling point. The key of this technology is to form protruding vaporizing surfaces and concave condensing surfaces and make their curvature as small as possible. In the design of two-phase flow flowing state, the target condition happening probability can be increased by using an evaporation process in gravity direction with ladder tiny liquid encapsulation and a condensation process in a direction opposite to gravity direction. This design can produce an effect of heat transfer with phase change and negative temperature difference. Estimating according to the illustrated data above, suppose each of them can produce -5K temperature-variation gain i.e. -10K temperature difference, then the internal temperature difference will becomes 0K and the total temperature difference of the machine will be 20K. Accordingly, the refrigerating coefficient increases to 13.65 and the power consumption of machine reduces 67%.

Although mechanical efficiency, volumetric efficiency and other factors are not taken into account in the above examples, they don't affect much, and the illustrated data are within the practical and theoretical range. In conclusion, the heat-variation coefficient of roudong two-phase flow heat pump system is possible to double, which means, for the same heating or refrigerating power, the power consumption can be reduced by 50%. That is incredible, but is available in the present invention based on science.

Another important effect of roudong two-phase flow heat pump compressor is that it can reduce manufacturing cost and noise and prolong life. For example, the structure and processing requirement of roudong mechanism, especially of rotary roudong mechanism are simpler than the state-of-the-art scroll compressor, so it has lower manufacturing cost.

Roudong two-phase flow heat pump compressor and heat pump system are never known before and include, for example roudong two-phase flow refrigerator compressor, roudong two-phase flow air-conditioner compressor, roudong two-phase flow refrigerating warehouses compressor, roudong two-phase flow heat pump water-heating compressor and so on. Said applications have been highly popularized with huge amount. As a special application of present invention, the roudong two-phase flow heat pump compressor aims facilitating energy saving and environment protecting. It has a lot of positive effects, wherein the refrigerating coefficient or the heating coefficient can be approximately doubled or even more in the case of a heat pump with a high target temperature and a small temperature difference.

A roudong auto-driven solar water-cleaner and water cleaning-heating device can be formed with a roudong two-phase flow boiler heat pump compressor. It is a household roudong multi-function device which uses tap water residual pressure (about 200kPa) as the mechanical power and uses solar energy as a heat source. It is mainly composed of roudong motor-two-phase flow pump-water pump set, solar bask plant and air heat exchanger. Roudong hydraulic motor which is connected in series with a tap water pipeline runs when water flows and its power can reach about 100W. If daily water consumption is 200kg, the integrated energy is about 40KJ. A roudong two-phase flow pump which is in coaxial with the roudong hydraulic motor is especially used for drawing out all distilled water and non-condensative gas to keep negative pressure. Another coaxial throttle micro-flow pump draws out the tail water which converges at a hot water outlet. The daily drawn out water is about 5kg to maintain the hydronium concentration in low level, and the total energy is enough for running. A constant liquid level valve is used for water supply so as to compensate for the evaporation. Solar heating pipes supply hot water about 50°C to the distillation device by natural convection. Steam runs downwards to be condensed to distillated water in shell side or tube side. Non-condensative air gathers around the distilled water surface to facilitate being removed. The pipe that is connected downstream of the water motor is supplied with condensate water automatically. Its outlet is expanded and connected to the lower part of shell side or tube side of the heat exchanger through a baffle. A hot water tap is arranged on the top. At north altitude 45 degrees, a 2 $m^2$ solar plant can averagely receive 44000KJ heat a day. Accordingly, this device can produce about 20kg distilled water every day which is enough for supplying a family. And it can produce 300kg 45 °C hot water every day which is enough for the hot water need of a family. This device has low manufacturing and purchasing cost and is driven by environmental useless distribution energy, so the total cost of ownership is low. To drink distilled water and use hot water can improve people's life quality and healthy level. It is especially suitable for the area with poor water quality. If it is popularized in large areas, the requirement of public water source can be lower. It is good for both the nation and the people.

To introduce a heat pump heating procedure into the wind power-air compression-electric power generation system and hydraulic power-air compression-electric power generation system stated previously means to use a roudong two-phase flow heat pump to pump low temperature heat (with a temperature of 350K and a temperature varying coefficient of 10) from the environment. The heating process is an isotonic heat absorbing process and causes the increase of temperature, volume and enthalpy. Its heat efficiency could increase 7%. Herein, the heat pump transfer low temperature heat in a process, while the roudong pneumatic motor transforms low temperature heat into mechanical power efficiently (the efficiency could be 90%) in another process. The real-time connection of these two processes can provide the benefits of several times higher mechanical power or high-quality energy. From the view of effect, inconceivably, it seems that "thermal Maxwell spirit" is employed to make power. Actually, the heat pump system conveys low temperature heat by outer forces, which obeys the second law of thermodynamics, and t converts low temperature heat into power, which is a miracle connoted in the first low of thermodynamics. The key to make the miracle is to choose an enthalpy increasing carrier and its thermal process and to control the lift range. Optionally, the carrier could be low temperature air which is about to used for expansion or combustion, low temperature fuel which is about to combust, low temperature water which is about to be heated and so on. In other words, to gain power or high-quality energy proceeds with a heat pump is conditional and limited in a certain range.

The fifteenth application of the present invention is to provide a roudong optimizing air-gas proportion internal combustion distribution booster pump by means of a roudong volume variation mechanism. The booster pump includes roudong optimizing air-gas proportion distribution booster pump used for the roudong internal combustion engine of the present invention, reciprocating internal combustion engine roudong optimizing air-gas proportion distribution booster pump for improving existing techniques and roudong optimizing air-gas proportion distribution compressor for gas turbine, wherein the last two require the main machines to be refitted to an outer compressing two-stroke type gas compressor and a gas compressor without worm wheels. Distribution booster pump or distribution compressor are both assembled by air metering booster pump and fuel (including gas and oil) metering booster pump in coaxial and are connected to the main shaft of the engine. Alternatively, they can be of a split type so as to have better dynamical adjustment characteristic driven by an additional speed-variable roudong hydraulic motor or electromotor. The mass flow of air metering booster pump and fuel metering booster pump is distributed according to an optimized air-gas proportion and is actualized by converting it to a ratio of inlet volumetric flow at a certain pressure. For example, the air pressure at the inlet could be the atmosphere pressure or a certain constant pressure obtained through pressure stabilization measures depending on its altitude, so does the combustion gas. When considering the atmospheric humidity, an additional automatic control device can be provided to adjust the air margin coefficient so as to stabilize the oxygen mass flow. The air compressor operates in a two-phase state. It sprays enough cold water into its air-inlet channel and roudong cavity to form fogdrop distribution in diffusion and output a water-air two-phase flow. In the compression process, water is used for space cooling, wall cooling, heat flow loading, dynamical sealing and lubricating and is the key element to actualize efficient isothermal compression. In the roudong compressing process, air achieves target pressure at one time. The target pressure is a binary function of rotation speed and volumetric flow and is determined as required. The output two-phase flow enters a separating, buffering and adjusting device which can increase the dryness of the separated air, for using as high quality high-pressure air source. The separated cooling water enters a coaxial roudong feedback motor to recycle pressure energy. The flow rate of cooling water is adaptively adjusted by a constant liquid level floating valve of the separating, buffering and adjusting device.

Roudong optimized air-gas proportion internal combustion engine distribution booster pump is a special application of the present invention and is a prominent technical innovation in the field of internal combustion engine, characterized in that the flow distribution is metered to actualize optimized and precisely control for air-gas proportion, the compression is performed at a constant temperature to reduce compression specific power to the minimum, the cooling water is separated and the pressure energy is recycled to eliminate the air emission latent heat loss.

Metering flow distribution facilitates precise and simple control of the air-gas proportion. The air-gas proportion is roughly adjusted mainly depending on manual operation in existing techniques. The PMC module in car computer just has the some simple check and control functions such as chock open range, intake manifold pressure and speed sensing and speed variation control, but without air-gas proportion closed loop control. The gas turbine computer system has flow state checking and adjusting function whose control error is very big. In manual or automatic control systems, there are neither metering nor basic components of proportional distribution. When conventional thermal machines work at a variable altitude, variable climate, variable working condition, for example, in a speed variation process, air-gas proportion maladjustment may occur, resulting in such problems as pollution and insufficient power. So called tableland disease or tableland reaction of some engineering machines results from the maladjustment. The design of the present invention plays a key role on solving the problems of power generation, efficiency and pollution of thermal machines. Metering the flow distribution in real-time at a constant proportion according to an optimized air-gas proportion based on chemical reaction is the extreme performance solution of air-gas proportion control.

Isothermal compression is an important way for increasing power and efficiency. The specific power of adiabatic compression is the largest among all compression types and is twice or even larger than isothermal compression, with the cost that in reciprocating internal combustion engine, the compression occupies half of the operative time and half of the space of the machine, which causes double mechanical loss and is a key restriction that limits the compression ratio and thermal efficiency in diesel engines. Compared with isothermal compression diesel engine turbo technology, the present invention is more simple and practical and can provide a higher compression ratio. Two-stroke modification can make the specific power double and the specific loss reduces to half. It is most important that the compression specific power is small. In the isotonic heat absorbing gas turbine, because of the adiabatic compression, the compression power with the compression ratio less than 10 consumes two third of the expansion power. Although the compression power is involved in the thermal circle, it causes serious circle loss and enlarges the cost of machine dimension and strength.

TOPHat (Humid air gas turbine) circle developed in recent years uses water-spray cooling for decreasing compression work. The rotary flow flash drying technology developed by a Netherlandish company can reduce the fogdrop diameter from 24 μm to 2.2 μm and increase specific power and enhance efficiency by 2%. However, the cooling water of TOPHat enters the thermal circle directly and causes an air emission latent heat loss. The midway cooling technology developed in Japan won't increase the latent heat loss, but has limited cooling effect, huge cubage and high cost.

The design of the present invention can actualize isothermal compression whose compression specific power reduction ratio is 39% compared with gasoline engine whose compression ratio is 10, and is 47%~63% compared with diesel engine whose compression ratio is 18~80. It is not amazing that it can save power to such a large extent because the isothermal compression is an extreme performance solution to reduce compression specific power.

Cooling water separation and pressure energy recycle will now be described, wherein cooling water separation is of great importance. As stated previously, if cooling water enters the thermal circle, it will bring about a large latent heat loss. It is because the heat of vaporization of low temperature water is about 2250KJ/kg. Specifically, the gas specific energy loss is in direct ratio with the percentage content of cooling water. There is originally about 1%~4% water in the air, and the combustion of fuel will also produce a large quantity of water, so that the latent heat loss will exceed 10%. The addition of cooling water will further reduce the thermal efficiency. Cooling water cannot be separated in the prior. The design in the present invention can actualize completely separation of cooling, water which won't cause new latent heat loss but increase air dryness and reduce the inherent loss caused by atmosphere humidity. The isothermal compression stated in the present invention needs relatively large cooling water flow, and has considerable compression energy. Thus, the pressure energy recycle of cooling water is significant. Because of the efficiency of each step and the recycle of pressure energy, the water circle loss of isothermal compression only cause a efficiency reduction less than 0.2%. Thus, it is easy to see that separating cooling water and recycling pressure energy while compressing isothermally is an extreme performance solution to reduce latent heat loss and increase efficiency.

Said three functions of roudong air-gas optimized internal combustion engine distribution booster pump and its applied types which actualize isothermal compression are unprecedented innovations and are all extreme performance solutions in which the performance (efficiency) is superior to the other solutions. If there is no limit of cost or anything else, it will be the best solution. Compared with current hot techniques, it will be found that the design of the present invention is very simple but it is a solution that can solve all the problems simply. Accordingly, the solution of the present invention is feasible and is the best solution for fuel and air distribution and compression system of internal combustion engine.

The sixteenth application of the present invention is to provide a roudong gas stove proportional distributor by means of a roudong volume variation mechanism. Said distributor distributes air and gas proportionally according to optimized air-gas proportion and makes gas and air enter the stove proportionally to implement a closed combustion and heat exchange, so that the gas can combust without producing pollution, meanwhile the smoke flow and smoke heat loss which is in direct ratio with smoke flow can be reduced to minimum. The distributor is composed of a gas metering pump and an air metering pump connected in coaxial. Both the components adopt the mechanism of double cavities linked in coaxial with a phase offset to eliminate start dead point and pulsation. The distributor is mounted downstream of a regulating valve and is driven by decompressed gas. Thus, the gas component runs as a pneumatic motor. Its rotation speed is very low, so the loss is very small. The pressure of two kinds of gas at four inlets and outlets altogether are nearly the same which all equals the atmospheric pressure. The displacement of gas roudong cavity and air roudong cavity of the distributor equals the volumetric flow ratio which is the product of mass flow ratio and specific volume ratio. The mass flow proportion of air is calculated from the oxygen proportion required in the combustion reaction of gas compositions. The distributor might contain a low resistant throttle valve which is used for fine adjustment of the pressure at the air inlet so as to change the air margin coefficient. The air margin coefficient is calculated from the gas compositions and the fluctuation ranges of pressure and humidity, and is designed in displacement ratio according to its upper limit. The factor of pressure increase or decrease might be included by torque balance equation, Boyle-Mariotte law or state equation.

Roudong gas stove proportional distributor is an actual example of atmospheric pressure combustion proportional distributor in which the metering pump according to the present invention is employed. The gas stove in existing techniques is of low efficiency. It's easy to measure its efficiency which is even lower than internal-combustion engine. There are two main reasons for the low efficiency. The first is the distribution ratio. For the gas stove with natural convection, the air flow caused by convection is several times higher than needed. If measured with respect to average temperature increase, the temperature increase is in inverse ratio to the smoke flow rate. The loss caused by heat and carried by smoke is in direct ratio with its flow rate. This kind of loss causes about a half energy loss actually and leads to a low efficiency. Other kinds of loss include heat radiation loss, heat exchange loss and so on. The sum of these losses far exceeds what is effectively used.

The design of the present invention can avoid the convection loss stated previously by controlling the air flow and substantially increase the efficiency. Because gas stove has been popularized to thousands of families, to increase the efficiency of gas stove is important in relation to energy consumption and green-house gas emission. The present invention is directed to increase the efficiency of gas stove.

The seventeenth application of the present invention is to provide roudong versatile fluid machinery by using roudong volume variation mechanism according to roudong volume variation method and the definition and design of versatile fluid machinery. It is a kind of versatile fluid machinery designed with versatility and contains the characteristics of multi-function, phase versatility for different mediums, continuous adaptability of pressure and power without a lower limit. Versatility parameters are marked on it. The versatility parameters comprise at least 4 basic parameters, i.e. pressure resistance, shaft strength, speed limit and displacement, and other parameters like optional function and non-basic parameters. This kind of machine runs within the limit of versatility parameters and has satisfying efficiency.

When and only when adopting versatility parameters, roudong fluid machinery becomes versatile fluid machinery. This can be achieved in threes steps. The first step is versatility planning, in which the basic versatility parameter space is divided scientifically and economically and the versatility type and series criterion are determined according to the division. The versatility type and series criterion is the spectrum of versatility type and specification and the corresponding versatility parameters, including necessary standards. The second step is versatility design, in which the versatility type specification and basic parameters are selected from versatility type and series criterion, and, accordingly, product is designed and the versatility nameplate is assigned. The third step is versatility applying, in which the versatility product are configured and used to meet the sum of need. The safety condition and actual operation parameters should be determined according to basic parameters of versatility, or actual working point should be selected directly from versatility parameters according to time. Economical efficiency principle should be considered all through.

As stated above, roudong fluid machinery has contained all the characteristics of versatility which are function reversibility, continuous adaptability of pressure and power without a lower limit and phase versatility for different mediums. However, the complication in theory and the risk in practice of versatility don't allow endow the connotation property to a product directly, because science should be clearly defined and the latent versatility is difficult to understand. The boundary of versatility will be uncertain and can't guarantee the safety if it is not planned systemically nor designed concretely. A property which is difficult to understand and uncertain to be safe can't be endowed to a product.

By embodying the definition and design of versatility of the present invention, the concept of versatile fluid machinery is certain and understandable, meanwhile the versatility of product is certain, verifiable, propagable and usable. Thus, the product becomes versatile fluid machinery. Versatile fluid machinery is an extension of versatility connotation of roudong fluid machinery and with only two necessary and sufficient conditions which are adopting roudong volume variation method and designed with versatility. The roudong volume variation method is a sufficient condition to give versatility connotation to a product and being designed with versatility is a necessary condition to give versatility property to a product.

There are no special difficulties for the design, manufacture and use of versatile fluid machinery. All the difficulties focus on the versatility planning, which is essentially a difficult mathematic problem. Therefore, this work can only be completed by specialists in this area with as much technical and economical knowledge as possible by using a maturated mathematic model and advanced computing technology.. It should be mentioned that the planning for versatile fluid machinery is much simpler than the planning for existing techniques and the workload can be reduced by orders of magnitude.

After the versatility design, roudong fluid machinery obtains a new property, i.e. versatility based on specification, and then becomes versatility fluid machinery. There is only one characteristic for versatility products which is the versatility nameplate used to show the information of the versatility and the method to use. The information comprises the type specification and the versatility parameters selected during versatility design. Besides this, there is no other external characteristic for versatility products.

When using the versatility fluid machinery, user only needs to confirm whether the operation parameters are beyond the versatility parameter range shown by the nameplate. If there are only basic versatility parameters, it only need to calculate the rotation speed from the displacement and the selected flow rate, then calculate the shaft torque from the rotation speed, the medium parameter and the required pressure and compare whether the pressure, the torque and the rotation speed are beyond the range at last.

The versatility of fluid machinery is a systemic optimal engineering in the technical field and it can considerably simplify the type spectrum. In view of the physical and mathematic essence of basic quota system comprising pressure resistance, shaft strength, speed limit and displacement, it is 4 dimensional apparently, but it is 3 dimensional essentially. The parameters of pressure resistance and displacement are independent and can directly form series which should cover the multi-order range of actual need to meet the maturity of its dynamic range. Speed limit is a function of flow rate which is an independent variable. Its series should be planed according to flow rate and displacement. The covering range of shaft strength is determined by the distribution ranges of physical parameters such as pressure, flow, density and viscosity of all possible medium. The planning criterion should cover the dynamical ranges of independent or dependent parameters so as to provide the criterion with maturity. The economy of planning is determined by how many levels each parameter is divided into and how to determine the interval of levels.

Versatility comes from and is shown as the coverage of type and series parameters. Speed is selected between 0 and the speed limit. Therefore, with respect to the rotation speed dimension, high-speed rotation specification always totally covers low-speed specification. With respect to the flow dimension, large-displacement specification always completely covers small-displacement specification. Pressure is selected between 0 and the pressure limit, so with respect to the pressure dimension, the specification with high pressure resistance always totally covers the low pressure resistance specification. Since torque is selected between the minimum shaft strength specification and maximum shaft strength specification, with respect to the shaft strength dimension, the high strength specification always completely covers the low strength specification. Besides, since flow, pressure, medium density, and medium viscidity are stochastic variables determined as needed, rotation speed is a unitary function of flow rate, and torque is a multi-variable function of flow rate, pressure, density and viscosity, an interrelated restriction is thus formed and shields a portion of the above mentioned coverage which can not be used. All the other portions of the coverage which are not shielded hereby form the general category for a certain type's specification. Research shows that the design of the present invention can be generally used in wide categories.

The versatility, as a systematic creation, reflects the perfect adaptability. The versatility specification is a systematic resource for manufactories to reduce cost and it is also a systematic resource that benefits users by increasing the usage probability and reducing the purchase expense. The increase of the equipment's usage rate and value is designed to expand the benefits of users and society.

Roudong versatile fluid machinery breaks many limitations. Specifically, all the functions of both positive displacement and non-positive displacement can be efficiently actualized in roudong machinery; the functions of both pump and motor can be obtained in the same roudong structure in a reversible way; the roudong method is adaptive to all pressure levels and power levels and is adaptive to medias of different density and composition; liquid, gas and two-phase flow are integrated into one without differentiation in roudong method. It is obvious that roudong versatile fluid machinery represents an unprecedented technical panorama.

One example of the application of versatile fluid machinery is illustrated below. The nameplate of a roudong versatile fluid machine is marked as follows: pressure resistance 1MPa, shaft strength 2.54kNm, speed limit 2900r/min, displacement 1L. In an electrical motor with a 2900r/min speed limit, the volumetric flow is 48.3L/s. It can be determined after solving an inequation that when this motor pumps water within a 0~102m lift or be used as an isothermal compressor under a 0 ~ 1MPa pressure, it can run safely and efficiently (the efficiency designed as 90 %), and the output pressure and power are determined as will within the above mentioned limits (excluding the power efficiency of the electrical motor).

Roudong versatile fluid machinery is characterized as a multi-function and versatile (with continuous adaptability without a lower limit) fluid machinery. Compared with the limitations of traditional fluid machinery in which one machine has only one function and one application, the multi-function and versatility of the fluid machinery is a humanistic design aiming at returning freedom to users, maximizing the resource value and labor value and minimizing the damage to environment, so it is a sustainable design.

7. Industrial practicability

The roudong volume variation method for fluid machinery of the present invention is an inaugural new method and the roudong volume variation motion of the present invention is the third kind of motion for the energy change in fluid machinery. With this kind of motion which is linearly composed of rotation and revolution, a high efficiency can be obtained and the linear speed and related loss ratio can be reduced by orders of magnitude compared with traditional motion. The high efficiency means that the demand for energy and the emission of green-house gas which are of inverse ratio with efficiency can be highly reduced. The present invention can satisfy the urgent need of the modern industrial society which suffers from energy crisis and environment crisis.

The roudong motion composed of two circular motions is still a kind of simple mechanical motion. Its kinematic and dynamic analyses are a little more complicated than piston motion and impeller motion, but this work is the duty for specialists. The framework of roudong dynamics constructed in the present invention has included mechanism dynamics, mechanism kinematics, fluid dynamics and compressive fluid thermodynamics and there is no theoretical gap for deep deduction and analysis. The invention having a theoretical base is the clearest, the most reliable, the most practicably repetitive and this is the scientific base of the present invention and is also the correctness precondition of industrial practicability.

Another criterion for industrial practicability is the economical efficiency on macro and micro bases. Said high efficient, environment-protecting characteristics show the predominance in operation and its advantage in manufacturing cost is actually even more considerable. Roudong machines have simple structures and less components and parts. Besides standard parts such as fasteners, many practicable single machines that the inventor personally designed comprise totally less that 20 parts and there are only 9 parts for the least. The manufacturing cost of cylindrical roudong cavity and roudong rotor of said roudong machinery is very low, and the compact structure and the time-area continuity during function realization of said roudong machines produce very high power and functional density. That gives the present invention surprising characteristics of easy manufacturing and low cost. Compared with existing techniques, the demonstrated cost of many kinds of applied machine types of said roudong machines reduces by 50%~80%. Roudong versatile fluid machinery is even a low cost technology based on a large system.

The main industrial practicability advantage derives from the innovation of motion type. This kind of innovation is of significance and only appears once in thousands of years. In China, the history of piston motion could retrospect to bronze smelting blast technology invented by Chiyou about 4000 years ago; fluid machines that include circle motion also could retrospect to longgu waterwheel invented by people in Han Dynasty. Piston thermal engines of Watt type, Otto type and Diesel type and impeller fluid machines with circle motion all of which compose neoteric and modern industrial civilization are inventions after late 17th century. In the human civilization history, there are only these two kinds of motion types of fluid machine. The present invention creates a new kind of motion, i.e. roudong volume variation motion, and demonstrates its advantages in dynamics characters and broad adaptability in multi-areas when it takes place of piston motion and impeller motion. Its three main industrial practicability advantages are high efficiency, environment protecting and low cost. This kind of motion seems to construct a basis for the new industrial mode which is proposed and called urgently by social economics.

**Claims**

**1.** A roudong volume variation method for positive displacement fluid machinery, including setting and application of motion form, structure composition, mechanics principle, function and performances, **characterized in that**: a volume variation motion of a volume cavity is constructed in the form of a roudong motion by the combination of a revolution and a rotation in an inverse direction but with the same velocity; a roudong volume variation mechanism is included in the positive displacement fluid machinery and is composed of a roudong mechanism, a roudong cavity constructed as a cylindrical cavity and a followup partition board which is a plate-shaped member moving with a roudong rotor and is provided with many restraint types, the roudong rotor of the roudong mechanism roudongs in the cavity, and it is tangent with the inner wall of the cavity to form a crescent-shaped cylindrical cavity, the cavity is divided into a variable-pressure cavity and a constant-pressure cavity by the partition board, the two cavities are connected separately to an inlet and an outlet or an outlet and an inlet, the volumes of the two cavities vary periodically and complementarily, the fluid volume increases actively or decreases passively in the volume variation motion of the variable pressure cavity with a continuous or stepped decrease or increase of pressure, and with an additional continuous increase or decrease of specific volume for compressible fluid, the volume variation motion in the constant-pressure cavity only makes fluid be pumped in and out under a constant-pressure, the function of the machine is performed directly by the volume variation motion of one of the two cavities, the volume variation motion of the other cavity is an auxiliary process, particularly, the variable pressure cavity and the constant-pressure cavity are both enclosed of an internal surface of the roudong cavity, an external surface of the roudong rotor and a sealing surface of the followup partition board, and the two cavities are separated by the sealing line of the roudong cavity and the followup partition board, the rotation of the space occupation of the roudong rotor forms a continuous-relay bore sweeping or bore pressing motion, accordingly, the position and volume of the variable-pressure cavity and the constant-pressure cavity are changed periodically, when the main shaft rotates for one period, the volume of the variable pressure cavity increases continuously from zero to the maximum value, or decreases from the maximum value to zero, forming a working period of variable pressure and variable volume variation, in which the pressure is decreased to release energy from the fluid or the pressure is increased to energize the fluid, the volume of the constant-pressure cavity decreases correspondingly from a maximum value to zero or increases from zero to the maximum value with fluid being pumped out and in under a constant-pressure, and this process goes synchronously with the variable pressure process.

2. A roudong mechanism used in a roudong volume variation method for positive displacement fluid machinery, **characterized in that** said roudong mechanism is composed of a roudong rotor and a crankshaft restricting the roudong rotor, the roudong rotor is mounted on an eccentric section of the crankshaft by bearings, the rotation of crankshaft generates a revolution of the roudong rotor, and the roudong rotor rotates simultaneously around an eccentric shaft based on inertia in an inverse direction to that of the revolution at an angular velocity close to or identical with that of the revolution, forming a rotation., the revolution and rotation are combined into the roudong motion.

3. A roudong volume variation mechanism used in a roudong volume variation method for positive displacement fluid machinery, **characterized in that**:

    a. said roudong volume variation mechanism is composed of a roudong mechanism, a followup partition board and a stationary roudong cavity containing the roudong rotor, and the internal surface of the roudong cavity, the external surface of roudong the rotor and the sealing surface of the followup partition board enclose a variable pressure cavity and a constant-pressure cavity spaced apart from each other;
    b. the roudong rotor roudongs in the roudong cavity to generate a continuous relay type of bore sweeping motion or bore pressing motion so as to change the position and volume of the variable pressure cavity and the constant-pressure cavity periodically, when the main shaft rotates for a round, the volume of the variable pressure cavity increases continuously from zero to the maximum value, or decreases from the maximum value to zero, forming a period of variable pressure and volume variation, in which the pressure is decreased to release energy from the fluid or the pressure is increased to energize the fluid, the volume of the constant-pressure cavity decreases correspondingly from the maximum value to zero or increases from zero to the maximum value, and the fluid is being pumped out and in through an access beside the partition board under a constant pressure; and
    c. the roudong rotor integrates external forces such as the fluid pressure and self inertial dynamic counterforce in real-time so as to form a resultant force and a moment on the main shaft, the resultant force is equilibrated by the constraining force of bearings on the main shaft, wherein as a linear factor of the instantaneous shaft power, this moment has an reverse direction to the rotating direction of the main shaft for working machines, and has the same direction to the rotating direction of the main shaft for power generating machines, and it has only one zero value point in a rotating period of the main shaft.

4. A roudong volume variation mechanism used in a roudong volume variation method for positive displacement fluid machinery, **characterized in that**:

a. said roudong volume variation mechanism is composed of a roudong mechanism, a followup partition board and a roudong cavity containing the roudong rotor, the internal surface of the roudong cavity, the external surface of roudong the rotor and the sealing surface of the partition board enclose a variable pressure cavity and a constant-pressure cavity spaced apart from each other, and the whole mechanism rotates around an roudong axis in an direction opposite to the direction of revolution with the same angular velocity to that of the revolution, so the crankshaft is stationary;

b. the followup partition board is integrally connected rigidly with the roudong cavity and keeps a dynamic equilibrium integrally, the partition board in the roudong rotor is restricted in a cock with a slot, and can be withdrawn and inserted restrictedly in the cock, the cock can rotate in a limited range, an outlet and an inlet for fluid lie on the surface of the roudong rotor beside the partition board and are connected to a conduction channel and are connected respectively with a front cavity and a rear cavity located respectively in front of and rearward of the seal line, which could be the variable pressure cavity and the constant-pressure cavity, the roudong rotor makes a swing roudong in combination with a small amplitude swing with the same period in the rotating coordinate system, the roudong cavity and the partition board rotate around the roudong axis in the stationary coordinate system, and the roudong rotor and the outlet and the inlet for fluid rotate around the rotation axis, the rotation axis is the eccentric section of the stationary crankshaft and effluent, influent pipes for fluid pass through the end of the expanded crankshaft, and bearings that restrict the roudong cavity are mounted on the shaft end and their centerlines are coincident with the roudong axis;

c. in the rotating coordinate system, the roudong rotor roudongs in the roudong cavity to generate a continuous relay bore sweeping or bore pressing motion so as to change the position and volume of the variable pressure cavity and the constant-pressure cavity periodically, when the main shaft rotates for a round, the volume of the variable pressure cavity increases continuously from zero to a maximum value, or decreases from a maximum value to zero, forming a period of variable pressure and volume variation, in which the pressure is decreased to release energy from the fluid or the pressure is increased to energize the fluid, the volume of the constant-pressure cavity decreases correspondingly from a maximum value to zero or increases from zero to a maximum value, and fluid is being pumped out and in under a constant pressure; and

d. the roudong cavity and the rigidly connected partition board integrates the pressure force of fluid and the friction force of mechanism in real-time to form a resultant force and a moment acting on the roudong axle, the resultant force is equilibrated by the restraining force of bearings on the roudong cavity, wherein in as a linear factor of the instantaneous shaft power, this moment has an opposite direction to the rotating direction of the roudong cavity for working machines, and has the same direction as the rotating direction of the roudong cavity for power generating machines, and it has only one zero value point in a rotating period of the main shaft.

5. A roudong volume variation method for positive displacement fluid machinery as claimed in claim 1, **characterized in that**: the volume variation motion, and the practical movements of the volume variation mechanism and its particles are separated into correlative motion of different bodies with different tracks at different velocities, the degree of freedom of roudong of the mechanism is actualized by rigid constraints or rigid constraints in combination with flexible constraints, the linkage between the roudong mechanisms and volume variation motions with prodigious speed difference are actualized by the relay mechanism of particle motion of the roudong mechanism, the roudong volume variation motion constructed as above is planned to have the following new mechanisms and characteristics, these mechanisms and characteristics are incorporated into concrete designs of positive displacement fluid machinery to eliminate or decrease the factors resulting in inner mechanical loss pertinently, in order to correspondingly eliminate the loss or decrease its order of magnitude, the parameters of volume variation motion are designed according to the demanded function in the concrete design, and then the motion parameters of practical particle and mechanism are determined according to the parameters of volume variation motion, and when mathematical programming is used to optimize the design, the roudong ratio $\delta$ is used as an optimizing parameter and is contained in an index equation and a constraint inequation to optimize the aimed indexes and efficiency, the mechanisms and characteristics mentioned above are in the following:

a. the roudong mechanism roudongs with small amplitude and low velocity, the particle makes circular or elliptical motion with small amplitude and low velocity and the space occupation of the roudong rotor makes a bore sweeping motion with big magnitude and high velocity, wherein the motion of the space occupation results in the work cavity's volume variation, the motion of particle is the analytical element in connection with the kinetic and dynamic index of the machine, and the mechanism is a sequential assemblage of particles and serves as the organizer of motion to determine the calculating way of performance indexes and the boundary conditions thereof;

b. self-equilibrium is formed and used for the force system of moving mechanism to eliminate the normal pressure acting on the cylindrical walls of the working cavity and thus eliminate the inner mechanical friction loss, the mechanism friction problem caused by aging and random factors is eliminated rapidly and automatically by the self-repairing mechanism thereof without taking additional measures, with the precondition that the friction force is at a low order of magnitude and the friction velocity is a roudong velocity at a decreased order of magnitude, and therefore, the friction loss is preset as a small quality at a higher order which is enough to prevent shutdown and accident of thermal damage; and

c. the preselection range of roudong ratio $\delta$ is determined before mathematical planning to make the actual displacement, velocity, monument and inertial dynamic counterforce of the particle and the roudong rotor decrease by nearly one order of magnitude, to make the monument moment and kinetic energy decrease by nearly two orders of magnitude and to make the inner mechanical loss of end face marginal friction decrease nearly by three orders of magnitude or be substantially eliminated.

6. A roudong volume variation method for positive displacement fluid machinery as claimed in claim 1, **characterized in that**: the quantitative planning and design of the motion states and application characteristics of the volume variation motion, especially of the parameters related to loss, are carried out, and thus lubrication and lubricating device are not required in the working cavity with these states, characteristics and parameters:

   a. the parameters determining the running state, dynamic quality and loss characteristic of the roudong volume variation are: roudong velocity ratio=$\delta$, roudong momentum ratio $\approx 1.5\delta$, roudong momentum moment ratio $\approx 2\delta^2$, roudong kinetic energy ratio $\approx 2\delta^2$, roudong end face loss ratio $\approx 2.5\delta^2$ and roudong specific cylindrical surface loss ration $\approx \delta^3$ ;

   b. there is no mechanism friction on the cylindrical wall of the working cavity nor mechanism friction loss on the wall of the end face for liquid medium, for gas medium, the sealing ring which is possibly provided roudongs at low velocity and the mechanism friction loss is decreased by order of magnitude than that of the machine in the prior art in the same condition, and the estimated mechanism friction loss is about 10%; and

   c. in the dynamic sealing regions on the end surface and the cylindrical surface of the working cavity, the marginal friction loss is decreased by two orders of magnitude than that of the machine in the prior art in the same condition. The value estimated is less than 1%.

7. A roudong volume variation mechanism used in a roudong volume variation method for positive displacement fluid machinery as claimed in claim3, **characterized in that**: the followup partition board is restricted in a linear translation slot, a spring or a gas-spring is provided at the external end of the partition board, which applies a constant urging force or an urging force varying with the displacement on the partition board so as to press the partition board on the cylindrical surface of the roudong rotor to form sealing, static friction is formed by the larger one of the friction force between the roudong rotor and the roudong cavity and the friction force between the roudong rotor and the followup partition board, the algebraic sum of the moments applied to the rotation axis of the roudong rotor by the two frictions is zero or an alternating function, and the roudong rotor makes rolling roudong motion or swing roudong motion.

8. A roudong volume variation mechanism used in a roudong volume variation method for positive displacement fluid machinery as claimed in claim3, **characterized in that**: the followup partition board is restricted in a linear translation slot, a spring or a gas-spring is provided at the external end of the partition board, which applies a constant urging force or an urging force varying with the displacement on the partition board so as to press the partition board on the cylindrical surface of the roudong rotor to form sealing, the roudong rotor is pressed elastically on a flexible film of the cavity wall, in a steady state, the friction force moment acting on the rotation axis of the roudong rotor is equal to the dynamic friction moment of the roudong rotor and the followup partition board adaptively, therefore, the self-rotation of the roudong rotor is stacked on a rotation with low velocity and positive direction, forming rolling roudong, and static seal of rolling type is provided between the roudong rotor and the cavity wall.

9. A roudong volume variation mechanism used in a roudong volume variation method for positive displacement fluid machinery as claimed in claim3, **characterized in that**: the followup partition board and the roudong rotor are connected rigidly and hermetically in an integral way, the intersection of the cylindrical surface of the roudong rotor and the followup partition board is chamfered into a smooth curved transition surface with a small local resistance coefficient, the partition board is restricted in a cock provided with a slot outside of the roudong rotor, and it can be withdrawn and inserted restrictedly in the cock, the cock can rotate in a limited range, and the roudong rotor makes swing roudong in operation.

10. A kind of applications of the roudong volume variation method for positive displacement fluid machinery as claimed in claim 1, 5 or 6, **characterized in that**: the roudong volume variation mechanism and roudong volume variation motion are employed to provide a roudong internal-combustion engine, said engine is a kind of roudong fluid machinery with a gas combustion part attached thereto, wherein the roudong volume variation mechanism acts as a main power generation part for gas expansion, the variable-pressure cavity and constant-pressure cavity of the roudong volume variation mechanism are respectively corresponding to the rear portion and front portion located respectively rearward of and in front of the seal line of the roudong cavity, an inlet of the variable-pressure cavity and an outlet of the constant-pressure cavity are connected to the constant volume heat absorbing pulse combustion room which acts as a gas pressure source and a vent-pipe communicated to the atmosphere, the gas combustion generating part includes a small cavity of the constant volume heat absorbing pulse combustion room and additional components used for such as air compressing, fuel pressurizing, air and fuel timing injecting, or further includes igniting means, and the air compressing component and fuel pressing component possibly use a roudong air-fuel ratio optimizing distribution booster pump set which is driven by the main shaft or use a split type driven separately, wherein the air pressure metering pump component may be a roudong spray cooling constant temperature compressor.

**11.** A kind of applications of the roudong volume variation method for positive displacement fluid machinery as claimed in claim 1, 5 or 6, **characterized in that**: a roudong water motor is formed by employing the roudong volume variation motion method and a structure in which two roudong mechanisms are connected coaxially in parallel with a 180 degrees phase offset, which is suitable to be driven by clean water or pressurized water with fine sands of controlled size, wherein the variable-pressure cavity and the constant-pressure cavity are respectively corresponding to the rear portion and front portion located respectively rearward of and in front of the seal line of the roudong cavity.

**12.** A kind of applications of the roudong volume variation method for positive displacement fluid machinery as claimed in claim 1, 5 or 6, **characterized in that**: the roudong volume variation mechanism is employed to form a roudong hydraulic motor which is used as rotation output means of high efficient hydraulic transmission systems, wherein the variable-pressure cavity and the constant-pressure cavity are respectively corresponding to the rear portion and front portion located respectively rearward of and in front of the seal line of the roudong cavity, alternatively, a structure in which two roudong mechanisms are connected coaxially in parallel with a 180 degrees phase offset is used.

**13.** A kind of applications of the roudong volume variation method for positive displacement fluid machinery as claimed in claim 1, 5 or 6, **characterized in that**: a roudong pneumatic motor or air expander is formed with the roudong volume variation mechanism directly or with additional timing pulse valve device and roudong thermal pump device for increasing efficiency, the roudong pneumatic motor or air expander serves as a rotation output part of pneumatic transmission system or is used in recovery of energy released in a expanding process of pressurized air to take the place of pneumatic resistance throttle expansion part for energy saving, the variable-pressure cavity and the constant-pressure cavity are respectively corresponding to the rear portion and front portion located respectively rearward of and in front of the seal line of the roudong cavity, alternatively, a structure in which two roudong mechanisms are connected coaxially in parallel with a 180 degrees phase offset is used.

**14.** A kind of applications of the roudong volume variation method for positive displacement fluid machinery as claimed in claim 1, 5 or 6, **characterized in that**: a roudong compressible fluid booster pump, including roudong blower fan, roudong compressor and roudong vacuum pump, is formed by using the roudong volume variation mechanism, wherein the variable-pressure cavity and the constant-pressure cavity are respectively corresponding to the front portion and rear portion located respectively in front of and rearward of the seal line of the roudong cavity, the booster pump can be classified by use into roudong fan, roudong blower, roudong air inducer, roudong air compressor, roudong spray-cooling isothermal compressor, roudong two-phase flow booster pump, roudong vacuum pump, roudong two-phase flow vacuum pump and so on, wherein the spray-cooling isothermal compressor is a kind of two-phase flow compressor in which cooling is effected by spray water during the compressing process and water and air are separated at the outlet, the roudong compressible fluid booster pump is used to deliver air or air-liquid two-phase fluid and vary the pressure thereof, including boosting and decompressing from the atmospheric pressure to a negative pressure, while designing the physical parameters of said two-phase flow booster pump, only three design variables, i.e. the volumetric flow, the maximum pressure and the maximum medium viscosity need to be considered, and the pressure self-adapting constant flow feature of the two-phase flow booster pump enhances its adaptability and simplifies the types of specifications.

**15.** A kind of applications of the roudong volume variation method for positive displacement fluid machinery as claimed in claim 1, 5 or 6, **characterized in that**: a roudong liquid booster pump is formed by using the roudong volume variation mechanism, said roudong liquid booster pump includes roudong pump, roudong oil pump and roudong positive displacement pump suitable for other fluid phase medium and is used for delivery and compression of liquid material, the variable-pressure cavity and the constant-pressure cavity are respectively corresponding to the front portion and rear portion located respectively in front of and rearward of the seal line of the roudong cavity, alternatively, a structure in which two roudong mechanisms are connected coaxially in parallel with a 180 degrees phase offset is used, when designing the physical parameters of the machine, only three design variables, i.e. the volumetric flow, the maximum pressure and the maximum medium viscosity need to be considered, and the pressure self-adapting constant flow feature simplifies the planning of type spectra.

16. A kind of applications of the roudong volume variation method for positive displacement fluid machinery as claimed in claim 1, 5 or 6, **characterized in that**: a water motor is formed by at least one roudong volume variation mechanism, wherein the variable-pressure cavity and the constant-pressure cavity are respectively corresponding to the front portion and rear portion located respectively in front of and rearward of the seal line of the roudong cavity, alternatively, a structure in which two roudong mechanisms are connected coaxially in parallel with a 180 degrees phase offset is used to eliminate the dead point, a pump with one output or multiple outputs is formed by one or more roudong volume variation mechanisms, wherein the variable-pressure cavity and the constant-pressure cavity are respectively corresponding to the rear portion and front portion located respectively rearward of and in front of the seal line of the roudong cavity, all the roudong volume variation mechanisms are linked coaxially and all variable-pressure cavities act on the same roudong shaft to form a hydraulic pump with self-adapting input flow and output pressure, including roudong hydraulic variable flow pump and roudong hydraulic variable pressure pump, the former is a hydraulic water pump which drives low lift big flow stream by high fall small flow stream, the latter is a hydraulic water pump which drives high lift small flow stream by low fall big flow stream, so as to replace the low efficient centrifugal pump, in the multi-output machines, a stop valve is mounted in each input channel, the power of the input shaft equals to the weighed sum of the actual output power of each output weighed by the reciprocal efficiency, the self adaptabilities determine the actual parameters such as the rotating speed, the flow rate and the lift distribution, and closing off one output and decreasing the lift can cause increase of the rotating speed and increase of the flow rate of other outputs.

17. A kind of applications of the roudong volume variation method for positive displacement fluid machinery as claimed in claim 1, 5 or 6, **characterized in that**: a hydraulic pump is formed by two roudong volume variation mechanisms connected in parallel with a 180 degrees phase offset, wherein the variable-pressure cavity and the constant-pressure cavity are respectively corresponding to the front portion and rear portion located respectively in front of and rearward of the seal line of the roudong cavity, a hydraulic motor is formed by two roudong volume variation mechanisms connected in parallel with a 180 degrees phase offset, wherein the variable-pressure cavity and the constant-pressure cavity are respectively corresponding to the rear portion and front portion located respectively rearward of and in front of the seal line of the roudong cavity, all roudong volume variation mechanisms are linked coaxially and all variable-pressure cavities act on the same roudong axis, so as to form transmission devices of the types of roudong hydraulic speed reducer or increaser, the desired speed reducing ratio or increasing ratio can be achieved at a time according to the relation that speed changing ratio is in inverse ratio to displacement, the stopping control device could be an input valve device of a fluid pump, alternatively, the valve might be provided with a buffer that attenuates upriver hammer effect, there might be a bypass throttle-stop valve between input and output pipelines, which is adjusted manually or automatically through a timing program, so as to form transmission devices of the types of roudong hydraulic reducer or increaser with a bypass throttling and clutching function.

18. A kind of applications of the roudong volume variation method for positive displacement fluid machinery as claimed in claim 1, 5 or 6, **characterized in that**: a hydraulic pump is formed by a plurality of roudong volume variation mechanisms, wherein the variable-pressure cavity and the constant-pressure cavity are respectively corresponding to the front portion and rear portion located respectively in front of and rearward of the seal line of the roudong cavity, and the inlets can be controlled to be opened or closed by manual or automatic cut-off valve, a hydraulic motor is formed by one or more roudong volume variation mechanisms, wherein the variable-pressure cavity and the constant-pressure cavity are respectively corresponding to the rear portion and front portion located respectively rearward of and in front of the seal line of the roudong cavity, and the inlets can be controlled to be opened or closed by manual or automatic cut-off valve, when the inlet is cut off, the constant-pressure cavity of the hydraulic pump and the variable-pressure cavity of the hydraulic motor stop are in an inactive vacuum state, the working displacement ratios of the hydraulic pump and the motor change as a function of the actual value of two two-element control vectors and the possible ratios may form a series, the planning of the series and the design of the combination of their displacements are based on the actually demanded shift, all the roudong volume variation mechanisms are linked and all variable-pressure cavities act on the same roudong shaft to form an integrated speed variator, alternatively, the hydraulic pump and the motor are separate and are mounted in coaxial with the prime mover and the driven machine respectively, so as to form a separate hydraulic speed variator in combination with a design which can eliminate pulsation and flexibly absorb flow pulsation, alternatively, between high pressure and low pressure pipes, there may be fixed a bypass throttle-cutoff valve with manual or automatic time programmed adjustment means so as to provide a roudong hydraulic speed variator with a bypass throttling clutch, which can be used as a multi-function speed variator with deceleration, speed variation and auto clutching functions.

19. A kind of applications of the roudong volume variation method for positive displacement fluid machinery as claimed in claim 1, 5 or 6, **characterized in that**: a roudong metering pump is formed with a roudong volume variation mechanism, the roudong metering pump includes boosting type and constant pressure type and is used for direct-read detection, sensing and integration of the volumetric flow of fluid or for direct-read detection, sensing and integration of the mass flow of fluid by function transformation from other stabilized and detected parameters, the boosting type roudong metering pump might be a hydraulic boosting pump which also has metering function and can endure large shaft power or might be a hydraulic boosting pump mainly used for metering and control, and its boosting range only relies on the pressure change at the self-adapting output end. The variable-pressure cavity and the constant-pressure cavity of the two types of boosting pump respectively corresponding to the rear portion and front portion located respectively rearward of and in front of the seal line of the roudong cavity, the constant pressure type of roudong metering pump is a pump or a motor, and the variable-pressure cavity and the constant-pressure cavity of the latter are respectively corresponding to the rear portion and front portion located respectively rearward of and in front of the seal line of the roudong cavity.

20. A kind of applications of the roudong volume variation method for positive displacement fluid machinery as claimed in claim 1, 5 or 6,
**characterized in that**: a roudong constant ratio distributing pump is formed, in which all roudong volume variation mechanisms are linked in coaxial and all variable-pressure cavity acts on the same roudong axis, with roudong metering assembly that comprises at least two roudong volume variation mechanisms and is provided with separate channel and the displacement ratio of which is determined by conversion of mass flow ratio, said roudong constant ratio distributing pump includes booster roudong constant ratio distributing pump and constant pressure roudong constant ratio distributor, in the booster roudong constant ratio distributing pump which could be internal combustion engine constant air-gas ratio distributing booster pump that are composed of a roudong compressor component and a roudong fuel booster pump component linked in coaxial, the variable-pressure cavity and the constant-pressure cavity of the roudong volume variation mechanism are respectively corresponding to the rear portion and front portion located respectively rearward of and in front of the seal line of the roudong cavity, the mechanics mechanism of the constant pressure roudong constant ratio distributor is the same as the booster roudong constant ratio distributing pump or contains a decompressing motor component without additional shaft power, those which include a constant pressure combustion pressing oil metering motor component and a pressurized gas metering motor component whose variable-pressure cavity and constant-pressure cavity are respectively corresponding to the front portion and rear portion located respectively in front of and rearward of the seal line of the roudong cavity can produce self-adapting transmission power to drive other components, these two kinds of roudong constant ratio distributing devices can be applied to thermal machines, thermal engineering and chemical procedure to obtain a high efficiency and advantageous environment protection, among roudong constant ratio distributing devices that contains a decompressing component, the gas stove constant ratio distributing device is a key component designed for efficient environment protecting stoves.

21. A kind of applications of the roudong volume variation method for positive displacement fluid machinery as claimed in claim 1, 5 or 6, **characterized in that**: a roudong stochastic energy flow utilization system is formed with roudong volume variation mechanisms, such as household drink water distillation clean system, roudong water power integrating energy storage electricity generation system, roudong high adaptive wind power electricity generation system and so on, this kind of system contains one or several components which can convert a stochastic energy flow into the power of a machine shaft in real-time, said component could be a wind power impeller including high adaptive wind power impeller or a roudong hydraulic motor driven by differential pressure, power generating components are distributed at places where they can get stochastic energy flow and each power generating component is integrated with a roudong air pump in coaxial, said air pump is a roudong vacuum pump or a roudong air compressor, the roudong vacuum pump is connected to a vacuum load by a pipeline, for example, a roudong vacuum pump of household drink water distillation clean system linked coaxially to a roudong motor mounted in tap water pipes is connected in situ to a distilling condenser to pump two-phase flow comprising clean water and noncondensing air, the roudong air compressor is connected to a pressurized air tanks by pipelines, the tank integrates, gathers and stores compression energy to be used to drive a machine or generate electricity, the energy is employed by a roudong pneumatic motor whose input pipe might contain a heat pump heat-exchanger to utilize stochastic low temperature heat energy, the electricity generator in a roudong water power integrating energy storage electricity generation system and that in a roudong high adaptive wind power electricity generation system are numeral control exciting electricity generators whose startup, rest and running excitation are controlled by a computer, the control of startup, rest and excitation in interconnected electricity generation is optimally scheduled according to the principle that the air compressor output is the maximum, the controlling program is written in a PLC, an associated external combustion temperature increase procedure is embedded in the roudong wind power electricity generation system to form a wind power-external combustion thermal non-water electricity generation system, this system comprises a wind power impeller-roudong air compressor, a conflux pipe, a gas storage tank, a controllable countercurrent heat exchange external combustion temperature increase room, a roudong pneumatic motor or turbine and a electricity generator which are arranged separately and is controlled by a computer so that it has a very high united efficiency and a low cost for electricity generation.

**22.** A kind of applications of the roudong mechanism used in a roudong volume variation method for positive displacement fluid machinery as claimed in claim 4, **characterized in that**: positive displacement fluid machinery provided with a rotating shell is formed by means of rotation roudong volume variation mechanisms, including rotation roudong volume variation power generation machine or part with a rotating shell and rotation roudong volume variation power-generation machine or part with a rotating shell, the former can be a rotary cavity rotation roudong volume variation internal combustion engine and a rotary cavity rotation roudong volume variation pneumatic motor, in which the rotary cavity may be the outer rotors of the loading machine, such as a circle saw for cutting rocket or woods, the latter includes rotary cavity rotation roudong volume variation compressor, rotary cavity rotation roudong vacuum pump, rotary cavity rotation roudong volume variation two-phase pump, rotary cavity rotation roudong volume variation two-phase vacuum pump, and so on, hydraulic rotation roudong rotors can be used as efficient and structure-simple wheels of automobiles, trains, tractors, and engineering machines, specifically, the variable-pressure cavity and constant-pressure cavity of the rotation roudong volume variation pneumatic machine with rotating shells are respectively located respectively in front of and rearward of the seal line of the roudong cavity, the rotary cavity type rotation roudong volume variation internal combustion engine has a rotation roudong volume variation mechanism as the main part and is equipped with a constant volume heat absorbing pulse combustion chamber and components of air compression, fuel compression, air and fuel time ejection, the combustion chamber is arranged internally in the roudong rotor, with an inlet located at a end face of the roudong rotor and connected instantaneously with the air and the fuel ejection nozzle upon ejecting, and an outlet connected with the inlet of the volume variation cavity at a side of the partition board, the outlet of the constant-pressure cavity is connected with the inlet arranged at the other side of the partition board and is further connected to a vent-pipe via an internal channel through the shaft pipe at the crank shaft end of the roudong rotor, the inlet of the variable-pressure cavity and the outlet of the constant-pressure cavity of rotary cavity type rotation roudong volume variation pneumatic motor are arranged on the cylinder surface of the roudong rotor at two sides of the partition board, the former connected in a period of time with an inlet pipe via the internal channels and an opening in the end surface of the roudong rotor, the latter connected with an outlet pipe via the internal channels and the shaft pipe at the crank shaft end of the roudong rotor, the variable-pressure cavity and constant-pressure of rotation roudong volume variation power generation machines with rotating shells are located in front of and rearward of the sealing line of the roudong cavity respectively, wherein the outlet of the former and the inlet of the latter are respectively arranged at two sides of the partition board and are connected respectively with the outlet pipe and the inlet pipe via the internal channels of the roudong rotor and the shaft pipe of the crank shaft, pneumatic motors and hydraulic rotation roudong rotors also include the structure of double cavities connected in parallel with a 180 degree offset to eliminate start dead point and pulsation.

**23.** A kind of applications of the roudong volume variation method for positive displacement fluid machinery as claimed in claim 14, **characterized in that**: a roudong two-phase flow heat pump compressor and a heat pump system are formed by means of roudong volume variation mechanisms, such as roudong two-phase flow refrigerator compressor, roudong two-phase flow air-conditioner compressor, roudong two-phase flow refrigerating warehouses compressor and roudong two-phase flow heat pump water-heater compressor used respectively for refrigeration of refrigerator and refrigerating warehouses, refrigeration or heating of air-conditioner, heat pumping of water-heater by integrating and storing heat from solar plant or environment heat exchanger and composing complete machines, this kind of heat pump compressor is mainly composed of roudong two-phase flow compressor and is linked with a roudong feedback motor in coaxial used for decompression instead of a throttle pipe, so as to recycle pressure energy, reduce main shaft power and avoid throttling friction heat, in the system or complete machines, refrigerant and heating material are in a two-phase state mixed of air and liquid all the time, it will go through 4 processes to finish the closed cycle: an adiabatic compression process in which the temperature and pressure of low temperature low pressure high air-liquid ratio two-phase flow are increased in a compressor, a condensation process in which high pressure high temperature high air-liquid ratio two-phase flow releases heat substantially isothermally and isotonically in a high temperature condensing device, a adiabatic energy releasing process in which the temperature and pressure of high temperature high pressure low air-liquid ratio two-phase flow are reduced in a feedback motor, and an evaporation process in which low temperature low pressure low air-liquid ratio two-phase flow absorbs heat substantially isothermally and isotonically, the evaporator uses the disposition of gravity flow of vertical drop or is provided with several additional stepped tiny liquid seals which are used for blowing bubble, the fall of liquid and bubble blowing can increase internal disturbance and convention, and they also increase the occurring probability of small curvature radius protruding evaporation surface, so as to form supercooled steam temperature-reducing evaporation mechanism, the condenser uses the disposition of contrary gravity flow of vertical raise to form a bubble floating mechanism which can increase internal liquid-air disturbance and convention and the occurring probability of small curvature radius concave evaporation surface, so as to form a superheated steam temperature-increasing condensation, the falling of liquid during a flexuous drop process and the floating of air during a flexuous raise process mechanically agitate working media in a different phase respectively so as to enhance the heat exchange in the transverse direction, in the longitudinal direction, both the falling of liquid during a flexuous drop process and the floating of air during a flexuous raise process produce gravity heat pipe effect to eliminate the temperature difference during flowing process, as a high thermal conductivity medium, liquid plays a role of strong carrier of transverse heat exchanging inside the two-phase flow and between the two-phase flow and the pipe wall during churning, the churning and heat pipe effect reduce heat exchanging temperature difference obviously, besides, liquid plays a role of sealing and lubricating in the compressor and the motor, its leaking loss is nearly reduced to 0, the compressor could also rotate in a manner of roudong and be enclosed along with a electrical motor, wherein the rotor of the electrical motor acts as a roudong cavity, thus, transmission parts are not required so that the structure is simplified, and a solar water cleaner or a cleaning-heating device may be formed with roudong two-phase flow heat pump compressors to effect considerable energy saving.

24. A kind of applications of the roudong volume variation method for positive displacement fluid machinery as claimed in claim 20, **characterized in that**: a roudong optimizing air-gas ratio internal combustion distributing booster pump is formed by means of a roudong volume variation mechanism, the booster pump includes roudong optimizing air-gas ratio distributing booster pump used for the roudong internal combustion engine of the present invention, reciprocating internal combustion engine roudong optimizing air-gas ratio distributing booster pump for improving the prior art and roudong optimizing air-gas ratio distributing compressor for gas turbine, wherein the last two require the main machines to be refitted to an outer compressing two-stroke type gas compressor and a gas compressor without worm wheels, distributing booster pump or distributing compressor are both assembled by air metering booster pump and fuel (including gas and oil) metering booster pump in coaxial and are connected to the main shaft of the engine, alternatively, they can be of a separate type so as to have better dynamical adjustment characteristic, driven by an additional speed-variable roudong hydraulic motor or electromotor, the mass flow of air metering booster pump and fuel metering booster pump is distributed according to an optimized air-gas ratio and is realized by converting it to a ratio of inlet volumetric flow at a certain pressure, for example, the air pressure at the inlet could be the atmosphere pressure or a certain constant pressure obtained through pressure stabilization measures depending on its altitude, so does the combustion gas, when considering the atmospheric humidity, an additional automatic control device can be provided to adjust the air redundancy coefficient so as to stabilize the oxygen mass flow, the air compressor operates in a two-phase state, it sprays enough cold water into its air-inlet channel and roudong cavity to form fogdrop distributing in diffusion and output a water-air two-phase flow, in the compression process, water is used for space cooling, wall cooling, heat flow loading, dynamical sealing and lubricating and is the key element to realize an efficient isothermal compression, in the roudong compressing process, air achieves a target pressure at one time, the target pressure is a binary function of rotation speed and volumetric flow and is determined as required, the output two-phase flow enters a separating, buffering and adjusting device which can increase the dryness of the separated air, being used as a high quality high-pressure air source, the separated cooling water enters a coaxial roudong feedback motor to recycle pressure energy, the flow rate of cooling water is adaptively adjusted by a constant liquid level floating valve of the separating, buffering and adjusting device.

25. A kind of applications of the roudong volume variation method for positive displacement fluid machinery as claimed in claim 20, **characterized in that**: a roudong gas stove proportional distributor is formed by means of a roudong volume variation mechanism, said distributor distributes air and gas proportionally according to optimized air-gas ratio and makes gas and air enter the stove proportionally to implement a closed combustion and heat exchange, so that the gas can combust without producing pollution, meanwhile the smoke flow and smoke heat loss which is in direct ratio with smoke flow can be reduced to minimum, the distributor is composed of a gas metering pump and an air metering pump connected in coaxial, both the components adopt the mechanism of double cavities linked in coaxial with a phase offset to eliminate dead point and pulsation, the distributor is mounted downstream of a regulating valve and is driven by decompressed gas, thus, the gas component runs as a pneumatic motor, its rotation speed

53

is very low, so the loss is very small, the pressure of two kinds of gas at four inlets and outlets altogether are nearly the same which all equals the atmospheric pressure, the displacement of gas roudong cavity and air roudong cavity of the distributor equals the volumetric flow ratio which is the product of mass flow ratio and specific volume ratio, the air mass flow proportion ratio is calculated from the oxygen proportion required in the combustion reaction of gas compositions, the distributor might contain a low resistant throttle valve which is used to somewhat lower the pressure at the air inlet so as to change the air redundant coefficient, the air redundant coefficient is calculated from the gas compositions and the undulating ranges of pressure and humidity, and is designed in displacement according to its upper limit, the factor of pressure increase or decrease might be included by the torque balance equation, Boyle-Mariotte law or state equation.

26. A kind of applications of the roudong volume variation method for positive displacement fluid machinery as claimed in claim 1, 5 or 6, **characterized in that**: roudong versatile fluid machinery is formed by using roudong volume variation mechanism according to roudong volume variation method and the definition and design of versatile fluid machinery, it is a versatile fluid machinery designed with versatility and contains the characteristics of multi-function, medium phase versatility, continuous adaptability of pressure and power without a lower limit, versatility parameters are marked on it, the versatility parameters comprise at least 4 basic parameters, i.e. pressure resistance, shaft strength, speed limit and displacement, and other parameters like optional function and non-basic parameters, this kind of machine runs within the limit of versatility parameters and has a efficiency substantially independent of application, when and only when adopting versatility parameters, roudong fluid machinery becomes versatile fluid machinery, this can be achieved in threes steps, the first step is versatility planning, in which the basic versatility parameter space are divided scientifically and economically and the versatility type and series criterion are determined according to the division, the versatility type and series criterion is the spectrum of versatility type and specification and the corresponding versatility parameters, including necessary standards, the second step is versatility design, in which the versatility type specification and basic parameters are selected from versatility type and series criterion, and, accordingly, product is designed and the versatility nameplate is assigned, the third step is versatility applying, in which the versatility product are configured and used to meet the sum of need, the safety condition and actual operation parameters should be determined according to basic parameters of versatility, or actual working point should be selected directly from versatility parameters according to time, economical efficiency should be considered all through.

Figure 1

Figure 2

Figure 3

Figure 4

Figure 5

# INTERNATIONAL SEARCH REPORT

| | International application No. |
|---|---|
| | PCT/CN2005/002225 |

| A. CLASSIFICATION OF SUBJECT MATTER |
|---|
| F04C2/30(2006.01)i |
| According to International Patent Classification (IPC) or to both national classification and IPC |

| B. FIELDS SEARCHED |
|---|
| Minimum documentation searched (classification system followed by classification symbols) |
| IPC⁸ F04C2/36, 2/356, 2/34, 2/32, 2/30, 2/00, 18/30, 18/32, 18/34, 18/356, F01C1/00, 1/30, 1/356, 1/34, F02B53/00 |
| Documentation searched other than minimum documentation to the extent that such documents are included in the fields searched |
| Chinese Inventions 1985-2005;   Chinese Utility Modles 1985-2005 |
| Electronic data base consulted during the international search (name of data base and, where practicable, search terms used) |
| WPI   EPODOC   PAJ   CNPAT |
| fluid, displacement, variable,  revolve, rotate, knead+ |

| C. DOCUMENTS CONSIDERED TO BE RELEVANT | | |
|---|---|---|
| Category* | Citation of document, with indication, where appropriate, of the relevant passages | Relevant to claim No. |
| A | US,A,4929159(HITACHI,LTD.)29.May1990(29.05.1990)see the whole document | 1-26 |
| A | CN,Y,2329793(YE, Jixing)21.July1999(21.07.1999) see the whole document | 1-26 |
| A | CN,Y,2305505(ZHANG, Benyuan)27.Jan.1999(27.01.1999) see the whole document | 1-26 |

| ☐ Further documents are listed in the continuation of Box C. | ☒ See patent family annex. |
|---|---|

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim (S) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&"document member of the same patent family |

| Date of the actual completion of the international search | Date of mailing of the international search report |
|---|---|
| 01.Mar.2006(01.03.2006) | 3 0 · MAR 2006 (3 0 · 0 3 - 2 0 0 6) |
| Name and mailing address of the ISA/CN<br>The State Intellectual Property Office, the P.R.China<br>6 Xitucheng Rd., Jimen Bridge, Haidian District, Beijing, China<br>100088<br>Facsimile No. 86-10-62019451 | Authorized officer<br><br>SUN, Hongxia<br><br>Telephone No. (86-10)62085459 |

Form PCT/ISA /210 (second sheet) (April 2005)

## INTERNATIONAL SEARCH REPORT
Information on patent family members

International application No.

PCT/CN2005/002225

| Patent Documents referred in the Report | Publication Date | Patent Family | Publication Date |
|---|---|---|---|
| US,A,4929159 | 29.05.1990 | KR, B1 ,9309734 | 09.10.1993 |
| CN,Y,2329793 | 21.07.1999 | none | |
| CN,Y,2305505 | 27.01.1999 | none | |

Form PCT/ISA /210 (patent family annex) (April 2005)